# EUROPEAN PATENT SPECIFICATION

(11) **EP 3 262 815 B1**
(45) Date of publication and mention of the grant of the patent: **14.10.2020**
(21) Application number: 16756234.7
(22) Date of filing: 24.02.2016
(51) Int. Cl.: H04L 29/06

(54) **SYSTEM AND METHOD FOR SECURING AN ENTERPRISE COMPUTING ENVIRONMENT**
SYSTEM UND VERFAHREN ZUR SICHERUNG EINER DATENVERARBEITUNGSUMGEBUNG EINES UNTERNEHMEN
SYSTÈME ET PROCÉDÉ DE SÉCURISATION D'UN ENVIRONNEMENT INFORMATIQUE D'ENTREPRISE

(30) Priority: 24.02.2015 US 201562119872 P
(43) Date of publication of application: 03.01.2018
(73) Proprietor: Cisco Technology, Inc., San Jose, CA 95134 (US)
(72) Inventor: ZIMMERMAN, Gil, Newton, MA 02459 (US); ZALKIND, Ron, Newton, MA 02461 (US); SHAPSA, Tshay, Needham, MA 02492 (US); WALL, Tim, Cambridge, MA 02140 (US); DELUCA, Sam, Arlington, VA 22201 (US); KEREN, Ori, 55402 Kiryat, Ono (IL); SPELLWARD, Peter, Southville Bristol BS3 1DP (GB); SAND, Jennifer, Watertown, MA 02472 (US); BEERI, Yishai, 90912 Kfar Etzion (IL); SNART, Howard, Chewton Keynsham Bristol BS3 2SU (GB); LINES, Dan, Charlestown MA 02129 (US)
(74) Representative: Kazi, Ilya
(86) International application number: PCT/US2016/019235
(87) International publication number: WO 2016/138067

(56) References cited:
- WO-A1-2013/185612
- US-A1- 2013 167 193
- US-A1- 2013 185 797
- US-A1- 2014 026 179
- US-A1- 2014 250 491
- US-B1- 8 505 097

## Description

### Field of the Invention

The present application generally relates to a system and method for improved enterprise data security. In particular, the present application relates to systems and methods for data security relating to use of various computing platforms and applications and services deployed on or in connection with such platforms.

### Related Applications

The application is based upon and claims priority from U.S. Provisional Patent Application No. 62/119,872, filed on February 24, 2015, titled "System and Method for a Cloud Security Fabric with Service Modules"

### Background of the Invention

There are significant challenges for enterprises of various types associated with rapid expansion of business applications that are enabled primarily by resources in the cloud, that is, resources that are outside the firewall of a conventional enterprise, such as in various public clouds and in private clouds. Cloud computing is becoming a leading element of the information technology (IT) backbone for a typical enterprise. Various core business systems are moving from "on premise" deployments into the cloud. These include customer relationship management (CRM) systems, financial systems, human resources (HR) systems, research and development systems, engineering systems, document repositories and file systems, and many other systems. Also, a shift is occurring toward increased usage of mobile devices in enterprises, such as smart phones and tablets. These devices operate in many cases outside the corporate network, often connected to one or more cloud computing resources. In addition, individuals within enterprises now frequently self-select business applications and consumer applications from app stores, from social media environments, or the like, operating their business activities with many of the same tools and applications that they use for the rest of their life. As the same sets of systems, services and applications, many of them outside the enterprise firewall, are used for both the private activities and the work activities of individuals, it is becoming very challenging for enterprises to safe guard private or sensitive data of the enterprise.

A trend also exists toward development of enterprise applications specifically for cloud deployments, such that more and more of the IT backbone of a typical enterprise may be expected to reside in one or more cloud resources, often employing a Software as a Service (SaaS) model, rather than on a conventional enterprise network. Typical legacy security solutions, which often block or limit access to resources or data outside the firewall of the enterprise, don't support such SaaS applications effectively. Enterprises increasingly need to place sensitive information in the cloud, and in turn they need to ensure that only the right people will have access to such information. Enterprises want to prevent leaking or theft, whether inadvertent and malicious, and prevention of leaks can have very high stakes, including relating to data exposure, financial loss, and legal liability. However, an enterprise firewall, which may protect data on its way to an external resource, such as a cloud, does not readily interact well with a typical resource that is deployed on a network outside the enterprise, such as a cloud resource or platform (and may have particular difficulty dealing with resources like SaaS application). For example, a firewall may not be well adapted to understand application transactions. Firewall solutions, and other network solutions like forward and reverse proxies focus on data in transit and do not work well on data at rest, or on the data that was in the cloud solution before the firewall was deployed in the first place, which may never be visible to the firewall. A firewall solution typically assumes that the user's traffic is routed through it, which isn't the case in many cloud-based solutions. Also, significant access is done in most cloud environments by applications and machines, referred to herein in some cases as cloud-to-cloud access, which does not need to traverse over the enterprise's network. Thus, a blocking or filtering mechanism like the firewall is often ineffective or inapplicable as a mechanism for protecting data in a cloud or between clouds, leaving it only the option blocking data from going to the cloud in the first place, which negates at least some of the benefits that would otherwise accrue to the user from adopting a cloud solution.

Today, the software security industry is trying to use the same tools that were used to secure data on premises to solve the problem of data security in the new domain of the cloud. For example, typical approaches identify a cloud as a target place on a network, then create and control various connections that seek to pass everything to and from a cloud through, for example, a secure a tunnel; for example, "reverse proxy" systems provide such tunnels for many enterprises connecting to applications outside the enterprise. However, in most real situations, one finds dynamic, rapidly changing arrangements among users, their devices, and various clouds. There may be a nearly infinite number of potential connections to a given cloud or application, and a given user may have a multiplicity of connections to a given cloud and may connect to many clouds. Securing all of those connections using conventional technologies is extremely difficult. The existing set of network-based technologies do not readily move at a pace sufficient to allow frequent changes in the nature of the connections among users and applications on various clouds and cloud-to-cloud connections among different types of clouds (e.g., between a SalesForce™ cloud and a Google™ cloud); that is, there is a fundamental disconnect with trying to solve the cloud security problem with a conventional enterprise networking technology set that is focused on controlling the nature of connections and the traffic over them. Among other things, the existing technologies add a large amount of slowdown and complexity and risk for something that is supposed to move fast, change rapidly, and produce high value to users. Network-based solutions today don't answer what is happening based on APIs between applications and based on rapidly changing data flows among users, their devices and clouds. A new approach is needed that allows business users to move and change at the right speed and that makes security an enabler, rather than a hindrance, so that an organization can adopt cloud solutions rapidly, but with better security than is currently provided in a typical cloud deployment.

Also relevant to the present disclosure is that as organizations embrace more and more sanctioned SaaS or cloud-deployed applications of heterogeneous types and functions (e.g., SalesForce®, Google™ Drive, NetSuite®, Office 365®, Box®, Dropbox®, etc.), they potentially face situations where a given type of data is subject to widely varying degrees of protection, depending on the capabilities and characteristics of the particular application being used and of the cloud environment on which it is accessed. This may result in conflict with enterprise policies and legal requirements that specify particular treatment for particular types of data (e.g., patient data, personally identifiable information (PII) collected by companies, or the like). A need exists to establish a more unified security architecture, technology and set of processes for an enterprise across heterogeneous SaaS applications in heterogeneous clouds.

In addition, enterprises increasingly face a number of factors that provide an increased demand for improved security solutions, including ones that address and analyze user behavior. These include insider threats of all kinds, the increasing prevalence of hackers or cyber spies infiltrating organizations for malicious purposes, such as stealing intellectual property (IP), and increases in financial fraud committed by external criminals seeking to steal financial assets. Current user behavior analysis (UBA) and SaaS data security solutions have a number of weaknesses, including heavy reliance on external data sources, a high demand for professional services support, and limits on the types of information that they can analyze. A need exists for improved cyber security solutions, including ones that provide increased and improved UBA.

Two major problems that require user behavior analysis are account compromise (such as through deployment of malware) and data exfiltration (data being sent out of the enterprise improperly, such as inside the enterprise (either malicious or negligent) or by someone outside the enterprise. A need exists for improved UBA solutions that relate to behavior of users in connection with usage of SaaS applications.
WO-A1-2013/185612 describes a method and device for determining security information of an unknown file in a cloud security system.
US-A1-2013/0185797 describes a whitelist-based inspection method for a malicious process.

### Summary of the Invention

Provided herein are methods and systems for a cloud security fabric for providing enhanced security to an one or more enterprise computing environments. The cloud security fabric has a plurality of enterprise APIs for connecting to the information technology infrastructure of at least one enterprise, a plurality of developer APIs for enabling developers to use capabilities of the fabric to develop applications, and a plurality of connector APIs by which the fabric may discover information about entities relating to the information security of the enterprise computing environment by obtaining information from the interfaces of a plurality of cloud platforms, wherein the cloud security fabric includes a plurality of modules that comprise services deployed in the cloud security fabric. In embodiments, and for purposes herein, the term "entity" or "entities" includes at least one of the users of the enterprise computing platform, the applications used by the users of the enterprise, data objects of the enterprise and/or events occurring with respect to such users, applications and data objects.

Provided herein are methods and systems for providing improved security for enterprise computing environments and users that use applications in cloud deployments. Provided herein are methods and systems that provide enterprise class security to SaaS applications and other resources used in cloud solutions, wherein the same enterprise policies are automatically applied in the same way across heterogeneous applications and in heterogeneous cloud deployment environments.

Provided herein are methods and systems for enabling security as a cloud-based service. In embodiments, provided herein are methods and systems for a cloud security fabric (CSF 100) that allows an enterprise to discover sensitive data, to apply policies and automation actions to data, users, and/or configurations, and make sure that regulated data is under compliance and that sensitive information is protected, so that the enterprise can enforce use policies around the data.

Among other things, the methods and systems disclosed herein allow the enterprise to discover and manage third party applications that may have been delegated access to enterprise information and to understand how to deal with, among other things, compromised accounts and behavior-based attacks. The cloud security fabric may integrate a number of significant security components and other functional components that enable effective security of sensitive data in enterprises that have users who are using cloud resources. Components or modules of the architecture may include, without limitation, ones for information protection and ones for threat management, including, without limitation, ones for content inspection and analysis (including metadata); contextual analysis; user behavior analysis and modeling (e.g., for identifying suspicious logins from geographies, access patterns and other information obtained from behavioral modeling); global policy creation and policy automation (such as enabling management of work flows and implementing various rules, such as enabled by a rules engine, about taking action in the enterprise environment (including any cloud) with automated actions taking place in response to the policy engine); central configuration management (for security-related items); centralized auditing; incident management; federated searching; selective encryption (where a user (not just the enterprise as a whole) may self-select an additional measure of control over items of data); and security and user behavior analytics. The unification of multiple modules within the CSF 100 provides a number of benefits noted throughout this disclosure. For example, an organization may easily deploy multiple important security solutions across disparate platforms, applications and users without needing to learn, or interact separately with the complicated, often customized interfaces of disparate solutions, or the different security measures available in each platform. For example, unifying the classification of content used by an organization's users across disparate cloud platforms with the automated management of policy with respect to sensitive data, allows an organization to use a single, centralized process, via the CSF 100, to apply policies to its content for all of those platforms. Similarly, the unification of content classification services with a selective encryption capability allows an enterprise to discover and classify its content (as it is used in connection with disparate platforms) and then automatically prompt users to take measures to improve the security of that content (or automatically take such measures without user action), on a selective basis, without disabling the user or otherwise interfering with the beneficial use of the cloud platforms. By unifying these and other services, the CSF 100 provides significant benefits to organizations and users that are not present in separated solutions.

With respect to one of these items (selective encryption, or SE), one may allow a user to require a party to provide another factor to be able to access certain data. For example, an enterprise may employ policies and rules that cause the automatic encryption of certain classes of data based on a contextual policy, a content policy or a behavioral anomaly. In such systems and methods, being selective may provide significant benefits over conventional systems. Most encryption approaches are wholesale (they encrypt the entire drive; encrypt everything that is going out of the network or the like). As items of data are now frequently remote from the enterprise network, it is not feasible for the enterprise to be able to encrypt everything. Encryption by cloud vendors at rest or in motion (such as at the infrastructure level) is typically transparent only and does not require additional factors, thus only protecting from outsider threats, but not insider threats. Also, wholesale in-band encryption or tokenization gateways introduce risk (because the gateways themselves can be compromised to the extent that sensitive data is stored there), change the user experience (making it more difficult to the user) and may disrupt the native functionality of a cloud based (e.g., SaaS) solution. Thus, it is increasingly important to be able to help identify what is sensitive and to enable users to apply encryption selectively, such as only to sensitive information.

In embodiments, a cloud security fabric as described herein may be deployed such that it relates to interfaces (including APIs) among various resources that are used in the cloud, such as cloud-to-cloud interfaces, SaaS-to-SaaS interfaces, and interfaces of conventional networks to cloud resources, including SaaS applications. Such a cloud security fabric may be enabled to permit instant availability of desired applications and resources, without requiring any re-routing of traffic, without requiring network installation, without any loss of functionality, and with no impact on the performance of a cloud resource, such as a SaaS application.

### Brief Description of the Figures

Fig. 1 depicts a cloud security fabric disposed among a plurality of cloud resources from public cloud providers.
Fig. 2 depicts sets of capabilities that may be enabled in a cloud security fabric.
Fig. 3 depicts types of solutions that may be enhanced, extended or enabled by the cloud security fabric via sets of developer APIs.
Fig. 4 depicts a dashboard reflecting the unification of sets of different security solutions enabled by the cloud security fabric.
Fig. 5 depicts an embodiment of user behavior analysis, such as performed on or in connection with the platform.
Fig. 6 depicts a system architecture and data processing pipeline.
Fig. 7 depicts an embodiment of a UBA state system.
Fig. 8 depicts an embodiment of an infrastructure for certain capabilities of a cloud security fabric.
Fig. 9 depicts an architecture for content classification services that may comprise part of a cloud security fabric.
Fig. 10 depicts an infrastructure and related process flow for enabling the handling of content analysis requests.
Fig. 11 depicts an embodiment of an architecture for infrastructure and process flows for handling requests to extract and analyze content.
Fig. 12 depicts an embodiment of an architecture for infrastructure and process flows for handling requests to extract and analyze content.

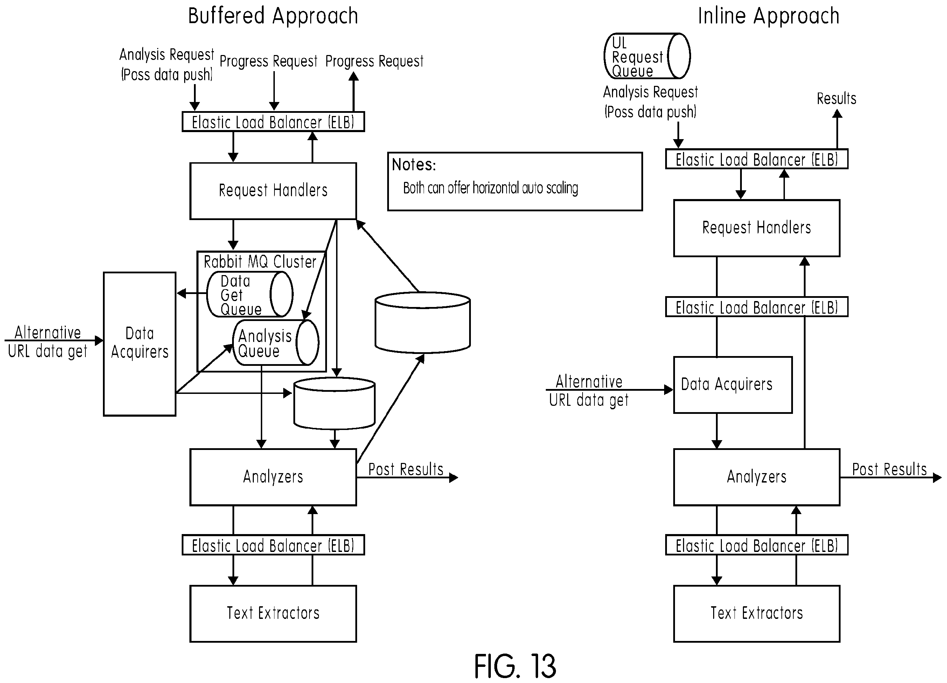

Fig. 13 depicts alternative architectures for buffering and inline approaches to content classification in connection with a cloud security fabric.
Fig. 14 depicts a tree structure used for indicating criteria for a policy in connection with a policy automation engine.
Fig. 15 depicts a tree structure for expressing a policy.
Fig. 16 depicts an example of a set of fingerprints for criteria for a policy.
Fig. 17 is a flow diagram for a solution involving a policy engine in connection with a cloud security fabric.
Fig. 18 shows a tree used in connection with operation of a policy engine on content.
Fig. 19 shows a user interface element for indicating what platforms are to be selected for application of a policy engine.
Fig. 20 shows a tree involved in applying policy that involves metadata.
Fig. 21 shows a user interface for selecting exposure criteria for a given platform in connection with automation of policy related to data usage.
Fig. 22 shows a complex tree of metadata, access, ACL and domain criteria used in connection with a policy engine.
Fig. 23 shows a portion of a user interface involving an element for specifying by users, with the ability to express exceptions, in connection with policies that apply to data usage.
Fig. 24 depicts a tree reflecting how user interface criteria may be implemented in a back end system.
Fig. 25 shows a user interface portion for setting parameters relating to the frequency, location, profiling and timing of the flagging of items for reporting.
Fig. 26 shows an example of a tree used to express a policy that involves user behavior.
Fig. 27 shows an application accessed by an enterprise user outside the firewall of the enterprise.
Fig. 28 shows a process that may include a series of steps that enable development of a unified view of the usage of each application of an enterprise.
Fig. 29 depicts functional components and capabilities for enabling a unified AFW platform.
Fig. 30 shows a report indicating usage of applications by the users of an enterprise in various categories.
Fig. 31 shows a cloud security fabric interacting with applications on cloud platforms and enterprise networks, as well as reporting on activities via APIs.
Fig. 32 shows approaches for modeling the installation of an application as an entity.
Fig. 33 depicts a number of types of objects, and related attributes, that may be used in an entity model.
Fig. 34 shows an example of a report that provides collected information in an application index.
Fig. 35 shows a user interface with a menu element for choosing to selectively encrypt a document.
Fig. 36 shows a set of APIs that may be used to enable selective encryption.
Fig. 37 shows a flow of activities among APIs that may be used to enable encryption.
Fig. 38 shows a flow of activities among APIs that may be used to enable decryption.
Fig. 39 shows an example of a report that provides a breakdown of the cloud applications used by an enterprise according to levels of risk.
Fig. 40 shows an example of a report that can be generated using the information collected in an application index.
Fig. 41 shows an example of a report about traffic throughput for applications that can be generated using the information collected in an application used by the users of an enterprise that were identified as having high or medium risk.
Fig. 42 shows an example of a portion of a shadow IT report.
Fig. 43 shows an embodiment in which information about an application may be reported in a third party environment or dashboard.
Fig. 44 illustrates cyber security use cases that can be addressed by the cloud security fabric and other solutions described herein, including with respect to accounts, data and applications of an enterprise.
Fig. 45 shows various categories of applications that are purchased by an enterprise or that are developed by developers for a typical enterprise, as well as coverage by the cloud security fabric of such applications to address the various cyber security use cases described throughout this disclosure.
Fig. 46 shows the sharing of responsibility for various layers of a technology stack that enables usage of cloud applications between a technology vendor and a typical enterprise.
Fig. 47 shows how various cyber security use cases relate to different elements of enterprise and cloud infrastructure that are used to enable applications and data for an enteprrise.
Fig. 48 shows how developer packages can be used to enable access to various services of the cloud security fabric for purpose of development on various development and runtime platforms.
Fig. 49 shows a user interface for displaying event incident details for a cyber security event.
Fig. 50 shows a user interface for displaying information about security events, including a geographic representation of the location of the events.
Fig. 51 shows a user interface reporting various information about a security event, including raw event data.
Fig. 52 shows a user interface indicating details with respect to various security events.
Fig. 53 shows a user interface providing statistics regarding a set of security events.
Fig. 54 shows a user interface reporting raw event data for security events, as well as a geographical representation of the location of the events.
Fig. 55 shows a stack of technology components that typically support applications and with respect to which there may be various security related events.
Fig. 56 shows an example of a HiPAA compliance report indicating security-related events.
Fig. 57 shows an architecture for collecting and processing event data from a developer platform.
Fig. 58 shows an architecture for collecting data and events from an AWS™ platform on which an application is operated.
Fig. 59 shows the ability to add a custom-developed application to a collection of applications that are to be tracked.
Fig. 60 shows a menu for configuring options that enable tracking application development and/or operation on a PaaS/IaaS environment.
Fig. 61 shows a menu for configuring options for tracking a custom-developed application on an PaaS/IaaS environment.
Fig. 62 shows a menu for additional configuration options for tracking an application on a PaaS/IaaS environment.
Fig. 63 shows a menu for displaying events tracked with respect to various applications operating on a PaaS/IaaS environment, including commercial applications and custom-developed applications.
Fig. 64 shows types of events that may be relevant for monitoring various cyber security use cases.
Fig. 65 shows architecture components for a cyber intelligence platform.
Fig. 66 shows an embodiment of a user interface for displaying user behavior analytics.
Fig. 67 shows an embodiment of a user interface for displaying user behavior analytics with geographic display of locations of user or application behavior.
Fig. 68 shows an embodiment of a user interface for displaying user behavior analytics including providing detail relating to account risk.
Fig. 69 shows an embodiment of a user interface for displaying user behavior analytics including providing histogram and graph views of various categories of incident.
Fig. 70 shows trend variance statistics used to identify anomalies in user or application behavior.
Fig. 71 shows a user interface reporting various analytics on data reported by the cyber intelligence platform.
Fig. 72 shows a user interface showing actions to be done in connection with events identified by the cyber intelligence platform.
Fig. 73 shows a data collection pipeline for a cyber intelligence platform.
Fig. 74 shows a data flow for a data collection pipeline for supporting a heat map use case.
Fig. 75 shows various forms of report that can be provided on shadow IT information.
Fig. 76 shows a user interface where incidents from a cyber intelligence platform are displayed in an external system.
Fig. 77 shows a user interface where a user of a cyber intelligence platform may navigate to obtain detailed statistics on incidents and events.
Fig. 78 shows an embodiment of a user interface with detailed information about a specific event in a cyber intelligence platform.
Fig. 79 shows a user interface with overview information about incidents in a cyber intelligence platform.
Fig. 80 shows an embodiment of a user interface with detailed information about a specific event in a cyber intelligence platform.
Fig. 81 shows an embodiment of a user interface displaying various risk-related events for a particular user and the progression of the trust score for the user over a period of time.
Fig. 82 shows architectural components for the integration of the cloud security fabric with a cyber intelligence system and other components and systems for addressing various cyber security use cases.

### Detailed Description of the Invention

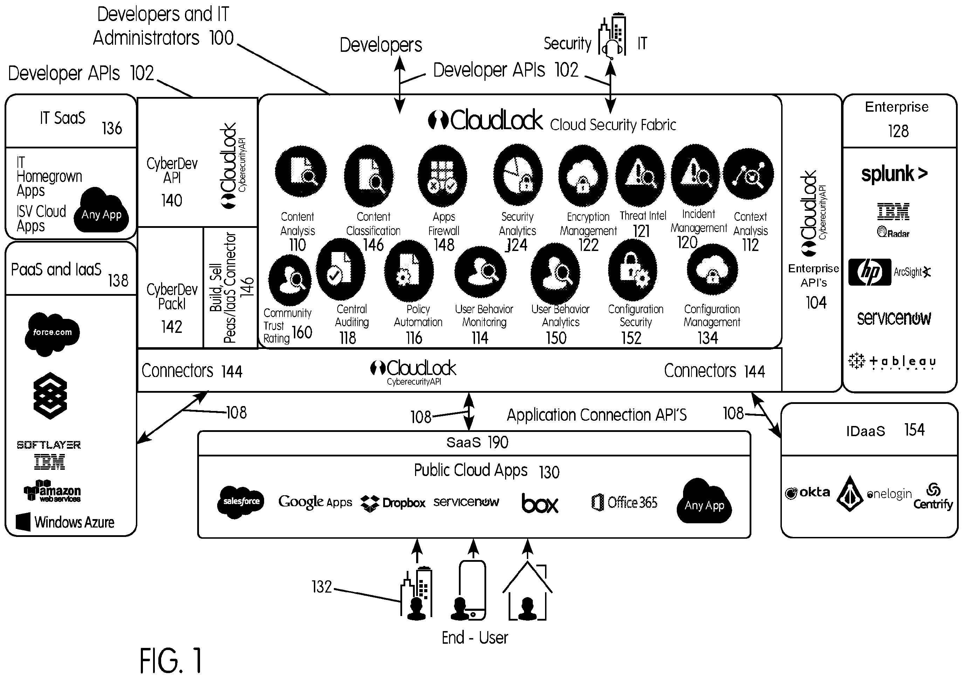

Fig. 1 illustrates a cloud security fabric (CSF 100) 100, which may be comprised of a collection of cloud-native security services that are accessible through a series of interfaces, such as application programming interfaces (APIs). The CSF 100 may be embodied as an application that includes various modules or components packaged therein. The CSF 100 may include a user interface (UI) that is built on top of, and that accesses, various developer APIs 102 by which a user or operator, such as a security application developer, a developer of another type of application, a security professional, or an information technology (IT) professional may access and use the CSF 100. In embodiments, another set of APIs, referred to as application connection APIs, or connector APIs 108, may connect with and collect information from various different sources, such as resources used by the users of an enterprise, including resources that involve data, applications, services and the like that are stored or hosted in distributing environments, such as the various SaaS environments 190 (including production environments where applications are used and IT SaaS environments 136 where applications are developed), cloud environments 130, PaaS and IaaS environments 138, and the like outside the premises and outside the firewall of a typical enterprise (e.g., various environments like Google® Apps, SalesForce®, Drop Box®, One Drive™, Evernote™, Amazon Web Services (AWS)™, Azure™, OpenStack and the like, collectively referred to in this disclosure, except where context indicates otherwise, as cloud platforms, cloud resources or cloud applications). The connector APIs 108 may also connect to other platforms and applications that help enable security, such as Identity as a Service (IDaaS) platforms 154, such as Okta™, Centrify™ and Onelogin™, among many others, enterprise mobility management (EMM) solutions and mobile device management (MDM) solutions, next-generation firewall (NGFW) and security web gateway (SWG) solutions, as well as other solutions like content delivery network (CDN) solutions and domain name system (DNS) solutions UBA-120.

In embodiments, one or more of the developer APIs 102 (including cyber dev APIs 140) can enable a user of the CSF 100, such as a security application developer or IT administrator, to scan and access information collected from the various cloud resources, including SaaS applications 190 and applications being used in PaaS and IaaS environments 138, and to access the various capabilities of the cloud-native security services enabled in the CSF 100.

As noted throughout this disclosure, the CSF 100 may include a plurality of distinct services, including, without limitation, various combinations of content inspection as a service 110 (referred to in various embodiments as CCS, CaaS, and the like), encryption as a service 122 (referred to in some cases as encryption management), behavioral analysis 114 (referred to in some cases as user behavior monitoring, but applicable to behavior of users, of applications, of services and of devices), behavior analytics 150 (referred to in some cases as user behavior analytics, also applicable to users, applications, services and devices), connectivity services, and policy management 116 (including policy creation and automated policy management, also referred to herein as context allows as a policy automation engine 116).

A third set of APIs, referred to in some cases in this disclosure as enterprise APIs 104, may extend the functionality of the CSF 100 and allow a host of the CSF 100, or a third party, to deploy and operate the CSF 100 in connection with another process, activity or system of an enterprise 104. For example, a developer, using an interface to the CSF 100, such as through a developer API 102, may arrange to have the CSF 100, or a module thereof, kick off a process on another system, such as an enterprise system behind a firewall. Similarly, through such enterprise APIs 104 a user, such as a user of an enterprise system or component, can extend and integrate one or more capabilities of the CSF 100 into other systems of an enterprise 128. For example, an administrator, service provider or vendor for an enterprise may use the enterprise APIs 104 to take various actions, such as to open a service ticket related to a security-related event, send a page to a security administrator, or undertake various activities that make security activities more operational (e.g., to enable taking actions based on insights gained within the use of the CSF 100). This may integrate various events, incidents, and the like that are handled by the various services of the CSF 100 into the enterprise workflow. Similarly, events and incidents may flow, using enterprise APIs 104, from the enterprise systems to the CSF 100, such as for use in its various services.

Referring still to Fig. 1, the CSF 100 may be deployed with the various APIs by which the CSF 100 may interact with various resources, such as public and private cloud computing platforms 130, infrastructure as a service (IaaS) platforms and platform as a service (PaaS) platforms 138, software as a service (SaaS) services and applications 190, other applications and platforms, identity as a service platforms (IDaaS) 154 and other resources that are used by enterprises and/or by which parties, such as application developers (including developers using the CSF 100 to interact with or help enable applications, such as mobile applications and custom enterprise applications), enterprises 128, service providers and the like may interact with the CSF 100. References to cloud platforms and cloud environments throughout this disclosure should be understood, except where context indicates otherwise, to comprise all such platforms, applications and resources, including IaaS and PaaS platforms, SaaS applications and services and IDaaS applications and services 154. These APIs may be grouped into three families: the enterprise APIs 104, developer APIs 102 (which for purposes of this disclosure are assumed to include APIs by which users, such as security professionals and IT administrators may use the CSF 100, which may in fact be a distinct set of APIs in some embodiments) and connector APIs 108 (which enable connection to the APIs, ports, interfaces, event logs, and the like of various cloud platforms, and which are referred to in this disclosure in some cases as application connection APIs 108, AppConnect APIs 108 and/or platform APIs 108).

The enterprise API 104 family may include a variety of APIs 104 by which an enterprise may benefit from connection or interaction with the CSF 100, including to receive outputs and results from each of the modules or components of the CSF 100, to deliver results and inputs to the CSF 100, and the like. These enterprise APIs 104 may include sets of APIS for managing and handling incidents, policies, configuration, reporting, provisioning of users and accounts and the like. Thus, this family of enterprise APIs allows partners to integrate the CSF 100 and each of its distinct capabilities into various enterprise systems and work flows. By way of example, the enterprise APIs may permit an enterprise to pull down incidents recognized in the CSF 100 into a security information and event management (SIEM) system of the enterprise, such that the incidents can be treated like incidents occurring on other enterprise resources, such as an on premises network or can be otherwise handled as desired in the specific security framework of a particular enterprise. Similarly, an enterprise may cause outputs, such as incident reports, to be delivered, as "tickets," to a job management or ticketing management system, such as ServiceNow™ or a log analysis or SIEM system, such as provided by Splunk™. Thus, the CSF 100, while providing a robust, independent framework for many areas of security, can also be integrated with existing security, work management and other systems by delivering reports and incidents to such systems via the family of enterprise APIs 104. With information from the CSF 100, enterprises can generate various reports, such showing trends of incidents as they relate to particular users (e.g., showing the top five most risky users for a time period). An enterprise can use the enterprise APIs 104 to pull incidents and create a chart (such as a trend chart) reporting on any of the outputs of the various modules of the CSF 100, and such information can be integrated into existing enterprise dashboards, such as used by security administrators. An enterprise can also take raw data from the CSF 100, such as pulling down records of all exposures detected in the environment of the enterprise (relating to the accounts, data and applications of the enterprise). That raw data can be delivered via the enterprise APIs to a database on which the enterprise can undertake queries, run analytics, and create reports.

By way of example, an enterprise may have sets of terms and conditions with which a legal department requires a third party to comply in order to be permitted to collaborate with the enterprise. Information from the CSF 100 may be used to indicate discovery of the parties with whom the users of the enterprise are sharing data, and through which applications and platforms they are doing so. Such information can be fed, via the enterprise APIs, to the enterprise legal department, such that the legal department can verify whether the third parties have agreed to the current set of terms and conditions for collaboration. This automatic synchronization increases the efficiency of the workflow involved in contracting with third party entities as well as decreasing the likelihood of unauthorized collaboration.

In embodiments, a policy API, associated with the policy automation engine 116, comprises one of the members of the family of enterprise APIs 104. This allows an enterprise to update policy criteria through APIs 104. As the enterprise continuously updates its policies, the APIs 104 can access the updates and implement a workflow to automatically update policies, including policies implemented by the policy automation engine 116 of the CSF 100. Also, the enterprise APIs 104 may be used to pull policy definitions from enterprise systems, such as data loss prevention (DLP) systems like those offered by Symantec™, so that the enterprise does not have to develop policies to be deployed and managed by the CSF 100 from scratch.

There is value for the host or operator of the CSF 100 in the enterprise APIs 104 as well. The host or operator can perform business automation functions, such as doing an automated security assessment report for an enterprise customer. Also, the enterprise APIs allow the host or operator to make community information more valuable, such as by exploring common policy criteria across a number of enterprises and doing automated, aggregated reporting across those, such as to indicate which policies lead to effective security and work flows or to identify common threats across the user base. The enterprise APIs 104 may be two-way. The host of the CSF 100 lets a customer pull incidents, such as into a SIEM, but the enterprise can also push information to the CSF 100 to update incident status. The enterprise APIs 104 may be pull-based, but can also have a push feature, so that enterprises can extend their workflow to be notified when incidents happen, for example.

In embodiments, information from the enterprise APIs 104 can be used for enrichment. Based on the enterprise APIs 104 the host of the CSF 100 can enrich information from external sources. For example, one can improve geo-location by augmenting geo-location information from an external source that you have with information obtained via enterprise APIs 104. Similarly, one can take information from an external reputation system and augment the data (such as adding policy criteria, reports on incidents, etc.).

In an embodiment, a service provider may have a content management system implemented on a cloud platform like Google Drive™. The provider may possess enriched data that could be used in connection with applying policies managed by the CSF 100. In such a case, the policy automation engine 116 of the CSF 100 can use the criteria defined in the CSF 100, but it can also be configured to use a third party source for additional policy criteria. Thus, a feed of additional sources of policy criteria can be defined and accessed by a policy API, and one can define that API to pull down those criteria. Then, the various modules of the CSF 100 can evaluate a given object or event and consider not only the metadata that is discovered by the CSF 100 but also data relevant to the other policies, such as, for example, information relating to the particular classification of information in a given enterprise, as it relates to the policies of that enterprise. For this example the enterprise policy API may be used to specify an additional external evaluator for the policy, which will then be used to enrich policy evaluators.

Another family of APIs provides connections between the CSF 100 and various cloud platforms (including cloud applications, infrastructure as a service platforms, IDaaS platforms, and others). These connector APIs 108 allow the CSF 100 to interact with and discover user accounts, data, event logs, applications and configuration in cloud platforms and in the applications that run on them or are developed on them. The connector APIs 108 include many disparate connectors 144 that work with the native APIs of heterogeneous cloud platforms. When the host of the CSF 100 adds a connector and connects to the API of a cloud platform, the CSF 100 may automatically extract data available via a given API of the cloud platform and be able to invoke and integrate that data into relevant work flows for the various modules of the CSF 100, including relating to policies, dashboards, charting, event processing, user behavior analysis, and the like. If host of the CSF 100 wants to add support for a platform, such as the OneDrive™ platform, the host can, for example, implement a mechanism for retrieving data (e.g. using a feed iterator and optionally a configuration file that maps source fields in that particular source system into target fields in the CSF 100). The CSF 100 thus enables collection of data from the disparate sources via the APIs that the sources use natively to enable various applications on behalf of users.

The extent and complexity of data collection for the CSF 100 varies. A comprehensive approach may involve scanning the entire file structure of an enterprise to obtain an extensive picture of the users, data, accounts, applications and the like. When one scans for all of that material, it is a very structured, highly intensive service. One enumerates the users, and for all the users, one scans and knows their files. One can also scan for file metadata, apply rules on the metadata, and pull down content for scanning. An alternative to full scanning of a file system is using a web hook for the domain to obtain selected information. While easier, that is still a structured process.

In embodiments, there other ways of getting, processing and providing value via the CSF 100 without fully scanning structured information from a file system. One such way is using service APIs (with some knowledge of structure behind them), and another way is scanning simpler things like event logs (which are semi-structured). There is a value one can obtain without understanding the structure. For example, one can give generic reporting and searching on activities occurring using APIs of various platforms by identified users, including trends, frequency analysis and the like to indicate anomalies. With a relatively simple layer of field mapping (e.g., mapping a particular user to a particular account and mapping a set of events to event types) one can provide considerable insight into security risks, threats and behavior. For example, one can provide basic frequency analysis, rules and anomaly detection around login events, which is an easier starting point than trying to understand an entire structure of a file system. Thus, processing events, such as user behavior modeling, allows one to obtain value from the CSF 100 without fully scanning a file structure.

The application connection APIs may also connect to valuable third party service providers that provide services to an enterprise. For example, a connector can be made to an API of a single sign-on (SSO)/Identity and Access Management (IAM) system like Okta™ that provides services to an enterprise. This helps the host of the CSF 100 identify the applications of an enterprise even absent a full scan of the customer's file system or collection of network logs. Once the applications (or many of them) are known, data from the service provider connector/API can indicate things like how frequently users are using particular applications, as indicated by sign-on or login events. This gives the host of the CSF 100 and the enterprise broader visibility for more applications by proxy, without requiring connections directly from the CSF 100 to all of the applications. Thus, the CSF 100 may connect into various proxy hubs to obtain data that is indicative of application usage. For example, a content delivery network (CDN) like Akamai™ or a DNS provider may have a significant amount of enterprise traffic in event logs from which application connection APIs can pull events, again providing value more readily than is possible with a full scan of a file structure.

In embodiments, the CSF 100 may include configuration management capabilities 134 and configuration security capabilities 152, whereby the CSF 100 APIs can pull down configuration structures, again simpler than doing wholesale scanning of a file structure. Thus, the CSF 100 may operate within a collector framework and a converter/mapper framework that lets the host of the CSF 100 generalize the usage on a spectrum from a full scan to a smaller scale collection, and the sources from which collection occurs via the application connection APIs 108 can vary from other security systems like SSO/IAM, to CDN, to APIs of infrastructure as a service (IaaS) solution providers and an enterprise customer's own private or proprietary cloud applications. In the case of a private cloud application, if an enterprise builds a connector, the CSF 100 can use application connection APIs to pull down information from the connector into the CSF 100. In the case of the private cloud, the CSF 100 may actually execute a proprietary script of an enterprise to collect the relevant data.

The CSF 100 may also provide a family of developer APIs 102 that allow users, such as security administrators and security application developers, to interact with the CSF 100, including to enable usage of particular modules or services of the CSF 100. A developer, for example, that needs enterprise class encryption for sensitive data that the enterprise is generating, can use an encryption and key management service using a key service API and an encryption API that comprise part of the services of the CSF 100 and for which APIs are provided within a family of developer APIs 102. In such a case, the developer APIs 102 enable development engineers, who may be focused on other aspects of application development or deployment, to use an appropriate type of encryption, with an appropriate configuration, in a certified environment, without having to custom develop particular capabilities. For example, a developer managing a mobile health care application may be dealing with related data that needs to be encrypted, in which case the developer can integrate with the CSF 100 and provide the key management and encryption for the application by accessing key management and encryption APIs from the CSF 100. If an application provider wants to sell into an organization that has regulatory and compliance needs, developer can integrate with individual services of the CSF 100, including ones that may access other APIs, such as the connector APIs 108 and enterprise APIs 104 described above. As another example, a developer may need to provide DLP services or make sure PHI information is not being stored, in which case the developer can stream its data through a service of the CSF 100 via an API, which will identify risks, the PHI data and will optionally allow the developer encrypt or 'scrub' that data. Thus, a developer can add value to other applications by accessing the capabilities of the CSF 100 through the developer APIs 102.

The CSF 100 and its modules allow a transition from siloed, tactical security to centralized, unified, strategic security across disparate platforms. Users are enabled to continue accessing the SaaS services directly. The connector 108 connect various security services in the CSF 100 to SaaS apps. These connector APIs 108 allow the host of CSF 100 to scale horizontally to support more SaaS applications and to provide uniformity of services (e.g., by a single policy automation engine 116) across all SaaS applications. The Enterprise APIs 104 allow for integrating the CSF into an existing security infrastructure, including sending incidents feeds into SIEM and ticketing systems and manipulating or customizing the CSF 100 in various ways. Connector APIs 108 may connect to CSF through connectors 144. The CSF 100 may host various security relevant services, including content analysis services 110 and content classification services 146 (which analyze documents, files, and objects to find specific information based on patterns, rules, frequency, proximity, weights, fingerprints, dictionaries, etc. (e.g. credit card information, social security numbers) in real time); context analysis services 112 (which analyze documents, files or objects for sensitive information based on metadata criteria such as file ownership, sharing and access patterns, etc.); user behavior monitoring services 114 (which monitor and analyze user activity to detect potential anomalies and significant changes that may suggest malicious behavior); policy automation services 116 (which include a rule engine that detects if sensitive data, such as intellectual property, PCI, PHI and/or PII, is being shared inappropriately within and outside of the organization and a workflow engine that can execute a sequence of tasks such as remediation tasks); central auditing services 118 (which track user access and records an audit trail of all actions performed in the CSF and optionally also in the target applications/platforms that are monitored by the CSF); threat intelligence 121 (including feeds of threat information that can be provided from the CSF 100 and accessed by APIs from various other systems, which include threat information identified within the CSF 100 and other capabilities described throughout this disclosure, as well as threat information obtained from external systems); community trust rating services 160 (including the ability for the community of users of the CSF 100 to tag, rate, and share information about risks, risk management, security configurations, and other topics); incident management services 120 (which centrally manage and investigate incidents across an organization's portfolio of platforms and applications); encryption and key management services 122 (which empower end users to selectively encrypt sensitive information based on individual files or fully automated policy escalations); security analytics services 124 (which deliver insight relating to key cloud security risks and performance indicators) and configuration management services 134 (which allow the CSF 100 to take configuration information from various sources and configure various security related modules and services in the CSF 100 or in various platforms). The CSF 100 may have other services such as an applications firewall service 148, which may enable or comprise part of a more general application firewall platform, or AFW 300. The CSF 100 may have various other services, such as modules and services for threat management, federated searching, an actions framework and the like, each of which may operate in combination with the other modules of the CSF 100 and may have the various characteristics (such as having dedicated APIs of the types described herein) as part of the CSF 100.

In embodiments, the CSF 100 may include, enable, or connect to (such as through developer APIs 102 (including CyberDev APIs 140)) various platforms and environments (such as IT SaaS environments) where developers develop applications that run on cloud platforms, such as SaaS applications and applications that run on PaaS and IaaS environments 138. Resources and capabilities of the CSF 100, such as the developer APIs 102 (including CyberDev APIs 140) and CyberDev Packs 142 help developers use the various capabilities of the various services of the CSF 100 in developing applications, such as to provide the applications they are developing with one or more capabilities of the CSF 100. These resources and capabilities may also include one or more preconfigured packages of services and applications, each referred to as a CyberDev Pack 142, which are helpful for enabling a developer, a security professional, a development operations professional, or other user to employ appropriate sets of services and other capabilities in connection with a particular type of application and platform. CyberDev APIs 140 and CyberDev Packs 142 may connect and operate between the CSF 100 and various IT SaaS environments 136 and a PaaS and IaaS environments 138. To facilitate exchange of data and enable actions among the CSF 100, CyberDev APIs 140, the CyberDev Packs 142, the IT SaaS environments 136 and the PaaS and IaaS environments 138, various connectors 144, 146 may be used, including ones that are configured for exchange according the protocols of a particular cloud platform.

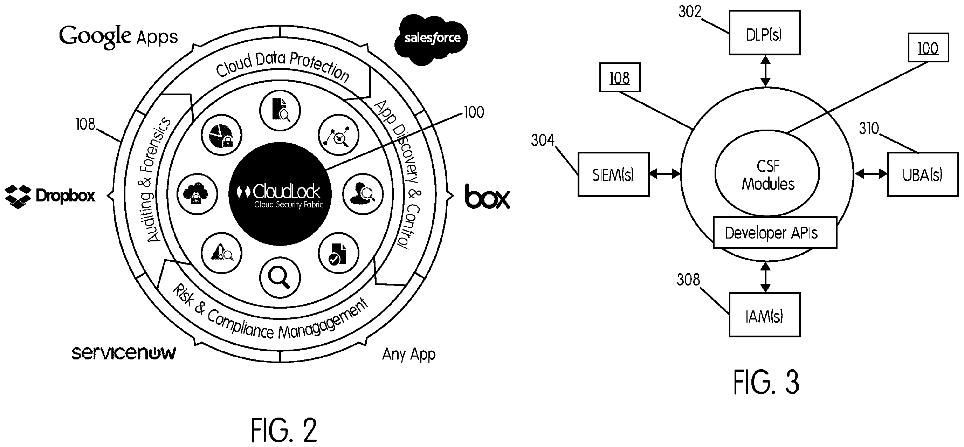

Referring to Fig. 2, the connector APIs 108 may enable various cyber security capabilities and support various cyber security use cases, each relating to how the CSF 100 may provide capabilities as a result of connecting to various platforms, such as application discovery and control, risk compliance and management, configuration management, auditing and forensics, threat management and cloud data protection. The CSF 100 can serve as the cloud security fabric for the enterprise. The CSF 100 may be cloud-native, deploy rapidly (such as in a few minutes or in less than a minute, as a result, among other things, of being embodied itself as a SaaS application) without impacting the end user experience or requiring gateways, agents, reverse proxies or any other invasive technologies. Based on an API-centric approach, The CSF 100 seamlessly connects and monitor a number of cloud apps in real time or near real time, including Google Apps, Salesforce, Dropbox, ServiceNow or other apps. In embodiments, the CSF 100 enables the ability to scan data at rest or at a base line point in time (before the data is moved), which is a differentiating capability versus "man in the middle" approaches, as it allows for addressing current conditions as well as conditions moving forward). The API-based approach also allows for richer and more complete information, as the host of the CSF 100 can get data on configuration and other types of data that is not generated by users directly. Also, the CSF 100 may make use of agents that run in a target platform to which the CSF 100 connects (such as SalesForce™ or Servicenow™) that allows even more capabilities and even faster near real time or real time detection. Agents may also allow in band controls (still without the need for change or any impact to core customer network or traffic going into the cloud).

The CSF 100 may comprise a collection of a number of core security services. The CSF 100 is adapted for solving a number of key use cases: Cloud Data Protection, App Discovery and Control, Risk & Compliance Management, Configuration Management, Threat Management, and Auditing and Forensics. Cloud data protection may include continuous monitoring of public cloud apps, visibility and control of sensitive data, and policy enforcement with automated response actions. App Discovery and Control may include discovery of third-party apps that directly connect into corporate environments and control over which apps are enabled and which ones are revoked. Risk & Compliance Management may include compliance with regulations such as PCI DSS, HIPAA, HITECH, SOX, CIPA, FISMA, and FERPA, as well as discovery and control of PII, PCI, PHI and intellectual property data. Auditing and Forensics may include documentation of an immutable audit trail of key actions, investigation of suspicious behavior, and evidence for compliance and forensics.

Referring to Fig. 3, the developer APIs 102 enable developers to access capabilities and services of the modules of the CSF 100 to enable various other solutions, such as SIEMs 304, DLPs 302, UBA solutions 310 and IAM solutions 308. The CSF 100 can provide a base level of functionality for each of these solutions, such that a developer may access benefits of all of them, while focusing on an enhanced or extended version of a particular solution.

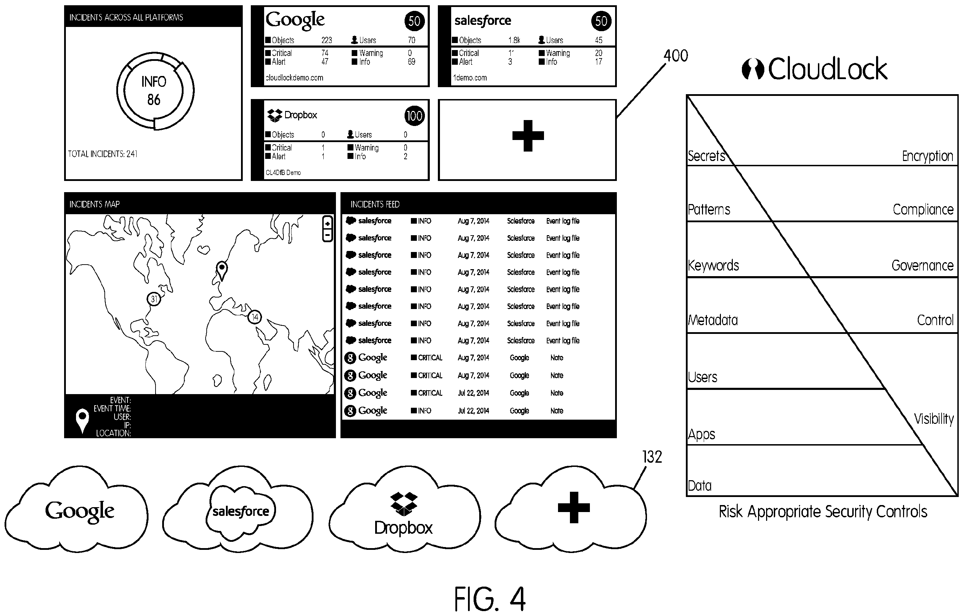

Referring to Fig. 4, a dashboard 400 may include reports, such as relating to incidents that arise from the various modules and services of the CSF 100, including as the CSF 100 interacts with various platforms 132 through the connector APIs 108. The CSF 100 may enable cloud adoption on multiple cloud offerings, including unified security and compliance policy enforcement that is risk appropriate. The CSF 100 may be cloud-to-cloud, instantly available, and highly scaleable and may provide multi-cloud visibility and control. The CSF 100 may require no installation, traffic routing, loss of functionality of applications or platforms, or performance impact.

In embodiments, the CSF 100 may enable a user to discover what cloud applications and platforms 132 users of an enterprise are using (and with respect to what items of data) such as by inspecting activities of those users as reflected in APIs and event logs of those platforms, which may be inspected using the connector APIs 108. The CSF 100 may also enable a user to classify users, activities, applications and data and the like that relate to data usage and control data usage, either selectively (such as enabling user control) or centrally, such as based on policy. Control may include various automated response actions, such as automatically sending an alert to a user, automatically alerting a manager, automatically encrypting sensitive data, or automatically triggering a wide range of response actions that are available in disparate security systems, such as threat management systems.

Among other things, the CSF 100, and various solutions described herein, enables a unified view of the applications and the users of an enterprise. Cyber intelligence, including the application of analytics to various types of data, will increasingly benefit from the unification of information about applications, including cloud and on-network applications on various platforms, with information about users, such as user behavior. The CSF 100, including the Application Firewall (AFW) 300 and the UBA platform 500 described below, can provide extensive data on applications and users, thereby enabling more sophisticated cyber intelligence and analytics as described below. Some parties refer to the combination of user analysis and entity analysis, where the entity refers to programmatic and machine activity, as "UEBA," and references to UBA throughout this disclosure should be understood to encompass UEBA except where context indicates otherwise.

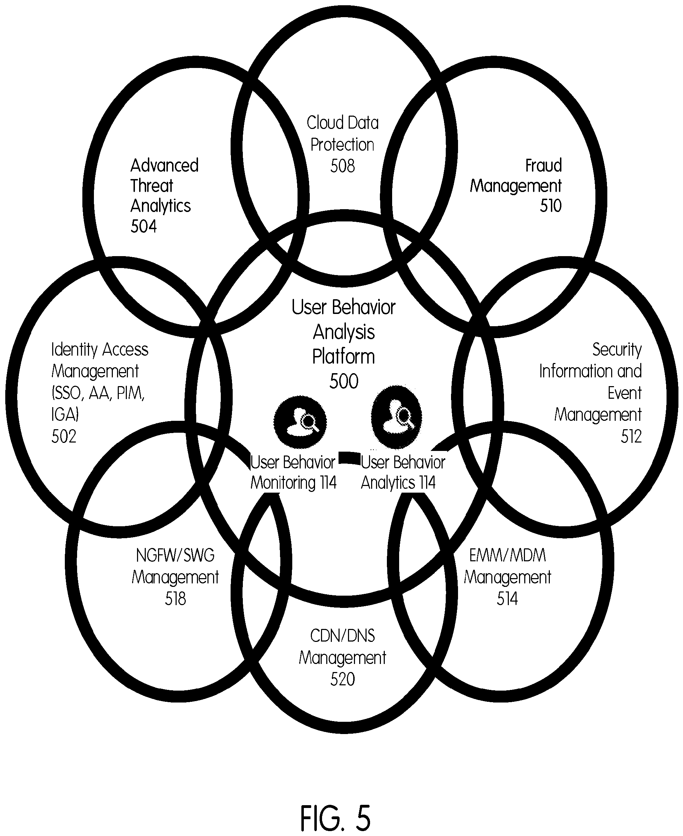

Referring to Fig. 5, user behavior analysis, such as performed on or in connection with a platform 500, which in turn may be associated with an overall cyber intelligence platform 6500 and with various other capabilities of the CSF 100 as described throughout this disclosure (including the user behavior monitoring 114 and user behavior analysis 150), may help enable a wide range of other security solutions, such as security information event management solutions 512, fraud management solutions 510, cloud data protection solutions 508, advanced threat analytics solutions 504, and identity access management solutions 502, including single sign-on (SSO), AA, personal information management (PIM) and IGA solutions. In embodiments, UBA may help enable other security solutions, such as enterprise mobility management (EMM) solutions and mobile device management (MDM) solutions 514, and next-generation firewall (NGFW) and security web gateway (SWG) solutions 518, as well as other solutions like content delivery network (CDN) solutions and domain name system (DNS) solutions 520.

SaaS vendors are increasingly providing access to detailed event logs such as Salesforce EventLogFile, Google Activity API, Box/events API, Office 365 Security and Compliance Log, Dropbox, Okta and the like.

The security related information that is now available from the main cloud platforms is wide-ranging and extensive. This data allows a platform, like the cyber intelligence platform 6500, to monitor and analyze user activity, such as through a UBA the platform 500. The cyber intelligence platform 6500 may also monitor and analyze activity, such as through the platform 500, from logs and other sources of events related to IaaS/PaaS systems, from logs and other sources of events from other security systems, and from logs and other sources of events passed via various APIs, among other sources.

The UBA platform 500 seeks to extract actionable security insights from user behavior (and in some cases, application or machine behavior, in which case UBA is sometimes referred to as User and Entity Behavioral Analysis, or "UEBA." The term UBA should be understood throughout this disclosure to encompass UEBA except where context indicates otherwise. The UBA platform 500 may obtain data, such as relating to events, such as from event logs, audit logs and the like that may be obtained via the various services of the CSF 100, as well as from third party security vendors, such as over APIs, as well as from an input API that can be used to input events and logs into the CSF 100. The UBA platform 500 may comprise a process, such as a data processing pipeline, to stream, enrich, analyze and store security event information, as described in more detail below. The UBA platform 500 may also enable various operational and forensic capabilities, such as supporting searches (e.g., by user, by location, by application, by type of event, etc.), allowing users to drill down on details, such as in the areas that can be searched, and enabling various user interfaces and visualization capabilities such as ones that help security professionals to manage various cyber security use cases, such as identifying emerging events, dealing with compromised accounts, preventing malware, avoiding and managing data breaches, providing forensic capabilities, managing compliance, and the like.

The basic features of the UBA platform 500 may include rules-based features and anomaly detection features.

Rules based features may detect indicators of compromise based on rules. For example, a rule may indicate that a user should not be connecting from a country outside of whitelisted country and the like. However, these rule-based systems are difficult to scale effectively, because they become understood by malicious parties who develop ways around them.

Effective anomaly detection, powered by data science and machine learning, is the direction in which UBA technology is progressing. Anomaly detection may detect anomalies in user behavior and the UBA platform 500 of the CSF 100 may also tie anomaly detection to threat or risk, as an intersection of a user behavior anomaly and data sensitivity may provide focus on the right indicators in a more scalable way than in rules-based features.

A major challenge may be alert fatigue. For example, a system like an IPS system may give hundreds, thousands, or even tens of thousands or more alerts per day, making users insensitive to individual alerts. A goal of the UBA platform 500 may be to better indicate threats, such as account compromise, such as using UBA techniques together with other indications of account compromise as indicated through the services of the CSF 100. This may make alert identification more effective, allowing the production of fewer, more relevant alerts.

The platform 500 may further include capabilities for improved UBA, such as context aware UBA, threat analytics based on UBA, including for protocols like oAuth that allow users to approve applications to act on their behalf, advanced threat analytics and forensics using UBA information, and education of users based on UBA.

Additional opportunities for the application of cyber intelligence based on UBA may include community intelligence (including intelligence relating to threats that affect multiple enterprises, including across different applications and platforms), secure configuration management, identity management integration, and real time session management. Real time session management may include reconstructing user sessions and allowing users to manage a session.

There are a number of important cyber security use cases that may benefit from improved UBA solutions, where identification of a pattern of user or machine behavior allows identification of a threat. Important cyber security use cases may include dealing with compromised accounts. Behavioral indicators of potential account compromise may include activity at night and on weekends, simultaneous login from distant locations, and access patterns that suggest bot/crawler behavior, rather than real human behavior.

Important cyber security use cases may also include dealing with careless users and data exfiltration. Behavioral indicators of data exfiltration may include excessive downloads in a session, spikes in "access fail" events and indicators of sharing of files to a personal email address.

Important cyber security use cases and features may also include privilege management, configuration management, dealing with Oauth spearphisihing, cyber security management, risk management, education, incident management, API integration, visualization of user behavior, risk assessment, adaptive security management, community features, forensics and compliance.

Outputs from UBA information from the UBA platform 500 may be consumed in multiple, interconnected ways such as for detection, analytics and forensics. Detection may include creating alerts when a policy is violated or a possible breach is identified. Analytics may include performing offline analysis of the collected data to find patterns, outliers and the like. Forensics may include online, manual interrogation of raw data using filters, drill-down, faceting and graphic visualizations.

UBA outputs can be used in a number of different cyber security situations, including relating to, insider threats, external threats, configuration management, log management, IAM, DLP and encryption.

There are many different types of behavior that can be analyzed for a range of purposes. These include activity from a new location, activity from a new device, activity from irregular locations, anomalies in sequences of events (such as to identify a different person (hacker) behind an account or a machine (malware)), anomalies in event frequency (such as to suggest account compromise), and access from suspicious IP addresses. Behavior may also be used for detecting an advanced threat (such as a more sophisticated threat) such as by correlating, comparing, and otherwise identifying patterns and irregularities in activities, such as comparing across various users, groups and enterprises. This can be important since a very small level of activity may not be detected in a context of one user, but if the system sees small patterns repeating in a wide range of users, it might be an indicator of compromise. The larger the set of events that are tracked by the UBA platform 500, the more likely one is to detect something happening. The UBA platform 500 may also be used for modeling and detecting machine behavior versus user behavior. This can be important for account compromise situations (including as a result of malware), but it also may provide visibility on activity and access of machines (since one doesn't necessarily know about a compromise, as in some cases everything appears to be under the context of a user account/identity. The UBA platform 500 may be used to identify patterns of employees 'leaving the company'. Employees who leave many times take data with them and exhibit irregular activity patterns. One may integrate with HR systems to provide early triggers and/or remediation, such as a performance improvement plan or performance review of an employee.

The UBA platform 500 may be used for identifying sensitive content of the organization, such as through natural language processing (NLP) and machine learning, so that an operator of the UBA platform 500 can focus behavior analysis over sensitive data more specifically. This makes for far more accurate 'sensors' as access to sensitive data, for example to a detailed facilities infrastructure layout, might be an indicator of an imminent attack.

The UBA platform 500 may be used in connection with 'honey pots' to detect attacks. For example, one may use the patterns identified in UBA to generate intelligent honey pots (with some level of activity and relevant content) and 'wait' for attackers to bite.

The UBA platform 500 may also be used for detection of zombie accounts that are not really active anymore and to identify malicious application access (such as bot/malware access).

Additional features of a UBA solution may include response actions. Response actions may include UBA responses such as reset password and disable user. Response actions may also include end user compromise validation. Additional features of a UBA solution may also include integration with other security offerings, such as a an identity-as-a-service (IDaaS) offering and/or an identity and access management (IAM) offering, where the capabilities of such offerings are used to perform access controls in response to analysis of user behavior, such as disconnecting a user session, prompting a "change password" protocol, revoking application access, stepping up levels of authentication, blocking user access, and the like. A complete IDaaS offering may include an "activities view" visualization to present the target application, and may integrate with various identity platforms, cloud environments, firewalls (including the Application Firewall (AFW) platform AFW 300), single sign-on (SSO) systems and/or IaaS/PaaS platforms, such as OneLogin™, Centrify™, Azure™, and many others.

UBA may be used as a path to advanced analytics, including support for frequency anomaly detection policy use cases. Frequency anomaly detection policy use cases may include excessive download or any activity category or type and inactive user detection or any activity category or type.

Additional implicit requirements for UBA to support advanced analytics may include operationalization of UBA policies and UBA policy consolidation.

UBA operationalization may include enabling the ability to specify whitelist IP addresses and IP ranges, including associated with whitelist countries or other geographical designations. A UBA solution may include a default suspicious activity location policy, such as the ability to implement a policy that may be turned on or off that may indicate the presence of a velocity checking scenario. A velocity checking scenario may be a scenario where a user appears in two locations far apart over a very short time period. UBA solutions may include a velocity policy, including the ability to register a trusted application, a trusted IP address, or the like. A UBA solution may also allow aggregation of incidents to enable similar resolution and investigation, including grouping incidents that have similar characteristics.

To enable advanced analytics, the following capabilities, which may be referred to as "tasks," may be enabled in a UBA the platform 500, with the following benefits. In embodiments, a UBA unified policy task may consolidate policies, such as a whitelist policy and a sensitive user activity policy, to allow the refinement of sensitive user activities so that they trigger only according to a policy, such as during defined time periods or at defined locations.

In embodiments, an activity detection task may trigger an incident when a specific event category or event type, or a group of them, is detected, which allows the creation of predetermined, or "canned," policies for any platform or environment.

In embodiments, a sensitive user activity task may be provided with the ability to define sensitive user categories for any platform or environment, such as administrative users, users who have access to configuration of security settings, or users who have access to secrets.

In embodiments, an excessive activity detection task may trigger an incident when a specific type of event or group of events occurs over a predetermined threshold.

In embodiments, an abnormally excessive activity task, which may be a statistical task, may trigger an incident when a type of event is performed over an automatically determined threshold for a user, an organization, an application, or the like, where the threshold is determined by calculating a baseline activity and a statistical measure is used to distinguish abnormal from baseline levels of activity.

In embodiments, an "excessive download" task or a "failed login" login task may comprise a user activity policy to detect excessive amounts of given types of activity, such as failed logins, too much sharing, too many downloads, or the like, where the task may apply to the same user across different environments or platforms.

In embodiments, a new location detection task may trigger an incident when an operation is performed in a new location, such as a login from a new location for the first time, downloading from a new location, or performing some other operation from a new location.

In embodiments, a rare activity detection task may trigger an incident when a type of event (or group of them) is performed in a way that suggests unusually rare activity, such as an account remaining entirely dormant for a time period (e.g., 30 days) or an operation being performed in an account for the first time after a long duration (e.g., a login or download occurring after 30 days of inactivity).

In embodiments, an abnormally rare activity task may trigger an incident when an activity is performed for the first time after a long time, where the duration of a "normal" or baseline period between tasks is determined automatically based on the norm for a user or organization.

In embodiments, an inactive user detection task may comprise a predetermined or canned policy to allow a user to detect an inactive user.

A UBA solution may also provide executive threat visualization capabilities. The goal for executive threat visualization capabilities may be to provide a dashboard or similar visualization for executives and advanced forensics for security analysts.

Executive threat visualization features may include an activities heat map widget, activities summaries timeline plot, activities interval working hours plot that may include an activities page and improved usability of activities forensics.

To enable executive threat visualization, the following capabilities may be enabled, with the following benefits. In embodiments, an activities heat map widget may comprise a dashboard representation of recent activities (e.g., over the last 30 days) by location on a geographical map, with links that provide the ability to obtain additional information on activities (such as by linking to an activities page). This may include various filters, such as by city, by country, by application, by user, or the like.

In embodiments, activities summaries may be provided that provide high level summaries of the top active users and totals for an organization, such as total activities, total logins, total downloads, total sharing events, total installation events, or the like. In embodiments, one may determine a user risk score based on user behaviors and present administrators with indications of the riskiest users and/or the riskiest activities being undertaken by users.

In embodiments, various features may be provided for improved forensics on activities in a dashboard or similar visualization, such as providing filters that allow a user to focus on particular fields for analysis, providing location markers for activities, providing information about device identifiers and/or user agents, allowing distinct map-based and list-based views, providing summary tables, providing filters on behavior, providing views that show trends and patterns, providing color coding of activities (such as based on incident association) and providing links, such as from objects to activities.

Advanced UBA features may also include event frequency policy features (such as a frequency anomaly detection policy, including setting frequency thresholds for various behaviors and events), inactive user detection, UBA customer insights, data analysis (including with BI tools), combined DLP and UBA policies, first time location, alerts on insecure proxies, integration with firewalls (including the AFW 300) and SSO integration (including application discovery with SSO and application install anomalies, such as detecting high frequencies of installations).

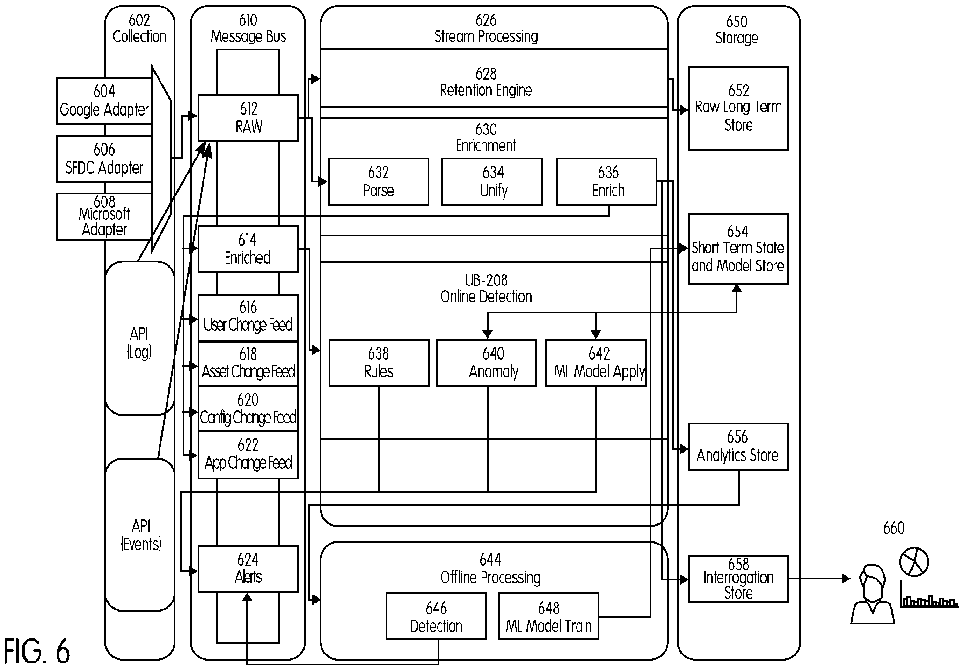

Referring to Fig. 6, a system architecture and data processing pipeline illustrated for the UBA platform 500, including a data processing pipeline for event data that is used for UBA.

A data collection process 602 for the UBA platform 500 may collect event and similar data from various platforms (such as through APIs that pass log information from various environments and through APIs that pass event information from various environments) and in embodiments may have two parts: a vendor specific collection and processing part and a vendor agnostic processing part.

A vendor specific collection and processing part may include a collection facility 602. Collection facility 602 may include various adapters, which may be developed, configured and deployed according to what is required in order to collect data, such as events (including events obtained from log files and other sources), from particular platforms. For example, these may include a Google™ adapter 604 for collecting data from Google™ platforms, an SFDC adapter 606 for collecting data from SalesForce™ platforms, and a Microsoft™ adapter 608 for collecting data from Microsoft™ platforms.

Vendors may have APIs that may differ on many facets, such as how data transfer is triggered, such as whether data is pushed or pulled, whether data is pulled after notification, or the like. APIs may use differing data formats, for example JSON or CSV, and different semantics. For example, semantics may include anything from action names, such as "view" or "DownloadAction" to how are users described. How users are described may include being described by using login names, email addresses and the like.

In embodiments, the first part of the data processing pipeline may be vendor-specific. The vendor-specific part of the data processing pipeline may take the raw data stream 612 coming in from the vendor and transform it into a more uniform structure, such as one that may be ingested by downstream subsystems.

The design may be geared towards robustness. Data read from vendor APIs may be placed on a vendor-specific queue immediately and with minimal processing, so that any potential back-pressure may be alleviated and failure probability may be reduced. Any subsequent failure to process data may be retried once data is safely and persistently queued in the platform 500.

A series of workers may grab items off of the raw data stream 612, such as from a queue, and normalize the data into a vendor-agnostic schema. After this step, an object containing both the normalized format and the raw data may be placed in a single egress queue that may be common to all vendors.

The platform 500 may also include a stream processing component 626. Stream processing 626 may include taking a raw stream 612, parsing the stream 632 and unifying it 634.

The vendor agnostic processing part of the platform 500 may also include a stream processing facility 626. The stream processing facility 626 for the vendor agnostic processing part of the platform 500 may include enrichment 630. Enrichment 630 for the platform 500 may include an enrich function 636, which may enrich the data stream with various additional data and metadata elements, such as by creating additional layers of data on top of the raw data collected. The additional layers of data may include data such as geo-location resolution, IP/URL parsing, user-agent parsing, and any user/group data lookups that may be required to augment the event data, such as allowing the downstream subsystems to process the event data with minimal effort. Reputation sources may also be used, which may be hosted locally or remotely, including by a different provider.

The platform 500 may de-queue data from the aforementioned queue, perform the data processing described, and place the data onto another queue. The queue where the data may be placed may be called the "enriched data" queue.

Fig. 6 illustrates an embodiment of a system architecture and data processing pipeline for the platform 500. UBA may be performed in part by ingesting and analyzing event log data that may be sourced from the APIs of different service providers, such as Google, SFDC, Microsoft, Box, Dropbox, Okta and the like.

The platform 500 may include various capabilities, such as collection and retention, online detection, offline analysis, forensics and DLP/scanning support. Collection and retention may support collection of all available event data and retention of all available event data, such as in long-term storage. Online detection may support the application of various detection algorithms to incoming events, such as to surface alerts in near real time or real time. Various detection algorithms may include rules, detection of statistical anomalies and implementation of machine learning. Offline analysis may support offline algorithms that process events collected over large time spans, such as to surface alerts, discover patterns and generate models, such as the ones used in online detection. Forensics may support interactive interrogation by a customer, for example, of collected events. Forensics may also support filtering, drill-down and visualizations. DLP and/or scanning support may provide a feed to existing a DLP or scanning service, such as of the CSF 100 or a third party. A change feed to a DLP or scanning service may trigger file rescans, organizational profile updates and the like.

The platform 500 may be flexible, scalable and operations-friendly. Flexible requirements may include the ability to add stages to the UBA data processing pipeline and to replace components, without requiring redesign of the entire UBA data processing pipeline. Flexible requirements may also include support for iterative development of the UBA data processing pipeline topology and support for independent development and deployment of processing steps with minimal disruption to existing flows. Scalable requirements may include the ability to scale out by adding more nodes, as well as visibility into performance of each part of the UBA data processing pipeline and control of scaling for each part of the UBA data processing pipeline. Scalable requirements may be configured to manage preferences, such as preferring throughput to latency. Operations-friendly requirements may include operations visibility and control, an ability to deploy updates to part of the UBA data processing pipeline with minimal downtime and no data loss, as well as performance measurements and metrics for each stage and component of the UBA data processing pipeline.

Event log data may be sourced via API calls to various service providers such as Google, SFDC, Microsoft, Box, Dropbox, Okta and the like. Service providers may support push notifications, or require polling to access new event log data.

Event log data may include an event log source, information indicating a frequency as to when the event log data is collected, an indicator as to whether or not and for how long the event log data is to be retained at the source of the event log data, an event log level of detail, a data volume (e.g., per 10,000 users) and main event types. Event log sources may include, for example, an EventLogFile (ELF) (which is the specific log file that the SFDC generates) or similar event log file from another system, activity reports, admin events, audit logs, system logs, Office 365 event logs and the like. A frequency when the event log data is collected may include real time, near real time and batched scenarios. Event log data may be retained at the source for various durations, such as 30 days, 180 days, several days, an unlimited number of days or an unspecified period of time. An event log level of detail may include a low level of detail, a medium level of detail, a high level of detail and a very high level of detail. A low level of detail may include, for example, fewer than 50 event types. A medium level of detail may include, for example, between 50 and 99 event types. A high level of detail may include, for example, between 100 and 149 event types. A very high level of detail may include, for example, 150 or more event types, as well as, for example, 25 or more file types or categories. Data volume (such as per 10,000 users) may be measured in the amount of storage, such as 14MB/day and number of events, such as between 100-1000 events. Main event types may include login event types, file access event types, share event types, admin/config event types, device sync event types, sharing event types, apps event types, devices event types, provisioning event types, directory event types and file access event types.

Incoming event log data used for UBA may have varying formats, rates, levels of detail, timeliness and history availability. Formats may include JSON, CSV, flat JSON, nested arrays and the like. The level of detail may vary, as some sources of data provide few event types, while other sources of data may provide many event types. Timeliness may include real time data sources, batched data sources or data sources that provide event logs that are not in strict timing order. Batching may include hourly batching, daily batching and the like. History availability may include data sources that may provide access to historical event log data and data sources that do not provide access to historical event log data.

The platform 500 may handle data of varying data sizes and data rates. The platform 500 may handle data rates of 2,000 events per second, 3,000 events per second, 20,000 events per second, 40,000 events per second, or more. The platform 500 may collect, process and persist 50 TB of event data and up to 100 TB or more of event data per year. The platform 500 may manage data across a plurality of managed domains and source platforms, for example 1000 or more managed domains and 5 or more source platforms.

The incoming data to for the platform 500 to process may belong to multiple tenants. Each tenant may provide data from one or more sources. The data from each source (e.g., a particular cloud platform or PaaS/IaaS environment) may be identical or very similar in form and semantics across the tenants; however, the data from each source may need to be managed and processed separately.

The platform 500 may support the management and processing of data from multiple tenants through data access and management, data processing and quality of service (QoS) and configuration and control. Data access and management may allow purging of a single tenant from various long-term data stores and prevent one tenant from accessing another tenant's data. Data processing and QoS functions may enable processing of data from each tenant separately from the data of other tenants, and, other than for the purpose of providing anonymized statistics, prevent the workload of one tenant to starve or adversely affect the processing of the workloads of other tenants and provide useful means to gauge processing costs for each tenant, on a per-tenant basis. QoS functions may also be applied at the user level (such as processing one user's events faster than others if that user has a higher risk level). Configuration and control may allow each tenant to select which detection policy to apply for the processing of the data of the tenant, as well as allow each tenant to configure thresholds and other input parameters to be applied to the policies of the tenant. Detection policy selection may also be configurable per source.

Online detection capabilities of the UBA platform 500 may apply rules on each incoming event, using some state to allow temporal rules such as "more than 300 downloads in one hour". Online detection may also detect statistical anomaly over some aggregates. Detection of statistical anomalies over some aggregates may include compare incoming events to a statistical baseline that may be calculated offline. For example, detection of statistical anomalies over some aggregates may detect user login between 2:00 am and 3:00 am, where the 1 hour bucket may be more than two standard deviations below average in login activity for that user across last three months. Detection of statistical anomaly over some aggregates may also include comparing incoming events to a statistical feature that may be calculated for some window of a previous event. For example, detection of statistical anomaly over some aggregates may detect the number of downloads across all users in the previous five minute window is more than two standard deviations above the average for five minute windows over the last three hour window. Detection of statistical anomaly over some aggregates may also include a model application that may apply a given model (calculated offline) to categorize incoming events. A given model may be calculated offline. State may be mostly constant. In addition, machine learning (ML) based algorithms may be executed in batch and/or in real time. Technologies for in-memory, real-time ML may be used to detect (such as based on ML algorithms like clustering algorithms). The real time nature can be impacted by the size of the model and may require "sparsing" the model (using only portions of the available data) and/or applying the model over short time frames to achieve real time response.

The CSF platform CSF 100 and cyber intelligence platform 6500 may interact with and use the capabilities of the UBA platform 500. Interaction with and use of the UBA platform 500 by the CSF CSF 100 and the cyber intelligence platform 6500 may require an exchange of information between the UBA platform 500 and the CSF CSF 100 or the cyber intelligence platform 6500. An exchange of information between the UBA platform 500 and/or the CSF platform CSF 100 or the cyber intelligence platform 6500 may require data sizes, formats, varieties, throughputs, latencies, robustness, multi-tenancy support, configuration and control, development and deployment. In embodiments, data sizes may be messages, such as between about 500 bytes and about 1500 bytes in size. Formats may be JSON, CSV and time-stamped data, among others. A variety of formats may come from multiple sources. In embodiments, multiple sources may include between five sources and twenty sources, or more. In embodiments, throughput may be between 3,000 messages per second and 30,000 messages per second, or more, for example. Throughput may gracefully handle spikes in ingestion rates. Up to several seconds of latency may be supported. Robustness may include not losing event messages and not processing event messages more than once. In embodiments, it may be desirable to design the system so that it can process an event message more than once. Multi-tenancy support may include full access separation between tenants, quality-of-service (QoS) to avoid one tenant's workload to disrupt others, and multiple events from the same source, with different data for each tenant. Configuration and control may enable each tenant to choose which policy to apply and enable each tenant to configure policy parameters and thresholds. Development may support adding new detection methods without disruption and decoupled development of detection and enrichment modules. Deployment may support updates to detection code without disruption.

Continuing to refer to Fig. 6, the UBA platform 500 may include various components that enable a data processing pipeline. Components may include collection components 602, a message bus 610, stream processing components 626 and storage components 650.

Collection components (including through APIs that handle events and APIs that handle log information) may include per-vendor logic for collecting event log data through API calls. Collection components may run as webhook handlers or tasks and may fetch new data and feed it into the message bus. Collection components may include adapters. Adapters may include a Google adapter 604, an SFDC adapter 606, a Microsoft adapter 608 and the like.

A message bus component 610 may serve as the backbone of the processing pipeline. Message bus component 610 may provide decoupling between pipeline components, short-term persistence and pub/sub logic. Short-term persistence may indicate that a component is finished processing data when it has successfully sent its output message or messages to the message bus 610. Pub/sub logic may allow multiple readers to read messages without interfering with each other. A message bus component UBA-210 may be built using a distributed publish-subscribe messaging system that is designed to be fast, scalable, and durable, such as Apache Kafka™.

A message bus component 610 may include message bus sub-components. Message bus sub-components 610 may include raw message bus sub-component 612 and an enriched message bus sub-component 614. A raw message bus sub-component 612 may connect to adapters in the collection component 602, a retention engine stream processing sub-component 628 and a parse stream processing sub-component 632. An enriched sub-component 614 may connect to from an enrich stream processing sub-component 636 to an online detection stream processing sub-component 608. The message bus 610 may include various feeds, such as a user change feed 616 (which may handle events relating to user changes, such as changes to accounts, changes to the users of an enterprise, or the like), an asset change feed 618 (which may handle changes in assets, such as changes in storage resources, infrastructure, or platform resources), a configuration change feed 620 (which may handle information about any changes in configuration of various elements of an enterprises resources) and an application change feed 622 (which may handle information about any changes to applications). The enrich stream processing sub-component 636 may connect to each of the user change feed 616, the asset change feed 618, the configuration change feed 620 and/or the application change feed 622. A message bus component 610 may include alerts 624. Alerts 624 may connect to rules 638, anomaly detection activities 640, machine learning model application activities 642 and detection 646.

The platform 500 may include a stream processing component 626. A stream processing component 626 may read an incoming stream of events, process it online, and write back to the message bus 610 or to other final destinations, such as to storage components 656.

The stream processing component 626 may include a retention engine 628. The retention engine 628 may ship raw events to a permanent store. Raw events may be received from a raw message bus sub-component 612. A permanent store may be a raw long-term store 652. The retention engine 628 may act as a connection to send a data to its final destination. The retention engine 628 may be built using a publish-subscribe messaging system that is designed to be fast, scalable, and durable, such as Apache Kafka™. The retention engine 628 may also be built using long term cloud based storage, such as for S3™.

The stream processing component 626 may include an enrichment flow 630. An enrichment flow 630 may read raw events and transform raw events. An enrichment flow 630 may receive raw events from a raw message bus sub-component 612. An enrichment flow 630 may transform raw events through a parse function 632, a unify function 634 and an enrich function 636. Enrichment flow 630 may include log management tools such as Logstash™, Splunk™ and Storm™ or Spark™.

A parse function 632 may include parsing various input formats into a common format. A common format may be a JSON format. A parse function 632 may include a standardized format for common fields. Common fields may be timestamps. A parse function 632 may connect to a raw message bus sub-component 612.

A unify function 634 may unify common fields from different sources into standardized fields. Standardized fields may include, for example, ip_address and user_login. A unify function 634 may also unify event types into a common ontology. A common ontology may include elements like asset_modify (for information on modification of assets as characterized in various platforms), login (for login information as characterized in various platforms) and login_fail (for tracking failed login attempts as they are tracked in various platforms).

The enrich function 636 may add information to an event by utilizing external lookup functions from various sources. Various sources may be used for enrichment in various ways, such as adding geo-location based on IP address, parsing a user-agent string, consulting external threat intelligence data and adding context from internal alert-based data. External threat intelligence data may include IP reputation data. Internal alert-based data may include a scenario where a user in an event may have or experience current incidents. An enrichment flow 630 may write events enriched by an enrich function 636 back to an enriched message bus sub-component 614. An enrichment flow 630 may connect to an analytics store 656 and an interrogation store 658.

A stream processing component 626 may include an online detection function 608. An online detection function 608 may consist of a set of activities that may perform online analysis of events and may raise alerts about possible security issues. These activities may include rules-based activities 638, anomaly detection activities 640, and machine learning model application activities 642. These can be categorized into these rough categories. An online detection function 608 may connect to an enriched message bus sub-component 614. Online detection function 608 may use include management tools such as Storm™ or Spark™.

Rules-based activities 638 may apply explicit rules and flag violations. An example of a violation may be a user logged in from two distant locations within short timeframe. Rules-based activities 638 may connect to alerts 624.

Anomaly detection activities 640 may detect behavioral patterns that may be abnormal related to a baseline. An example of a behavioral pattern that may be abnormal related to a baseline may be a user accessing an abnormally large number of files in a short time when the user is logging in during a time at night that may be an abnormal time of night for activity by that user. Many other types of anomaly may be defined, either by threshold-based rules, by statistical analysis, or by machine learning on patterns of usage of accounts, users, applications or the like. Anomaly detection activities 640 may connect to alerts 624 and short-term state and model store 654.

Machine learning model application activities 642 may apply a pre-trained model to the incoming events and flag when a model indicates a problem. Machine learning may include any method in which a model may built based on large amounts of data and later applied to new data to reach some conclusion. Machine learning model application activities 642 may connect to alerts 624 and short-term state and model store 654.

Rules-based activities, anomaly detection activities and machine learning model application activities may require access to a short term store 654 where interim data may be stored and updated frequently to support the online detection flow 608. In embodiments, the short-term store 654 may include data for up to several days in the past. Interim data may include, for example, the last location from which a user logged in, data from a machine learning model, and/or window/aggregate data for anomaly detection activities 640.

A stream processing component 626 may include an offline processing function 624. Offline processing function 624 may include a set of offline processing activities that may be performed on larger collections of events and may performed periodically or based on other triggers, rather than for each incoming event. Larger collections of events may include, for example, all data from a period of time. A period of time may be an hour, a day, a week, a month, three months, a year and the like.

Offline processing activities may include an offline detection activity and a machine learning model-training activity. An offline detection activity may detect issues such as dormant accounts, orphan assets and unutilized access rights. A machine learning model-training activity may create or improve machine learning models to be consulted during online detection. An example of a machine learning model-training activity may be the clustering of users based on data access pattern similarities. An offline processing function 624 may connect to an analytics store 656. An offline detection activity 646 may connect to alerts 624. An offline detection activity 646 may include cluster computing frameworks such as MapReduce™ or Apache Spark™. Machine learning model training activities 648 may connect to a short term state and model store 654. Machine learning model training activities 648 may include machine learning libraries such as Apache Spark ML™ or AWS ML™.

A storage component 650 may include a raw long term data store 652, a short term state and model data store 654, an analytics data store 656 and an interrogation data store 658.

A raw long term data store 652 may store raw incoming data events, without (almost) any modifications, to a long term data storage location from which the raw incoming data events may be replayed into the pipeline for reprocessing if needed, retrieved by the customer, for example acting as a data retention service and purged when reaching a predefined age or based on other data retention policies. A raw long term data store 652 may connect to retention engine 628. A raw long term term data store 652 may include cloud based storage such as S3.

A short term state and model data store 654 may be the storage mechanism used for an online detection state 608 beyond a state that may be managed directly in the main memory of a processing node, as well as the model output from machine learning processes. A short term state and model data store UBA-254 may connect to anomaly detection activities 640, machine learning model application activities 642 and machine learning model training activities 648. A short term state and model data store 654 may include an in-memory data structure store such as Redis™.

Analytics store 656 may be the main storage destination enriched events. Analytics store 656 may receive enriched events from an enrich function 636. Offline processing 644 may read data from analytics store 656.

Interrogation store 658 may be a storage destination for enriched events. Interrogation store 658 may support online interrogation and drill down. Enriched events may be received from an enrich function 636. Interrogation store 658 may be unified with an analytics store 656. Interrogation store 658 may be a separate store supporting the different access patterns that may be required by online interrogation. For example, interrogation store 658 may support indexing to a support full text search function. Interrogation store 658 may include as search server such as ElasticSearch™.

Once data is prepared, such as by enrichment, or in raw form, it may be consumed by multiple subsystem processes. In embodiments, such as using a system like rabbitmq™, this may be implemented as a fanout exchange. One of these subsystem processes may be persistence. Persistence may save data, such as in a storage resource like S3™ for future batch processing and in a resource like ElasticSearch™ to be queried. GeoFence™ and other online processes may be enabled. Persistence in the platform 500 may include storage 650. Storage 650 for persistence may include a raw long term store 652 and an analytics store 656. Persistence in the platform 500 may also include stream processing 626. Stream processing 626 for persistence may include use of a retention engine 628.

The UBA platform 500 may partition data into a storage resource like S3, such as using a bucket per organization. Partitioning data into S3 using a bucket per organization may include batching multiple events into objects represented by day, serial number and tuple. For example, a bucket called "org-5" for organization five may have an object named "/2015-05-01/39".

For a facility like ElasticSearch™, the platform 500 may use an index per organization per month. This may allow the platform 500 to archive and offline entire indices without costly delete operations as data ages out of relevance. Indices may have a sufficient number of shards so they may be spread over all servers.

The platform 500 may look at events and create incidents based on them. There are possible issues with inspecting events in policy engines (PEs) as they are typically designed. Most current implementations of PEs require complex, time-consuming, and resource-intensive processing for each inbound item. Items are relatively self-contained and are usually shipped off to a facility like a content inspection service for processing, possibly requiring additional API calls and content fetching from vendor APIs.

In contrast to this, the UBA platform 500 may experience event rates that may be significantly higher than a typical ingress rate of a conventional policy engine, but each event may require relatively little in terms of processing. Event inspectors may have state information, and events may be examined in context, such as determining when an event is expected to be complex.

In embodiments, the UBA platform 500 may have a pre-PE stage that may do most filtering and that may pass a trickle of certain types of events into the PE. The UBA platform 500 may have pass-through policies that may create incidents for inbound events. The UBA platform 500 may also have possible additional rules such as relating to frequency, location, profile and business hours.

In embodiments, the UBA platform 500 may have a UBA processing engine that may operate in parallel to a policy engine, and both engines may manage incidents.

The UBA processing engine may evaluate inbound events at high rates against context and may create incidents as required. In embodiments, the UBA processing engine may use baseline models, histograms based on historical data, as well as machine learning models.

The platform 500 may include a service for incident creation. Incident creation as a service may be used by both the policy engine and a behavior analytics engine (BAE).

In embodiments, the cloud security fabric CSF 100 may be fragmented into multiple products such as a DLP and the platform 500. In embodiments the CSF 100 may have a unified web application and set of APIs that may allow users to interact with incidents or events, while each subsystem may manage and populate its own incidents that differ in their entities. For example, some subsystems may rely on asset entities, while other subsystems may rely on models or events.

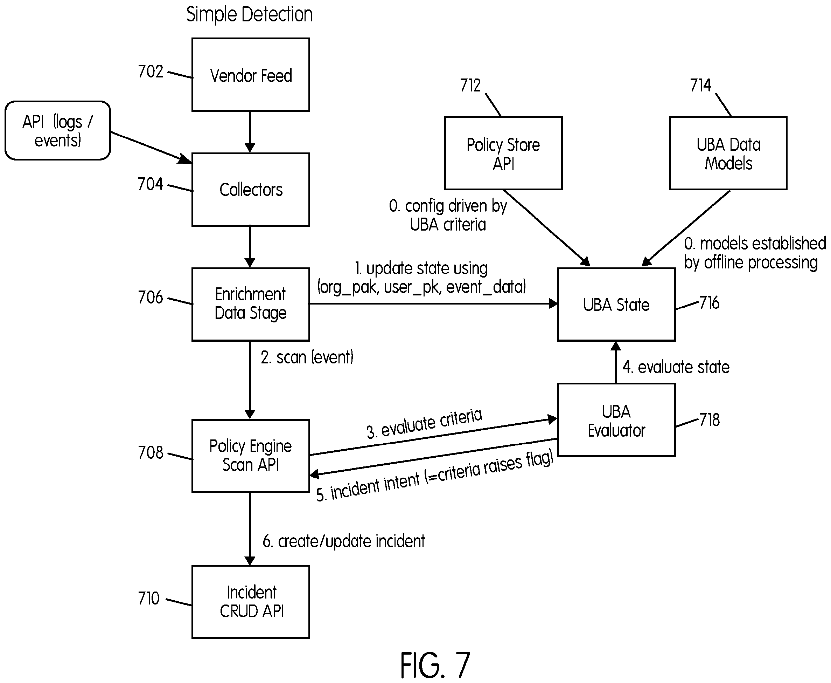

Figure 7 shows a schematic for integration of information from the UBA platform 500 with a policy engine. Figure 7 illustrates a prototypical flow for integration of UBA with a policy engine, but other examples can be provided as would be understood by one of ordinary skill in the art. A prototypical flow for integration of UBA with a policy engine may include external systems, UBA components and policy engine components. External systems may include vendor APIs and vendor feeds 702. UBA components may include collectors 704 (which may include APIs for collecting events and APIs for collecting log information), an enrichment data stage 706, UBA data models 714, UBA state system 716 and a UBA evaluator 718. Policy engine components may include a policy engine scan 708, an incident create, read, update and delete (CRUD) API 710 and a policy store 712.

UBA collectors 704 may pull down data from vendor APIs and vendor feeds 702. The data that is pulled down from vendor APIs and vendor feeds may be normalized, enriched and annotated using a data flow architecture by an enrichment data stage 706. The enrichment data stage 706 may normalize, enrich and annotate the vendor APIs and vendor feeds using a collection of celery workers, a Storm™/Spark™-based system and the like.

Once the data is fully enriched, it may be used to update a running state system, based on models that may be generated offline, based on historical data and policy configuration. A running state system may be a UBA state system 716, as illustrated in Fig. 7. UBA state system 716 may receive configuration information from policy store 712 and models established by offline processing from UBA data models 714.

After the state has been updated, data may be sent to a policy engine, such as a Policy Engine Scan API 708 to be scanned, such as to retrieve further information about a user or an entity/object. The policy engine may evaluate a policy that may have one or more UBA criteria. This criterion may receive an event to be evaluated by a UBA evaluator 718 and may consult various states to make a determination whether to open an incident.

After the determination whether to open an incident has been made, the flow may continue into the Incident CRUD API 710 that may create an incident, update an existing one, or delete an event where it is not needed.

UBA components may be inherently scalable. All data processors such as collectors 704, enrichment data stage 706, UBA evaluator 718 and state mutators may be inherently stateless and may scale horizontally as necessary. State may require constant or sublinear storage per monitored model. Careful sharding of state and associated workers (splitting them into separate processing tasks) may allow for horizontal scaling. For example, scaling may be improved by splitting workers by user, by customer, by type, or the like, so that independent areas operate on different tasks.

The API between a UBA evaluator 718 and the PE may allow UBA to refer to a session object when signaling a change in perceived state.

When incidents are opened, they may be provided a context. A context may include in a user and the role of a user within an incident. A context ontology may be extended to include a concept of a user session that may be associated with a set of other items. Other items may include events associated with a user or groups of users. Events may be the cause for a threshold being crossed. Other items may be the data used to create a model that may currently be violated.

In some cases, it may be required to quickly and efficiently examine a recent portion of an event stream. Use cases that may require quickly and efficiently examining a recent portion of an event stream are adjusting/creating policies and expecting them to apply almost immediately and test-driving a new UBA policy configuration that may be similar to testing a regexp on a sample corpus before applying into production. Another use case that may require quickly and efficiently examining a recent portion of an event stream may be when additional instructions/hints by an operator may trigger a re-classification and therefore re-examination of recent events under new model specifications. For example, an operator may hint that a user may be suspected of malicious behavior that may indicate that the suspected user needs to be given less leeway and re-examine event data of the suspected with tighter thresholds.

The platform 500 may support quickly and efficiently examining a recent portion of an event stream by providing a short-circuit data stream between enrichment data stage 706 and UBA state 716.

Once a data feed has been completely drained, the policy engine may trigger a re-evaluation of policies that may affect multiple sessions or incidents.

Some events may be annotated by other criteria prior to finally being evaluated by UBA to enable the UBA to simultaneously handle behavioral patterns with content patterns or other sources/patterns. Behavioral patterns may include, for example, the frequent downloading of documents, and content patterns may include, for example, sensitive data being shared or just a sensitive file.

In embodiments, the individual PE workers may consume items off of shared queues and process them concurrently. PE may allow for such guarantees by using partitioned Kafka™ topics and partitioning on org_pk, for instance, having each worker consume a subset of topics that may be a standard Kafka™ topology. The PE or UBA evaluator 718 may re-order events, to support ordering guarantees.

In embodiments, the platform 500 may provide a DLP function. A UBA DLP function may revolve around content pieces. Content pieces may be files, documents of various forms, social network posts, access control lists (ACLs), users and user groups.

Content pieces may have a vendor-unique ID, a name and a mime type. Content pieces may be associated with a vendor and may have a subtype for a vendor. Content pieces may have date stamps. Date stamps may include information indicating when a content piece was created, updated, deleted and viewed. Content pieces may have an existential status.

An entity may be associated with a specific scan and may have various ACLs associated with it. Each ACL may map a scope a user, usually and a role. A scope may be a user. A role may be an owner, viewer, editor and the like.

An incident may be a result of a policy that was triggered upon the review of a certain piece of data. An incident may have various date stamps, type, severity, cardinality, and a plurality of references into a single entity, a policy that triggered it and a product application.

An incident may have multiple incident detail records associated with it. These multiple incident detail records may be individual matches for a policy, such as social security numbers or credit card numbers.

An entity may be recorded in the platform 500 only when an incident is created that may rely upon the entity.

The platform 500 may extend how entities are perceived, such as via an "extra" key-value set field. An "extra" key-value set field may be an hstore in Postgres, via a sub-table for example in the case of Microsoft Office 365, or via a set of tables, for example in the case of App Firewall.

The platform 500 may have a single, unified view of incidents. Incidents may have the same fields displayed for them, and the various types of incidents may be mapped into different wording for several of the fields. Not all fields may be relevant for every kind of incident. Several fields may be empty and the meaning of a field may be adapted to fit into existing fields.

An entity may represent files and assets. The platform 500 may view incidents as resulting from events. Events may be single occurrences of a process, denoting actions or changes in the system that may result from or may be associated with user action or a machine/program action.

Events may have, for example, a when, who, where and whom associated with them. A "when" may be a distinct point in time (a date stamp) when the event occurred. A "when" may be a date stamp. A "who" may be a user. A "who" may be an actor. A "where" may be an asset or a location or a device. An asset may be a file, a document and/or an ACL entry. A "what" may be an action. An action may be an edit, a grant and a revocation, for example. A "whom" may be when an actor grants permission to another entity or person. An example of a "whom" may be when Actor A grants permissions to Person A.

Partial and mismatched information may be provided in a UBA pattern. When partial and mismatched information is provided in a UBA pattern, events may be missing key data to fit into an entity model. For example, for an event describing a user app login, there may be no asset entity or MIME type. For a failed login attempt, there may be no user to associate with the failed login attempt, or there may be several users to be associated with the failed login attempt. An example of an occurrence where there may be several users to associate with the failed login attempt may be when a user logging in from a satellite office the user never visited, which presents a pool of potential suspects. In this example, the login attempt may have no creation, update, view or deletion date stamp. The login attempt may just be an event and as such may have one timestamp.

Information cardinality may be present in a UBA pattern. When information cardinality is present in a UBA pattern, Incidents may be the result of multiple events or entities, such as an SSN leaking into a document through the edit of user A, removed by user B, and the document "owned" by user C. In this example, there may be one file but three users and two versions of the file. Such cases may be handled partially by indirections.

Another class of cases that we would like to model is one where incidents are by definition the result of a set of events, or relate to such a set. For instance, a suspicious login attempt or a data "spidering" may require multiple attempts or actions to occur for us to determine that such a thing occurred or to cross some background-noise threshold.

An example of an opposite cardinality scenario is detecting inactive accounts, based on a lack of events from a user.

In some cases, it may be desirable to create behavioral models based on past behavior of a single user or a group of users, and then base a detection engine off of those models. In such cases, an incident may be mapped into the dataset that determined the model. Mapping may be indirect mapping. In such cases, there may be thousands or millions of items to point at. Items may be pointed at directly or indirectly.

It may be desirable for the platform 500 to notify customers of incidents as early as possible. This may require that incidents update and change over time. Additional events coming in after an incident is created may provide more information and allow the platform 500 to improve confidence intervals, escalate severity of an incident, or be used to eliminate an incident altogether.

Some incidents may be associated with data from multiple vendors, however may be linked into a single entity from a single vendor. For example, a user may log into their Dropbox account from the US and into their Google account from the UK in a short time interval. This may present a condition that may not be detected based on data from a single vendor, but may indicate a suspicious pattern as a result of having access to data across different accounts for the same user.

While the UBA platform 500 may be data-oriented, organizations may also look at their security from other perspectives that may require additional modeling. Organizations may desire to look at security from an organizational structure perspective, trying to answer questions such as: which groups are "most risky", which individuals violate the most policies, which lines of business are most exposed to leaks or extrusions.

To answer such questions, the UBA platform 500 can map into organizational aspects and treat users and groups as first-class citizens in the system. A possible mapping of users and groups to incidents or events might be a tagging mechanism where events or incidents will be tagged with relevant users and groups. A correlation between a user or groups or a user risk score and group risk score to the relevant incidents or events will be possible.

The UBA platform 500 may address aspects of current UBA models that may require some adjustment to better fit UBA patterns by addressing events as a separate flow and providing a unified flow, bases on events.

An incident may be the central user-facing item that users interact with. While an incident may direct a user's attention to a piece of data, such as an entity, the UBA platform 500 may enable the model to point to one or more events.

Any queries or views that relate to incidents may be unified to include incidents that direct the attention of a user to one entity, one event or more than one event. The platform 500 may include different user interfaces to enable a user to interact with one entity, one event and more than one event.

The platform 500 may provide a unified flow, based on events. When the platform 500 provides a unified flow, based on events, the platform 500 may be event-driven rather than state-driven. In such a case, the platform 500 architecture, data that may be exposed and collected as snapshot information due to API, vendor or commercial limitations may be translated and injected into a unified event stream that may be inspected by all interested parties, for example, it may be used in a Policy Engine for policy violations. Incidents may be based off of events, which may relate to specific states of files, documents or other pieces of data.

In this scenario, files may not be viewed as having a specific state. Events may be present that may relate to a mutation in a file that may result in different content to a file following a mutation.

This model may allow the platform 500 to link an incident to multiple events, enhancing the customer's ability to analyze and understand its underpinnings. For example, a personally identifiable information (PII) extraction incident may be linked to an event of a user sharing a file, as well as to an event of a user adding SSNs into the same file, in the order they occurred.

Modeling data as being mutated in an event stream may also allow the platform 500 to support forensic fine-grained point-in-time traversal and investigation of customer data, rather than a periodic, time-machine-like view of the data that may hide sophisticated breaches, such as involving attackers that may cover their tracks well.

Different incidents may require the UBA platform 500 to maintain or display different fields. For example, a suspected login attempt may include probabilistic statements, while a DLP incident may include the search term found.

Incidents may have data linked to them in a direct to the incident 1:1 manner and incidents may have data linked to them indirectly via incident detail rows in an n: 1 connection. Incidents that may have data linked to them in a direct to the incident 1:1 manner may support lifecycle management and may include data related to when the event started, the organization identifier of the event, the current state of the event, severity of the event and the like. Incidents that may have data linked to them indirectly via incident detail rows in an n:1 connection may relate to other data in the platform 500 such as users, events, assets and the like.

The platform 500 may handle many types of incidents. Each type of incident may have different interfaces for configuring, reviewing and investigating the incident. For example, an over-sharing incident may result in the customer needing to know "who can access this", "who shared to whom", "who actually uses this". These common tasks or queries may be integrated into incident type-specific forensic tools and panes. Such questions may be asked via a user interface implementation or through APIs.

Many the platform 500 policies may require looking at multiple events and pieces of content over time. The platform 500 may fetch vendor data and cache it locally, as temporal and spatial locality may be required to support policies that may require looking at multiple events and pieces of content over time. The platform 500 may include caches. Caches may snapshot external data and internal objects.

The UBA platform 500 may support several use-cases for User Behavior Analytics (UBA) onto required supporting data, using the processing pipeline and suggested implementation described above.

Support of UBA use cases may include mapping elements. Mapping elements may include a use case definition, data requirements, implementation considerations and special considerations, values and challenges. A use case definition for the UBA platform 500 may include scenario description(s) as would be phrased by customers of 500, detection type, levels of user control and configuration, an ability to deliver as a pre-canned policy or a policy that always requires customer setup, whether or not the use case requires ongoing or near real time detection, relevant response actions and an impact of cross-source application for the use case (for example would there be special value to correlate data from separate vendors?). Detection types may include explicit rule detection, anomaly detection, matching to pattern detection and the like. Levels of user control and configuration may include required levels of user control and configuration and desired levels of user configuration (for example does a user case only allow users to turn a use case on and off or does a use case also allow users to set other parameters applicable to the use case?).

Use cases may include data requirements. Use case data requirements may include event log data required to support the use case, auxiliary data, for example a list of users in an organization that may be required to support the use case, a time window of data required (for example two days or two months and whether or not data enrichment processing is required).

Use cases may include implementation considerations. Implementation considerations may include a suggested analysis mode, suggested tools for processing and suggested data pipeline. A suggested analysis mode may be a discrete analysis mode, a streaming analysis mode, a batch/MapReduce analysis mode and the like.

Use cases may include value dimensions. Value dimensions may include a visualization value dimension, a risk value dimension, an adaptive value dimension, an education value dimension, a community value dimension, a forensics value dimension and a compliance value dimension.

User behavior analytics happens by collecting and analyzing event log data from various sources. The event log data can be roughly divided to these categories. Categories may include a login category, an activity category, a clickstream category, a resource access category, a resource sharing category, an admin activity category, a configuration category, a user management category and an application and API category. A login category may include but is not limited to login, failed login and logout events by a user or an application(program/machine). An activity category may include a full log of all activity performed by a user or an application(program/machine). A clickstream category may include a log of all user interface (UI) activity, such as pages and clicks, performed by a user. A resource access category may include resource access events such as create, delete, rename, edit, view and the like. A resource sharing category may include resource sharing events such as share, revoke share and access file through share events. An admin activity may include a log of admin actions. A configuration category may include a log of changes to organizational configuration, require multiple logins, allow external shares and changes to a domain name configuration can apply to user configuration changes enacted by end users. A user management category may include user management activities such as create, modify, delete, suspend user or group, add/remove user from group and change user role. An application and API category may include application authorization and activity data such as authorize, revoke, org-wide install, API calls and other activity data by app.

UBA use cases may include a compromised account use case, an unusual activity use case, a malicious applications use case, an inactive accounts use case, a crawler/bot activity use case and a collection and retention use case.

A compromised account use case may be based on access location and times. A compromised account use case may include scenarios. Scenarios may include a Login to an account during predefined hours (for example at night) and days (for example on weekends), a login from an unknown device, an activity anomaly (e.g., frequency anomalies, or access to a very sensitive item that is typically not used), a login to account from a location (for example a geoIP location, such as in a blacklist or not in a whitelist (for example, from China or Russia)), an activity in an account from two distant locations within a short timeframe (for example more than 500 miles apart with 1 hour), an activity from a tainted IP address (for example based on external IP reputation services), a manually identified IP address participating in breach, and/or a clickstream analysis scenario (which may identify different clickstreams patterns when an account is being used by a rogue user). Another scenario may be a change in frequency of login activity. Further to the above, identifying very sensitive data can be an effective way to generate a more accurate set of incidents (with fewer false positive events).

The detection type of a compromised account use case may be an explicit rules detection type. User control and configuration for a compromised account use case may be done on a per scenario basis and may provide a definition of off-hours and weekends, a geography whitelist / blacklist, for example by country, an ability to modify a threshold and an ability to indicate that user control and configuration is not required.

A compromised account use case may provide the ability to deliver the use case as a pre-canned use case for the activity, such as for tainted IP address and clickstream analysis scenarios. Other compromised account use cases may require customer setup. A compromised account use case may require real time detection.

Relevant Response Actions for all use case scenarios may include sending messages to an admin or other user to verify suspect activity as legitimate. Messages may be sent to an admin or other user via primary and secondary communications methods. A secondary communication method may be a short-messaging-service communication method. If suspect activity is not verified as legitimate, the response may be escalated by requiring step up authentication, session termination, suspending offending user accounts on the SaaS service and possibly suspending accounts of that user on SaaS organizations of other vendors.

Cross-vendor impact for a compromised account use case may be high. Cross-vendor impact for a compromised account use case may include detecting activity in account from two distant locations scenarios across vendors, for example a user logging in to SFDC from Boston and at same time the same user is logging in to Dropbox from Chicago, or leveraging compromised accounts detected on Google, for example, to perform response actions across vendors such as SFDC and Box, for example.

Detection of the Compromised Account scenarios may require recent activity and login trace data. Event Log Data for a compromised account use case may include activity and login trace, with location or ip address event log data.

Auxiliary data for a compromised account use case may include directory data to fully correlate users from different vendors; for example, an email address can be used for basic correlation. External IP reputation auxiliary data may be required for an activity from tainted IP address scenario.

A time window for a compromised account use case may be defined, such as up to 24 hours, up to one week, or more. Older data may not be used in detection of these scenarios. Older data may be used in other response actions.

Data enrichment for a compromised account use case may include geoIP data enrichment to extract location information and user lookup data enrichment to get full user account details.

Implementation considerations for a compromised account use case may include applying basic rules to a stream of activity events.

Analysis modes for activity in an account from various scenarios, such as the login to the account during predefined hours scenario, the login to account from location scenario and the activity from tainted IP address scenario may be detected in discrete processing (such as by a Policy Engine). The analysis mode for the scenario involving activity in an account from two distant locations may require either stream processing or augmentation of discrete processing with basic state (memory) managed in, for example, Redis.

An unusual activity use case may be based on an unusual location, unusual hours and an unusual activity pattern, as well as any of the many other activity types noted throughout this disclosure. An unusual activity use case may include various scenarios. Unusual activity use case scenarios may include login from an unusual location scenario, for example for a non-traveling user, login at unusual hours or days of week scenario, login from a new device, and an unusual activity pattern for a user scenario. Examples of an unusual activity pattern for a user scenario may include a scenario where many file moves are detected, where ordinarily many file moves are rare, where many files that are not usually accessed are downloaded or viewed, and/or unusual sharing activity.

Detection for an unusual activity use case may be a statistical anomaly / machine learning detection type. User control and configuration for an unusual activity use case may be low and may include providing a whitelist of locations / times for which detection is turned off, exempt travelling users, and/or a control threshold for flagging "unusual" activity.

An unusual activity use case may include the ability to deliver the use case as a pre-canned use case. An unusual activity use case may be delivered without configuration. An unusual activity use case may require real time detection.

Relevant response actions for all scenarios of an unusual activity use case may include sending messages to an admin or other user to verify suspect activity as legitimate. Verification of an unusual activity pattern may include the use of a challenge phrase or step up authentication, as well as an indication of what suspect activity has been detected. If suspect activity is not verified as legitimate, the response may be escalated. The various actions noted above that indicate account compromise may be relevant for unusual activity use cases as well.

Cross-vendor impact of an unusual activity use case may include a baseline of activity, as well as detection, which may be made cross-vendor, to derive a richer model than can be found within activity with respect to the platform of a single vendor.

Data requirements for the detection of the unusual activity scenarios may require recent activity and login trace data and historical activity trace data to establish a baseline.

Event log data for an unusual activity use case may include activity and login tracing, with location or ip address data as well as information about the device that has been used (type, managed or unmanned, etc...) or the program that initiated the activity.

Auxiliary data for an unusual activity may case may require directory data to fully correlate users from different vendors. Email addresses may be used for basic correlation.

The time window for an unusual activity use case may include a baseline time window of at least three months of data and a detection timeline that may be an ongoing/real-time activity trace.

Data enrichment for an unusual activity use case may include use of a geoIP to extract a location and user lookup to retrieve full user account details, for example if an event log only includes a raw user ID.

Implementation considerations for the detection of unusual activity scenarios may require statistical anomaly and/or machine learning tools, to create baselines against which ongoing activity may be compared. Baselines may also compare incoming events to a baseline model and flag outliers. Setting a baseline for the detection of unusual activity scenarios may be determined by historical activity patterns. Implementation considerations for the detection of unusual activity scenarios may also include clustering accounts to classes of common activity, rather than using per-account baseline. Implementation considerations for the detection of unusual activity scenarios may include a location and time/day baseline. A location and time/day baseline may include a very simple model, which may keep a set of all locations for user from a specified number of times, days and months. If new access outside of this set is detected an event may be flagged. Events may be saved only in ninetieth percentile, for example, and events may be flagged if a new event is detected outside of a radius from known set, known time or known day. Detection of unusual activity pattern scenarios may include activity pattern baselines. Activity pattern baselines may include basic patterns, for example patterns that include only the actions performed by a user. Activity pattern baselines may also include resources being accessed, such as action targets.

The analysis mode for the detection of an unusual activity use case may include detecting logins from unusual locations and logins at unusual hours or days of week scenarios or login from unusual devices, in discrete processing (such as by a policy engine), after a baseline is computed. Detection of unusual activity pattern for a user may require stateful processing, such as collecting a pattern of recent activity and comparing it to a baseline.

A malicious application use case may detect suspicious application activity. A malicious application use case may include scenarios. Malicious applications use case scenarios may include a spearphishing attack that lures multiple users to authorize a malicious app and may be detected by detecting many users installing the same app in a short timeframe. Malicious application use case scenarios may also include an authorized application displaying a suspicious activity. Suspicious activity may be excessive downloads of many resources, for example in an attempt to steal financial or IP information, excessive and/or risky sharing and self-propagation of an application. Malicious applications use case scenarios may also include application activity from a tainted IP address or an application directly tainted by an external reputation source.

Detection types for spearphishing attacks, authorized applications displaying suspicious activities and application activities from tainted IP addresses may be rule-based detection types.

User control and configuration for a malicious applications use case may include whitelisting apps that may be allowed to perform otherwise "dangerous" activities such as downloading everything, as well as setting a control threshold for flagging "suspicious" app activity.

A malicious activity use case scenario may be delivered without requiring configuration as a pre-canned use case. A malicious activity use case scenario may require real time detection and include relevant response actions. Relevant response actions may include sending a message to an admin or other user to verify an application is not malicious and escalate if an app is not verified as not malicious, revoking an app for a user or for all users, and banning an app for future installs unless the app is explicitly whitelisted, further integration with network security solution (like next generation firewalls (NGFW)) is possible to further block malicious apps. A malicious activity use case scenario may or may not have cross-vendor impact.

Data requirements to detect a malicious activity use case scenario may include application installation tracking or authorization tracking, tracking of API access and tracking of actions performed by apps, which may be included in regular activity tracking and may be needed to ensure that the activity was made by application and not made manually.

Event log data for a malicious activity use case scenario may include app install/ authorize trace event log data and app activity trace event log data. Auxiliary data for a malicious activity use case scenario may include app vendor information, for example from a marketplace, auxiliary data. A time window for a malicious activity use case scenario may include a time window of hours, a time window of days and the like. A malicious activity use case scenario may not require data enrichment.

Implementation considerations for handling a malicious (e.g., spearphishing) attack scenario may include detecting spikes in application authorization activity. Spikes in application authorization activity may be indicated by many installs of the same application, or many installs of several applications, which may be the same application disguised as several application listings, and more than a threshold number of application installs in a period of a few hours or a day, which may indicate either a successful spearphishing attempt or an effective application marketing push.

Implementation considerations for a scenario where an authorized application displays suspicious activity may include suspicious activity by an application indicating suspicious activity of a user. The tools for detection of implementation considerations for behavior by an authorized application may be based on quantity, for example an application that does too much may be suspect. Too much of a quantity may be indicated by too many downloads, too many sharing events and/or too many failed resource access attempts. The tools for detection or implementation considerations for an authorized application may use rule-based criteria. In addition application activity can be tracked through the target data or users it is trying to access. Focusing monitoring activity on sensitive targets is an effective method for quicker time to detection and reduction in false positives.

Implementation considerations for an application activity from a tainted IP address may be straightforward, such as using information from external reputation sources.

An analysis mode for a malicious activity use case scenario may include discrete processing with simple memory, for example a rate limit, or basic stream processing, such as streaming processing to accumulate quantitative thresholds to application activity.

It is also possible that application activity in event logs is not simple to identify, since in some cases there is not specific marking or the difference between activity events generating by a human for a given user account and activity events generated by a program for that account. Techniques such as statistical analysis, location profiling, and machine learning may be used to characterize and distinguish human events from program events. This is in itself a valuable capability that helps with forensics and detection of compromises and malicious activity.

An inactive accounts use case may include flagging inactive accounts and accounts to de-provision. An inactive accounts use case may include various scenarios. Inactive accounts use case scenarios may include identifying that a user's account, such as on a SaaS organization or Paas/IaaS platform has no activity for a long period of time, such as six weeks, or that the only activity on a user's account is API activity. Inactive accounts use case scenarios may also include a scenario where after an account is inactive for some time, new activity is detected on the account. Inactive accounts use case scenarios may also include an orphan account scenario, where a user has left an organization but was not de-provisioned from all the applications of the organization.

Detection types for an inactive accounts use case may be a rules based. User control and configuration for an inactive accounts use case may allow tuning of an inactivity window. An inactive accounts use case may be delivered as a pre-canned use case without requiring configuration. An inactive accounts use case may not require real time detection or may require real time detection. Relevant response actions for an inactive accounts use case may include sending messages to an administrator about an inactive account, suspending an inactive account, sending messages to an admin about an orphan account and suspending an orphan account.

Cross-vendor impact of in an inactive accounts use case may compare activity and inactivity of users across vendors and detect suspension and de-provisioning on one vendor to trigger same suspension or de-provisioning activity on other vendors.

Data requirements for an inactive accounts use case may include detection of inactive accounts and may require user management log data as well as login and activity log data. Detection of orphan accounts may require user management log data and directory data for direct access to de-provisioning information.

Event log data for an inactive accounts use case may include user management data, login data and activity data. Auxiliary data for an inactive accounts use case may include directory data and external de-provisioning information. A time window for an inactive accounts use case may be weeks, for example. Data enrichment for an inactive accounts use case may not be required in some embodiments.

Inactive accounts may be detected using offline batch processes, such as MapReduce™ jobs on an activity stream to surface an account with zero or very small activity, including any activity or just manual activity, over a long timeframe. Detection of sudden activity in an inactive account, assuming the account was tagged by inactive account detection, may be a rule-based application for incoming activity events.

Orphan accounts may be detected using offline batch jobs and may rely on direct information about a de-provisioned user where the account was not suspended or removed for the de-provisioned user or when an account was suspended or removed on the system of one vendor; however, the account or account of the de-provisioned user may not have been suspended or removed on the systems of other vendors. Offline and batch, as well as discrete processing, may be used to detect a scenario where after an account is inactive for some time new activity is detected on the account.

Some vendors allow the system to retrieve that last activity time (such as login) time for a user. This can allow the system to detect an activity immediately.

A crawler/bot activity use case may detect non-human activity performed, such as via an API or via a non-API interface. A crawler/bot activity use case may include scenarios such as a non-API activity performed by a script or other non-human source scenario.

The detection of a crawler/bot activity may include explicit rules detection and statistical model detection. User control and configuration for a crawler/bot activity use case may include tuning a detection threshold. A crawler/bot activity use case may be delivered as a pre-canned use case, not requiring configuration. A crawler/bot activity use case may use real time detection. Relevant response actions for a crawler/bot activity use case may include sending a message to an admin or other user to verify whether suspect activity is legitimate. If suspect activity is not validated as legitimate, a response action may be escalated. In case of an unusual activity pattern, there may be a challenge to phrase the message saying what has been detected or step up authentication. A crawler/bot activity use case may or may not have cross-vendor impact.

Data Requirements for a crawler/bot activity use case may include a recent activity trace and may rely mainly on the time distribution of activity events. Event Log Data for a crawler/bot activity use case may include activity event log data and clickstream event log data. A crawler/bot activity use case may not require auxiliary data. A time window for a crawler/bot activity use case may be time window of some number of hours, for example. A crawler/bot activity use case may or may not use data enrichment.

Detection of crawler/bot activity may leverage the time distribution of events and may be implemented by increasingly complex approaches. Approaches may include a "too fast" approach, a uniform time between events approach and a Bayesian or HMM model approach. A "too fast" approach may detect activity events for a user at a rate that is too high to be generated by a human, for example more than ten actions per minute, sustained over a period of time. A uniform time between events approach may detect the same or a very similar time difference between consecutive actions, for example one action exactly every twenty seconds. A Bayesian or HMM model approach may take into account features such as a rate of actions, types of actions and a failure rate. An analysis mode for a crawler/bot activity use case may include stream processing with constant memory/session and discrete processing against models for statistical models.

A crawler/bot activity use case may include use cases that are focused on a single IP address or small IP subnet, capturing bot activity that is spread across multiple accounts.

A crawler/bot activity use case may include discerning log entries that may correspond to direct user action from "derived" events. For example, a user that deletes a folder (one action) may induce a large number of delete events for all the affected files. Clickstream data may be to derive events when a large number of delete events may exist. In a crawler/bot activity use case, statistical models need to be created in advance and not per customer and may be substantially different across data sources, for example different statistical models may be used for Google and Dropbox.

A collection and retention use case may collect and retain event log data from SaaS vendors. Enterprises may require access to raw event log data made available by SaaS vendors for long periods dictated by compliance, forensics and vaulting requirements.

User control and configuration for a collection and retention use case may include controlling which data sources to vault and controlling what data needs to be vaulted for longer periods, such as administrator actions.

A collection and retention use case may be delivered as a pre-canned use case that does not require configuration. A collection and retention use case may or may not use real time detection.

Data requirements for a collection and retention use case may include any available log data.

Event log data for a collection and retention use case may include any event log data. A collection and retention use case may or may not require auxiliary data in different embodiments. The time window for a collection and retention use case may be months or years, for example. Data enrichment may not be required for a collection and retention use case, as raw data may be saved.

A data collection and retention use case may deal mainly with the actual storage of data in a format that is manageable by providing separation between customers, an ability to purge old data efficiently, an ability to restore and deliver to customer data from requested period and an ability to track costs for storage and restore activities, for example.

A data collection and retention use case may include a selective retention tier which may allow user to save data for varying periods, depending on a source of data, an action or an event type; for example, a clickstream may be saved for six months, but admin actions may be saved for three years. Activities of an actor, for example a privileged user, may be saved longer. Activities relating to a resource may be saved longer. Activities associated with users, resources, or IP addresses that were later detected to hold higher risk may be saved longer than they would otherwise be saved.

In a collection and retention use case, it may be possible to save data directly to customer-owned storage. In collection and retention use case, storage and collections costs may be recovered.

Additional UBA use cases may include a orphan files use case, where files may be owned by external, inactive, suspended, or de-provisioned users, an inactive files use case, where files may not be accessed or even made accessible to anyone, and inactive applications use case, where applications that are authorized but not doing any activity for a given user are detected. Use cases may also include a cross-account suspicious activity from single source use case, where the same IP may be in use by multiple users.

Additional UBA use cases may also include cases involving multiple failed login attempts, where target accounts and source IP addresses may be marked as risky, cases where duplicate accounts are established for a user using the same email address or other identifier, and cases of inactive sharing, where there are sharing events that are not being actively accessed at all, or that are being accessed by specific collaborators that have been removed or suspended. Use cases can include cases involving outdated browsers or native clients, where users accessing Dropbox using an old web browser, or not having an up to date Dropbox sync client, may be detected.

Use cases may include bandwidth monitoring to detect unusually large downloads or uploads, based on a number of files or total size. Uses cases may address excessive sharing, self-sharing with personal emails, and/or the presence of many failed attempts to access resources (which may indicate a user searching for interesting data).

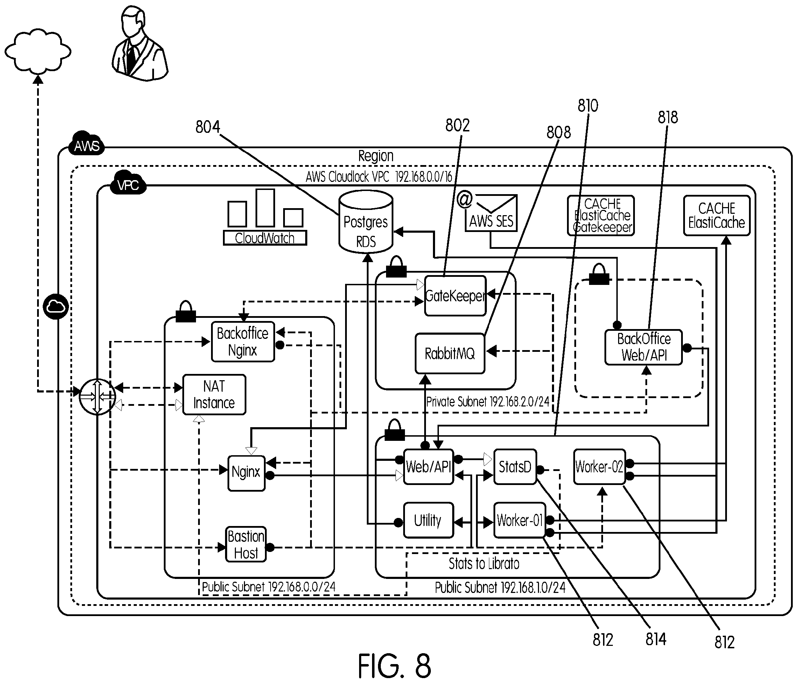

Fig. 8 depicts an architecture and infrastructure for deployment of the CSF 100 on a cloud, in this case an Amazon® cloud that uses Amazon Web Services (AWS). The CSF 100 may be deployed in other cloud environments with variations that would be understood by one of ordinary skill in the art. Access to the CSF 100 by users or API calls is authenticated and controlled via a logical component (referred to in some cases as a gatekeeper 802) that can verify identities of users and API call generators. Once a request is approved by a gatekeeper 802 it may be routed to a web/API server that will either retrieve the requested data from persisted storage 804 (e.g., Postgres SQL or other storage mediums) or will issue a command for the CSF 100 to execute some action such as start a scan or perform some batch operation (like encrypt files). These actions are issued by the web/api server to a queuing mechanism 808 (currently implemented by rabbitMQ™), which in turn is routed to a relevant worker node cluster 810. A worker node cluster 810 can be comprised of one of more workers 812 and may be executing one or more of the core fabric services of the CSF 100. Services such as encryption, policy automation, content analysis, and the like may be accessed. Routing rules are defined in the queuing mechanism 808 that know which worker cluster a command should be directed to. Each worker cluster 810 may report statistics about its operation through a statistics collection agent 814 (e.g., statsd™) and then these stats are sent to a stats collection framework (currently librato). The overall deployment of the CSF 100 may also contain additional components such as the Backoffice 818, which may comprise the central administration system for the CSF 100, a cache system (e.g., AWS elasticache™), email system (AWS SES™), central monitoring (AWS cloudwatch™) and the like. In addition, the deployment of the CSF 100 may be configured in such a way where subsystems are separated into different virtual networks (e.g., using AWS VPC™) and external access may be routed via NAT and Web servers (e.g., Nginx™). There may also be a 'jump box' setup for system administrators to securely connect to manage the system.

In embodiments, the methods and systems disclosed herein may include one or more modules, associated with or as part of a cloud security fabric, for providing information security.

In embodiments, the methods and systems disclosed herein may include one or more modules, associated with or as part of a cloud security fabric, for providing threat management.

In embodiments, the methods and systems disclosed herein may include one or more modules, associated with or as part of a cloud security fabric, for providing configuration management 134. A configuration management module 134 of the CSF 100 may allow users to take configuration information (such as settings used by administrators in connection with various security-related applications) and configure services and modules of the CSF 100 or of various platforms and enterprise resources with which the CSF 100 interacts through the APIs described throughout this disclosure. One objective of the configuration management module 134 is to audit configurations used by various parties, such as users of the CSF 100, in connection with a wide range of the solutions enabled by, enhanced, or extended by the CSF 100. A host of the CSF 100 can show differences among those configurations and offer suggestions as to best practices to a community of users, based on how most users, the most successful users, or the like have configured their various solutions. Such insight may be provided on an anonymous, aggregated basis, so that the community benefits without any particular user's configurations being shared with others.

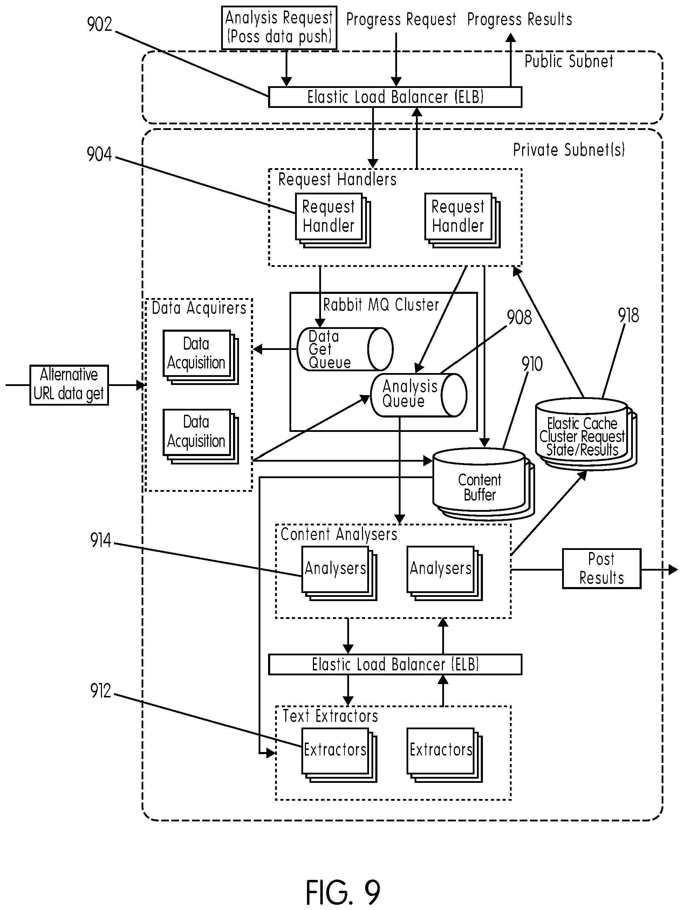

In embodiments, the methods and systems disclosed herein may include one or more modules, associated with or as part of a cloud security fabric, for providing content inspection and analysis 110 (including metadata) (referred to herein in some cases ad content analysis). Referring to Fig. 9, architectural components and data flows for a content analysis service are disclosed, which may be housed in a cloud computing environment, such as the AWS™ environment of Amazon®. These components yield end-to-end textual content analysis and similar components can be deployed in connection with other content types. It should be noted that content analysis services (referred to herein in some cases as Content Analysis as a Service (CaaS), content classification services (CCS) or the like) may be undertaken on a file level or may be applied on a block level. It may also be extended to analyzing binaries and may use techniques such as fingerprinting.

In embodiments, classification services may provide a number of benefits and capabilities, including scalability, extensibility, robustness, avoidance of single points of failure, processing traceability, flexibility, quality of service (QoS), system behavior monitoring, processing efficiency, and componentization. As to scalability, the system is able to scale to tackle very demanding requests at high volume. Requests could be large, or small and frequent. As to extensibility, various configuration options are available, including domain, role, and user configuration on the server side. For example, configuration may include organization-specific bloom filters, compliance policies based on user roles, and the like. The methods and systems may enable other capabilities such as bloom filters and fingerprinting. The system may include various extractors, such as tika™, outside in™, keyview™ and extractors invoked over remote API calls. The system may be highly robust, with reliable components with robustness to error conditions. As constructed, no architectural component can cause system failure (i.e., there is no single point of failure). The methods and systems may include the ability to understand the processing pipeline a content analysis request has gone through, such as by observing logs, thereby providing traceability. The methods and systems are flexible, such as enabling alternative design choices to be made at a later point without requiring a major re-work. Quality of service is assured by enabling resources to be allocated to tasks based on type or agreement level; for example, dedicated resources may be provided for premium customers, or analyzers may be dedicated to processing particular items, such as fields in Salesforce™. Quality of service may also be driven by the age of data (fresh versus old, or ongoing versus backfill), the size of files, and the like. The methods and systems may provide behavior monitoring, such as providing metrics as to items such as the load on the system, which enables the system behavior to be understood and intelligent decisions made as to its operation. Metrics may include ones that permit and support auto-scaling, metrics that allow an operator to deduce the cost of servicing a request, or the like. In embodiments, processing efficiency is enabled, such as providing high-speed throughput of analysis requests and effective routing for batches of requests. The methods and systems may enable the ability to short circuit an analysis, such as after a first match, and the ability to detect duplicates (such as to avoid re-scanning content), such as using MD5™. Componentization may include providing clearly defined APIs for each well-defined unit within the architecture.

Architectural components, as reflected in Fig. 9 may include a number of configured components, such as elastic load balancers (ELBs) 902, which may be used for distributing processing requests and failover. A storage facility, such as a temporary cache buffer, such as the S3 file blob store, may provide temporary storage of files to analyze but are not mandatory. Calls to the buffer may be asynchronous, so latency in the cache buffer and retrieval therefrom should not affect service levels adversely. The cache buffer may be always available and have lifecycle management features. The cache buffer may also store blooms, lists and customer-specific configurations. An alternative cache buffer may use DynamoDB™.

The architecture may include queuing capability for analysis tasks, such as enabled by RabbitMQ™. This may be backed by an elastic cache, such as ElasticCache™, for task state monitoring. The elastic cache may provide a content analysis task state and cache results.

Various processes may be provided in connection with the architecture of Fig. 9. These may include a request handler 904, such as enabled by Gunicorn™ as a set of managed Python processes that are responsible for taking and responding to requests. A request may take a form such as "analyze file/text/batch" and may get status/results of analysis. The request handler may add an analysis request to a queue 908 with metadata and may store data to analyze in the content buffer 910. The request handler 904 may poll the elastic cache 910 for analysis progress, returning the current state and the results. The request handler 904 may also throttle requests, such as based on the size of a queue of analysis requests.

The components and/or processes may include various extractors 912, such as Java processes that may extract text from files to be analyzed. This may include, for example, the capability to decompress/explode compress filed, such as Zip™ files. This processing may be stateful. For example, such files might be processed based on various criteria, such as file names, metadata, or the like. The extractors 912 may comprise a parser, such as an Apache Tikka™ parser, Java components, and an interface, which may be a REST interface. A request may parse text, such as from a file or block from a given cache buffer location. The extractor may obtain files from the content buffer 910, extract text from files or blocks, and return extracted text, such as to analyzers.

Components and/or processes of the architecture may include various analyzers 914, which may comprise python processes that analyze content for items of interest or Java, C or other object-oriented programming modules. The analyzer may call on capabilities that are housed in different processes/libraries, local or remote. An example can be processes that are running on Google App Engine™ system. The analyzers may pull tasks off of the analysis task queue 908, which may be populated by the request handler 904. The analyzer(s) 914 may be used for various purposes, such as regulatory content analysis, list analysis (including custom lists), bloom filtering, text or binary fingerprinting and the like. In embodiments, a regular expression (regex) module may be embodied in C language code. Embodiments may include use of a C language extension, such as the python regex extension. In embodiments, pre- and post-processing may need to happen to enable analysis, which may be embodied, by way of example, as C language extensions. Depending on demands on the system and the performance requirements, it may be desirable for some embodiments to implement a custom solution to provide greater power and analytical capability.

An analyzer 914 may make requests for text extraction to the extractors 912, update the elastic cache 918 with changes in requests states, drive analysis, perform content analysis, and write analysis results, such as to the elastic cache request entry.

Analyzers 914 may be arranged into banks, which may service particular request types and/or be designed to serve particular requests with priority. For example it may be advantageous to have analyzers 914 dedicated to small text analysis. Similarly, requests from 'premium tier' customers could be serviced with priority.

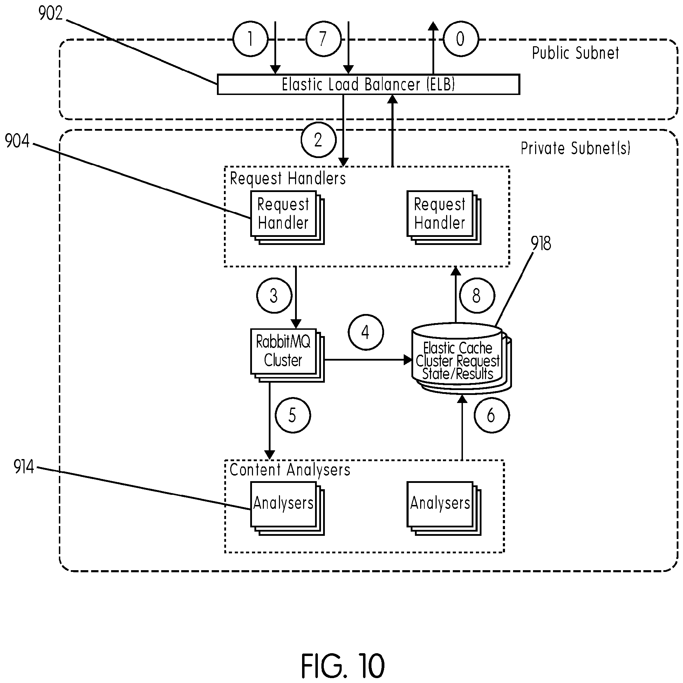

Content classification services may be used for a wide range of use cases, some of which are described below. Referring to Fig. 10, one use case involves a request for analysis of a given item of text. A client may pass textual content to the service textural for analysis. In this scenario there may be no need to fetch the content, as it may be provided or pushed to the system, and there may be no need to extract or use a cache buffer for temporary caching. Given the text may be small (this may be optionally constrained or enforced) the text may be cached on the analysis queue while processing is waited upon, or stored, with a pointer or reference being placed in the queue. As reflected in Fig. 10, text analysis may follow a flow involving the following steps: 1) a content analysis request is posted by client (a request provides text to analyze); 2) a request is directed to the request handler 904; 3) the request handler 904 places the request and the text in the queue; 4) the state of progress for the request is persisted to the elastic cache; 5) the analyzer takes the request from the queue (including the text); 6) the text is analyzed and results are pushed to the elastic cache 918; 7) a content analysis progress request is received from the client; 8) progress and results are retrieved from the cache by the request handler 904; and 9) progress and results are returned to the client.

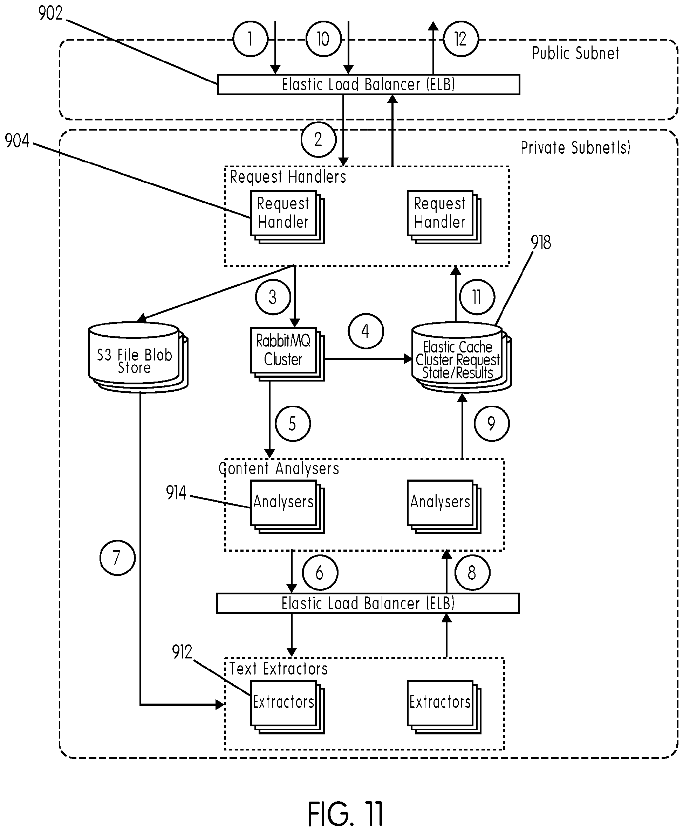

Referring to Fig.11, in another use case, the systems and methods may be used to analyze a particular file. In this case the client passes a file to be analyzed. The file could be large and may require temporary storage prior to text extraction. A cache buffer, such as S3™, may be a good file cache solution. First, the content analysis request is posed by a client. The request is then directed to a request handler. The handler process then places the content blob into the cache buffer and adds the analysis task to the queue. The state of progress of the request is persisted to the elastic cache. The analyzer takes a requests from the queue, requests text extraction from the extractors, and updates the state of the request. The extractor retrieves the blob of content from the cache buffer and extracts text, then sends the text to the analyzer. The analyzer analyzes the content and sends it to the elastic cache. When a content analysis progress request is received from the client, the progress and/or results are taken by the request handler and returned to the client.

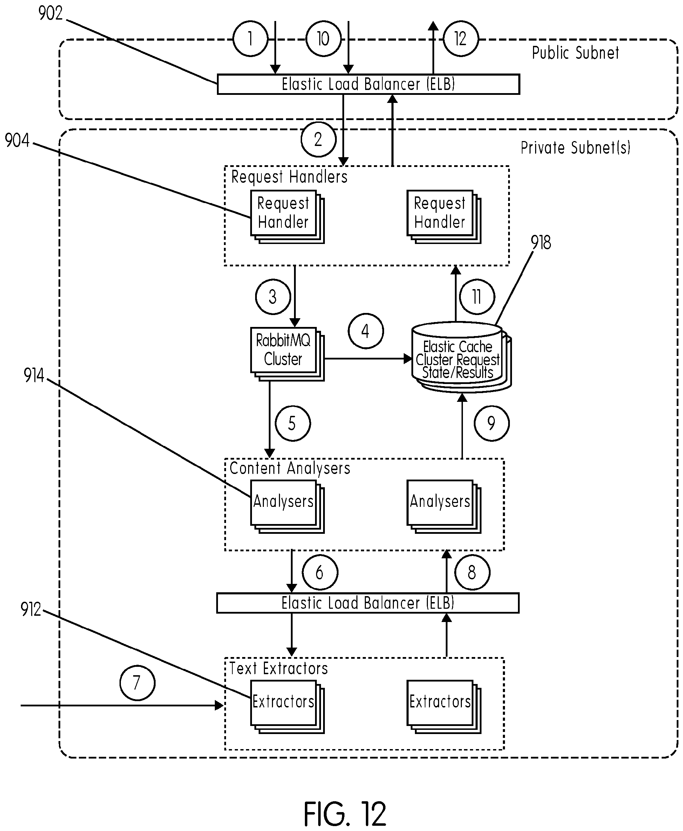

Referring to Fig. 12, another use case may involve analyzing a file at a location. Storing user content even temporarily may not be permitted or desired in some situations, such as where fear of exfiltration is great. Processing of content in this context may have to be conducted in memory, and content may need to be retrieved by the analyzers/extractors as and when necessary. In this case the client may pass a reference to the content in the analysis request, along with credentials to obtain the content. In such a case, a content analysis request may be posed by the client, which may include a reference to the content location and may include access credentials, such as in a header. The request may be directed to the request handler, which may place the request and the access credentials (optionally encrypted) in the queue. The state of progress of the request may be persisted to a storage facility, such as the elastic cache 918. The analyzer may take the request from the queue, request extraction from the extractors, and update the state of the request. The extractor may retrieve the blob of content from the referenced external source (possibly using access credentials) and extracts the text. The extracted result and content may be sent to the analyzer. Once analyzed by the analyzer, the text and the results may be pushed to the elastic cache. When a progress request is received from the client (or upon a schedule), the progress and/or results may be retrieved from the cache by the request handler and returned to the client.

In embodiments, an alternative flow may be provided, in which the request handler may pull the content, such as by performing a content 'get' as an initial operation, and may store in the cache buffer, otherwise operating as noted above for the case of analyzing a file. This solves the use case where the client doesn't want to be responsible for the download (perhaps for bandwidth reasons) while enabling good throughput. In some cases content might be cached in whole on the server, which may raise concerns in some situations, although a cache buffer like S3™ may be provided with various security options, and the data may be store in an encrypted form to alleviate some of the concern. Also, in some embodiments content may be cached in RAM without being saved to a disk on the server, which may reduce exposure.

In embodiments, if 'gets' can take a long time, then they may be best handled by a discrete 'content get' task and queue. The 'get' task could be performed prior to the analysis task being created, or, if there is filtering on content types, it is an option for the analyzer to kick off the get task.

In the above scenarios the client is noted as being responsible for polling the content analysis service to obtain progress information and the results of a request. This is not always the most desirable option. For example, elements of the CSF 100, such as the policy automation engine 116, may benefit from a more direct mechanism in order to be responsive. As such the service may return results to a specified endpoint (e.g. a URI post) or an external queue, such as on a predetermined schedule. This is represented in Fig. 9 by the 'results' arrow that extends from the analyzer outside of the subnet.

The configuration for the result destination may initially be passed in as part of the request or may be a system configuration that pivots on the request origin. Such settings may be specified in a configuration file that is distributed to or accessible, such as by various analyzers.

The examples above illustrate processes for analyzing a file, such as a pdf. Other types of content analysis request are envisaged, such as files, where text extraction is required, text (where no extraction is needed), text fields or snippets (where no extraction is needed and the cache buffer may not be needed, as small amounts may be stored in queue instead before processing), field groups (such as collections of fields defined in a schema such as a JSON schema, where text content extraction may be needed and parsing may be required by the extractor), file batches (such as a collection of files submitted in a zip file or a batch as described below), and or content references (such as where a client passes a reference to a file location (where an extractor may obtain the content from the location and extract the text, a file, an object, a database record, or the like.

Groups of field content can easily be passed in a single content analysis request, using a json structure, such as for handling batches of content. If the client has compression capabilities, then processing a batch of files can be performed through a content analysis request on a ZIP. For greater control and in circumstances when ZIP type compression isn't suitable, the systems and methods may use a process, such as reflected in the following steps, whereby the client adds items to a bucket and the bucket is submitted for processing. First the client may pose a bucket get request. The request handler may create a (bulk) request, such as in JSON, in the elastic cache. The request handler may return a bucket resource identifier (requested). The client may request the file added into the bucket. The request handler may place the content blob in the cache buffer. The request handler may update the elastic cache request. These steps may be repeated until the bucket is returned full or the client is ready to submit a content analysis request. Subsequently, a content analysis request may be posed by the client, after which the request handler may add the analysis task to the queue. The analyzer may add multiple analysis tasks to a queue, such as one entry in the elastic cache per file (or other unit of content, such as a post, an object, or the like). From that point each analysis task may be handled as noted in the scenarios noted above for single requests. Once all are complete, the bucket of results may be returned to the client when analysis is complete. In embodiments, to ease bandwidth requirements, bucketing may be offered through a client library.

In embodiments, it may be desirable to provide customers with the ability to modify out of the box content analysis configurations, and provide configuration for specific users and groups. This may be in the form of bloom filters and custom word lists, or it may involve complex analysis with policies to scan custom data types, making use of meta data as well as content and other techniques.

Such a custom configuration may be made directly accessible to the analyzer 914 processes and in part or whole loaded into cached memory. This type of configuration could either be stored, such as in the cache buffer (e.g., S3™ or DynamoDB™), for loading and use. Fig. 9 contains reference to this in the 'Specific Configuration' component. A publisher/subscriber method may be followed, so that analyzers are aware of updates to configuration (pertinent to them) for swapping in as needed. Updates and notification may be rolled out by a central administrative process/mechanism. This notification pattern could be served via a queue, optionally based on topics.

As noted above, extractors are optionally placed behind an elastic load balancer 902 (ELB) and may be called from the content analyzer 914 process. A number of benefits arise from this configuration, such as that: analysis is typically the first task of all requests, as this decides whether an extraction request is necessary; the extraction process can return text which could be of significant size, not suitable for queue storage; extraction errors can be reported and handled by the analyzer; the analyzer can spawn many extraction requests directly which may be desirable when processing zip files for example; and with the analysis process driving all aspects of request the process can be made easily traceable in log files.

Decoupling extraction with queues has benefits, but may also introduce complexity and drawbacks. It remains an option should placing the extractors behind an ELB be unsatisfactory in some situations.

An example of a cache entry for a content analysis request illustrates a two-file batch request that is partially complete. In embodiments, multiple analysis tasks may update the same entry:

```
       Key = RequestID
       Value=
       {
              "json_version": "1.0"
              "request_id": "1234",
              "content_type": "file",
              "batch": true,
              "submit_time": "12:14:45 DD-MM-YYYY",
              "num_items": 2,
              "num_items_complete": 1,
              "status": "processing",
              "items": [
                     {
                           "id": 1,
                           "fileid": "mydocument.docx",
                           "meta": [{"size_kb": "120"}],
                           "status": "waiting_extract",
                     },
                     {"id": 2,
                           "fileid": "azipfile.zip/myotherdocument.docx",
                           "meta": [{"size_kb": "124"}],
                           "status": "success_matched",
                           "results": <match_json>
                     }
              ]
       }
```

In embodiments, it is may be desirable to understand how the system is performing, so that it may be tuned to be more efficient and produce a better quality of service. This may include various monitoring modules, services and actions. Monitoring may be undertaken with respect to the analyzers (e.g., determining analyzer queue length, how many and which analyzers are in use at a given time, determining average time spent analyzing content by content type, determining content types, and determining extracted bytes. Monitoring of extractors may include monitoring the latency before an extract request is served, determining how many and which of the extractors are in use at any point in time, and determining the average time spent extracting content types, content bytes and the like. Monitoring requests may include tracking average request times, such as by byte, by content type, or the like. Monitoring of costs may include where costs are occurring and how the system can be made more efficient.

Based on monitoring, various actions may be undertaken, such as increasing the number of analyzers or extractors, modifying routing to analyzers or extractors (such as sending specific content to specific analyzers or extractors or having priority queues based on a tier of service), and putting logic into analyzers, such as having content acquired, stored and process only when analysis is necessary or of very high priority.

In embodiments, the system may allow for independent software updates of extractors, analyzers and specific analyzing packages. It is also possible to run different versions of analyzer extractor packages in parallel (at the same time) to enable the validation of new versions by either replicating requests to new versions or routing portions of the request to the new versions.

Referring to Fig. 12, alternative architectures may be used for classification services, which may include in-line architectures that perform processing without requiring any storage of content and buffering architectures that do involve storing of content by the host of the classification services.

In embodiments, the methods and systems disclosed herein may include one or more modules, associated with or as part of a cloud security fabric, for providing contextual analysis 112.

Referring again to Fig. 1, in embodiments, the methods and systems disclosed herein may include one or more modules, associated with or as part of a cloud security fabric, for providing behavior analysis and modeling 114 (e.g., for identifying suspicious logins from geographies, access patterns and other information obtained from behavioral modeling).

In embodiments, the methods and systems disclosed herein may include one or more modules, associated with or as part of a cloud security fabric, for providing configuration management.

In embodiments, the methods and systems disclosed herein may include one or more modules, associated with or as part of a cloud security fabric, for providing threat management.

In embodiments, the methods and systems disclosed herein may include one or more modules, associated with or as part of a cloud security fabric, for providing global policy creation and policy automation 116 (such as enabling management of work flows and implementing various rules, such as enabled by a rules engine, about taking action in the enterprise environment (including any cloud)). Thus, in embodiments, the CSF 100 may include a global policy management and automation engine, referred to herein in some cases as the policy automation engine 116, which, among other things, can allow users, such as enterprises, to create, deploy, manage and execute policies of an enterprise in a centralized, consistent manner, across the disparate cloud platforms used the users of an enterprise policy management across all cloud platforms.

Among other things, the policy automation engine 116 can automatically enhance the quality and ease of policy definition through the benefits exchanged among a community of users who are defining similar policies, such as multiple clients of the host of the CSF 100. In embodiments, rules may be developed using machine learning, or by human-assisted machine learning, rather than being entirely configured by human users.

The policy automation engine 116 may be accessed via the various APIs, including policy automation engine 116 APIs, as with other modules and services of the CSF 100. As with other services and modules of the CSF 100, the policy automation engine 116 may have one or more developer APIs for policies, which may, among other things, a) allow for customers to streamline and automate the update of policies; b) enrich CSF 100 policies from on premise or DLP systems or from platform capabilities (such as basic policies configured natively in Google™ or Salesforce™ platforms); c) the ability to provide an external source for additional criteria to evaluate with respect to application of a policy; and d) the ability to retrieve from an external source additional metadata about an entity. Thus, the policy automation engine 116 can be used as a service to evaluate various entities and with which to build security-related policy workflows.

The policy automation engine 116 may allow users to define criteria that are used in polices, such as detection criteria, and to define response actions. These and other parameters may defined in a generalized language that abstracts the detail as to how a policy is applied in a given cloud environment, allowing applicability across multiple platforms based on a canonical representation of a policy that is then translated into an environment-appropriate form for each environment, and through policy automation, implemented consistently across the different platforms. Policies can be used to manage detected exposures, to address and respond to user behavior (such as based on location, time range, and frequency characteristics), to deal with ownership of data, to deal with allowed and banned applications, and for a wide range of other purposes. As a result, an enterprise user, such as a data privacy officer, security operation, legal department, or other party, can define a policy one time and have that policy applied, in an automated way, in each environment that is used by the users of the enterprise. For example, a user may want to apply a consistent policy across the organization and all of its cloud-based applications with respect to personally identifiable information (PII), PCI, HIPPA-regulated information, intellectual property, and other sensitive types of data.

Thus, provided herein are methods and systems for policy creation and automated, global implementation, referred to collectively in some cases herein as context permits, as a policy automation engine 116, which may be provided as a component of a cloud security fabric, for allowing unification of security-related policy across user work flows that use disparate cloud platforms and applications. This may include the ability to express policy in a standardized language (including based on dictionaries or libraries or other knowledge bases relating to or containing policies that are curated by the enterprise or that are ingested from third party sources). An enterprise can have the policy translated and deployed consistently, via the cloud security fabric 100, with respect to heterogeneous native platforms and applications.

In embodiments, the policy automation engine 116 may take serve as a platform for taking exposure criteria from third party platforms, such as for rapid onboarding of a set of policies of an enterprise. These may be policies developed in various policy languages and environments known to those of ordinary skill in the art, such as domain-specific languages that express policies appropriate for specific domains, such as ones relating to health care data, financial data, consumer data, or the like. In embodiments, the policy automation engine 116 may query the APIs of a platform, such as a particular cloud platform, to determine what configuration of policy is available on the platform. The policy automation engine 116 may then generate a user interface that reflects the available criteria (e.g., exposure criteria) that are available for that platform, as well as information about how policies need to be expressed in order to be executed on the platform. A model for each platform may be associated with a centralized, or canonical model, such that translation may occur between a platform-specific policy model and a centralized model, such as translating the expression of a particular policy from an abstracted, or canonical representation, into an expression appropriate for the native environment. Among other things, this may remove the onus on the user to try to understand, or align with, the particular exposure criteria and languages of disparate platforms.

Among other things, the policy automation engine 116 allows the enterprise to elevate each platform used by its users to meet a minimum requirement as to policy. For example, the enterprise can create one policy and deploy it consistently, such as having the same PCI policy for all of the apps.

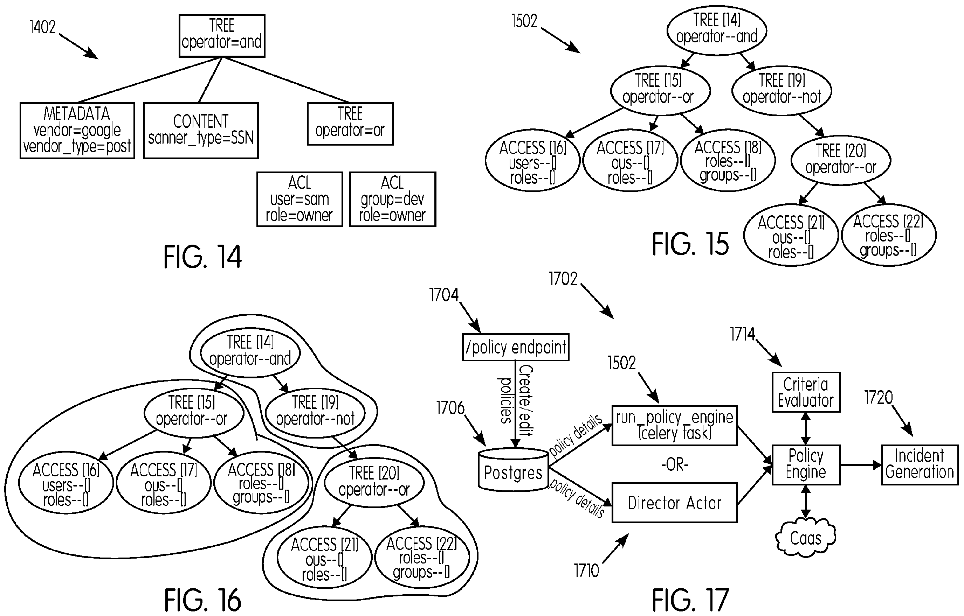

In embodiments, the design of the policy automation engine 116 may employ certain fundamental concepts, including the separation of the meaning of a policy and its implementation. These include, for example, separating backend criteria, user interface criteria and product criteria. Referring to Fig. 14, in embodiments, policies are expressed as trees 1402 of simple backend criteria combined with logical operators. A tree 1402 may capture a logical structure of the relationship of underlying criteria to policies that operate on the criteria. For example, the tree 1402 of Fig. 14 shows how one may flag Google Plus posts that involve social security numbers in a particular platform (in this case a Google™ platform) involving a user (Sam) or a group (dev).

In embodiments, entities may be sent to the policy automation engine 116 by an API, which in embodiments may be in the form of a REST API. A tree 1202 may be specified in the form of a nested JSON expression. Criteria may be grouped with logical operators as reflected in the expression.

As used herein in connection with the policy automation engine 116, the term "criteria" should be understood to encompass a range of meanings as context indicates. In embodiments, criteria are comprised of groups of evaluators, and a policy is expressed as a tree of one or more criteria with logical operators. In the backend of the policy automation engine 116, a particular criteria function may be a simple, generic function that implements some evaluator - an evaluation of data in the entity or ACL (such backend criteria are often referred to by a specific name, with initial capital letters in the disclosure below). Backend criteria are focused primarily on the type of data and the type of evaluation. In the front end, the term "criteria" may refer to a discrete component of policy configuration, for example the platform criteria or the ownership criteria related to a particular solution. As noted below in more detail, a front-end criterion may be implemented as a tree of backend criteria.

Criteria may be further classified as including content, context, application classification and behavior criteria. These are broad categories defining the types of evaluation one may perform. For example, content criteria may include any set of criteria that involve evaluation of the document or object content. Context criteria may include any set of criteria that involves the 'context' in which the document exists, such as platform, ownership, exposure, and permissions, which are all examples of context criteria. Behavior criteria may involve the evaluation of sequences of user behavior events, locations, time ranges, and other data relating to events involving user behavior.

Referring to Fig. 15, policy automation engine 116 requests may use facilities such as brew install graphviz or npadmin org <org> policy graph <pk> <output_file>].

In embodiments, starting the policy automation engine 116 may comprise initiating a task 1502, such as a run_policy_engine() task. Callable elements may be dot paths to functions. A list of serialized entity and access control lists (ACL) dicts may be included (entities_ and acls).

Criteria evaluators may be written in the policy automation engine 116, which are ideally generic (not platform dependent), simple and focused on data operations. Evaluator classes may inherit properties from a base criteria evaluator. As an example, an evaluator class "implement evaluate (data to evaluate)" may comprise a dict of an entity and an acl list.

The policy automation engine 116 may include user interface (UI) criteria, which may implement objects that extend a set of base criteria. These may include elements for returning objects with default settings for new UI criteria (e.g. "getDefaultUIComponent"), ones for parsing a policy API response into the object returned by the getDefaultUI Component (e.g., "getUIComponent"), ones for performing validation on user provided input (issuing exceptions as needed) (e.g., "validate"), one for formatting a request to save or update a policy (e.g., "finalize") and ones for parsing an API response to display a list of descriptions for a policy card (e.g., "getSummaryStrings"). A policy helper service (e.g., "policyHelperService") may provide a service for instantiating UICriteria objects and formatting responses. It may contain a set of criteria fingerprint regular expressions (regexes), such as used for routing criteria trees to UICriteria objects. Referring to Fig. 16, a tree may express criteria fingerprints, including various logical combinations (based on "or" and "and" operators), such as, in this example, relating to access with respect to users, groups and roles.

The policy automation engine 116 may comprise a service of the CSF 100. Policy templates may facilitate creation of new policies, and reference collections of policies may be stored for access by users of the policy automation engine 116. These may include collections of criteria that reference defined lists of strings. The policy automation engine 116 may be adapted to use, or translate to and from, various domain-specific languages.

Referring to Fig. 17, a block diagram 1702 shows an embodiment of a design of the policy automation engine 116 and the environment and systems with which it may be deployed. A policy endpoint 1704 creates or edits a policy (using any policy creation facility, such as of a platform or of the host of the CSF 100 or through the developer API) and delivers it to a policy storage facility 1706, such as a Postgres database. Policy details may be provided to a task 1502 (such as the "run_policy_engine" task) and/or to a director actor 1710, either of which in turn may provide input to the policy automation engine 116. The task 1502 and the director actor 1710 are thus two possible conduits for invoking a policy evaluation. Evaluation can happen as a result of various circumstances, such as resulting from a scan (involving the evaluation of criteria through the criteria evaluator 1714), or it can results from a directed task execution (in single or batch mode) to run one or more policies (which may involve either the task 1502 or the director actor 1710 in the embodiment depicted in Fig. 17.

Where it is used as a conduit, the run_policy_engine task 1502 takes as input a list of entities, ACLS, policies and a job ID. The task uses the job ID to get the list of policies from the database that apply to the job and passes the about the policies data to the policy automation engine 116. Where they are used as the conduit, the director actors 1710 run the policy automation engine 116 directly, such as passing relevant policies, entities and ACLs into the policy automation engine 116 during a perform () method of the actor.

In embodiments, the run_policy_engine task 1502 is used by a domain activity scanner for processing edit events. In other cases, scanning methods for particular platforms (such as SalesForce™, G+™, and Google Drive™) may involve actors of the platforms themselves that may run or interact with the policy automation engine directly. This is reflected by execution via the criteria evaluators 1714 applicable to those environments, rather than by the task 1502 or the director actor 1710.

The policy automation engine 116 may apply the policy in connection with input from or information exchanged with a criteria evaluator 1714 and may also interact with the content classification component of the CSF 100 or other content classifier, which is described elsewhere in this disclosure. In embodiments, the policy automation engine 116 may primarily consist of a class called PolicyEngine. In embodiments, the class may be instantiated with a list of policies, a URL generator function and a callback to generate content parts. An evaluate_policies() function may then perform the work of evaluating a given entity based on those policies. The policy automation engine 116 itself may perform two major tasks. First, it passes the object content or URL to the content classification service of the CSF 100 or other classifier for content scanning (if any content criteria are present in the policies). Matches from the CaaS, entity data, and ACL data are then passed to a set of CriteriaEvaluators 1714, which evaluate the data in the context of one or more criteria associated with each policy.

If an entity passes criteria for a given policy, it may be passed to a store_incident function, which determines if a new incident should be raised or an existing incident updated. Based on application of policies, the engine may generate incidents 1720, which may be ingested by the enterprise, such as through APIs, for handling in various incident response systems.

In embodiments, the policy automation engine 116 uses an appropriate abstraction and model to fit foreseeable policy criteria for various environments and domains. The policy automation engine 116 preferably supports extensions for new platforms without extensive modification. Simple custom field comparisons may be automatically accommodated, and more complex evaluations should also be facilitated. In embodiments, policies are managed (added, modified and deleted) through the API of the policy endpoint 1704. Policy definitions themselves are stored in the data facility 1706.

In embodiments, the user experience for a user of the policy automation engine 116 may be largely independent of the underlying implementation. For instance, a UI component to identify ownership criteria might actually comprise several different back-end components, e.g. "owned by group X AND NOT owned by user Y", or "accessible to OU M OR accessible to group N". The UI components and groupings will be chosen to facilitate user configuration, not necessarily to map onto the back-end representation.

In embodiments, any application may request a rules evaluation by providing a serialized rule and a serialized entity via an API. Management of policies (policy managersaving, editing, etc. of individual rules) is optionally orthogonal to policy evaluation (policy automation engine 116).

A wide range of criteria may be handled by the policy automation engine 116, including ones relating to collaboration security and including ones relating to the CSF 100 and related components. These may include criteria relating to ownership (performs an "OR" operation on the Users, organizational units (OUs), Groups, or Domains specified on the "owner" field (including with whitelists)); time based criteria (e.g., identify the documents which have/haven't been modified in a specified time period); data type criteria (e.g., identify docs, doc type, or sites or all); sharing criteria (e.g., performs an "OR" operation on the Users, organization units (OUs), Groups, or Domains specified (including with white lists); exposure criteria (public, external, domain wide exposure (also published, with link public/domain); content criteria (e.g., using a platform API call to get a filtered set of documents on which to run the rest of the policy criteria, such employing a filter that is a query built according to the query syntax of a given platform); compliance criteria (e.g., relating to SSN, credit card, regulations on content of documents ("improved content search") matching title, description, and content); ownership criteria (user, group, OU); and criteria relating to reports and exports of the system.

Creating new criteria for every new field and field type is challenging. New platforms may have custom entities with custom fields that need their own evaluations. Each entity being evaluated may have its own set of available criteria. Table 1 shows examples of types of criteria that may be managed by the policy automation engine 116, some of the types of data that typically correspond to such criteria, comparisons that may be undertaken, and examples that occur in certain platforms.

**Table 1**

| **Criteria** | **Type of Data** | **Comparisons** | **Example(s)** |
|---|---|---|---|
| Ownership, Sharing | user ID, group, domain OU profile (SF) | match inclusion (domain, group, OU) exception (whitelist) | groups, OUs may be labels |
| Platform | predefined (extensible) set | match, inclusion, exclusion | google, SalesForce, etc. |
| Last Modified Last Accessed Event timestamp | timestamp | before, after, between, time boxes | Use transient labels? |
| Data type | primitive type (string, predefined set) | match, regex, inclusion, exclusion | {"docs" ,"sites"," g +-posts"} |
| Accessibility level | extensible set | public, external, domain-wide, publishing, w/link | Some generic, some platform-specific definitions Accessibility level may be represented by a label |
| Content | keywords, pattern, predefined rules | content match | Content matches may be labels |
| Classification | tags/labels | inclusion/exclusion | May be derived from other criteria |
| Event location | IP address, other geolocation information (lat/lng) | inclusion/exclusion, distance | |
| Aggregate patterns | entity group | dataset evaluation using aggregate comparisons or other | e.g. too many logins within time period X, data |
| | | algorithms | point outliers applies to events OR incidents |
| | Frequency (count and time span) | count exceeded during timeframe | |
| | Count | threshold | |

Different types of objects handled by the policy automation engine 116 may have different available criteria. Entities may have metadata and classification criteria (such as explicit tagging independent of metadata). Users may have collaboration patterns and classification criteria (such as into groups). Applications may have classification criteria (such as by community, by organization, and the like). For example, if an administrator would like to configure a policy that identifies credit card numbers within objects that are externally accessible in Google and SalesForce DC, criteria may include entity (all), content (PCI), accessibility (customer-external) and platform criteria. As another example, if an administrator would like to configure a policy that identifies social security numbers within objects that are externally accessible in Google and SalesForce DC, the same criteria would be involved, except that the content criteria would involve social security numbers (SSN) rather than PCI. If an administrator would like to configure a policy that identifies specific keywords or patterns within objects in Google and SalesForce DC, then entity criteria, content criteria (regulatory) and platform criteria would be involved. Various configurations may thus involve various combinations of the criteria noted above, such as entity, content, accessibility, platform, geolocation, and time-based and other criteria. Many examples of policies may be contemplated. For example, among many others, an administrator may wish to activate a policy that identifies any app that has been banned by X% of the community of companies serviced by the host of the CSF 100; activate a geo-aware policy that identifies and surfaces any suspicious login activities (e.g., once a suspicious login is identified, the policy may raise an incident at the configured severity level); activate a policy that identifies any user who has "stagnant" files that have not been viewed or edited in 3/6/12 months; activate a policy that identifies a user who has newly exposed documents (such as to select multiple exposure levels that the policy should identify); identify any report export activities (e.g., identify reports that contain specific data, thereby making this into a data geo-aware policy); raise an incident if someone creates a field or resets the field-level permissions of a field so that it is editable by any user within the system; raise an incident if someone assigns a specific permission set to a user with a suspicious profile, such as a "chatter external user" profile; raise an incident if someone who is not a member of a specific operating unit creates a public post, such as on Google+; match N of M items (e.g., for HIPAA compliance); or raise an incident when a specific user or a non-admin user performs a report export. Note that profiles and permission sets may combine to determine overall access. Profiles may be shared across users, but each user may have a single profile. Permission sets expand the base access defined by a profile, and may be re-used among users.

In embodiments, each policy may have one or more actions designated for execution whenever a match is found. The first, simplest of these actions is email notification to an administrator or other party, but there many possible more complicated responses.

A policy automation engine 116 may be implemented in various embodiments, with factors to consider including minimal criteria encapsulation (what is the minimum logic required to encapsulate criteria), criteria combinations/aggregate criteria; persistence/serialization; ease of addition of new criteria; and implementation of custom criteria using generic building blocks (i.e., requiring no or minimal new development).

Implementation strategies for criteria evaluation associated with a policy automation engine 116 may vary depending on whether the work of evaluating the criteria is performed by a criteria object, or performed separately by a criteria evaluator. Regardless of where the evaluation occurs, the logic of policy evaluation may be similar. Where evaluation is performed by a separate evaluator, a unified interface for criteria evaluation may be implemented. An abstract class (e.g., BaseCriteriaEvaluator) may be constructed with a criteria dict, and evaluated with an entity and a list of ACLs. It may return a CriteriaResult object where the Boolean result is "true" if the criteria are met by the entity, and an object for matching (such as Match or SuspectMatch) contains metadata relevant to the criteria, or "None" if the criteria produce no metadata.

Logic for evaluating criteria may be implemented within a BaseCriteriaEvaluator and moved out of the evaluate_policies () function of the policy automation engine 116. This may simplify the logic of the evaluate_policies() function. Next, a binary expression tree may be implemented to evaluate the policy criteria. This tree may be stored in a policy extras column. The tree can be recursively evaluated using the specified operators and the results of the evaluated criteria to determine whether an incident should be raised.

In embodiments, an "OwnerCriteria" class may or may not be an independent class; if not, then an OwnerEvaluator class may be responsible for any additional serialization/deserialization logic required to extract criteria data from the generic base container.

If evaluation work is to be done by criteria model object itself, an evaluate() method, which takes as input an entity to be evaluated, may be added to the base Criteria model.

For each individual type of criteria, a new Criteria class derived from the base Criteria may be implemented, and this subclass will implement the evaluation method for that specific criteria type. A criteria_type column in a criteria database may be used by the data access object (DAO) to determine which subclass of Criteria to instantiate. This approach may simplify the policy automation engine 116 logic by removing the necessity of mapping criteria evaluators to criteria.

A policy may have multiple criteria, which may be evaluated using OR and NOT operators in addition to the AND operator. This includes different criteria (ownership vs. sharing) as well as operators within a type of criterion (owned by user OR group). To facilitate the implementation of these multiple-criteria policies in a general manner, embodiments may evaluate policies as binary expression trees. The expression itself may be generated during policy creation and may reference criteria using the criteria primary key (PK).

As noted above, the binary tree can be serialized as a JSON object and stored in a policy table of the policy data storage facility 1706, such as in a HSTORE table, or a JSON column. A challenge of this approach is that the expression tree can become out of date if criteria are added or deleted. This can be mitigated if criteria are created only through the policy endpoint 1704 or using a function such as "setup_policies" during initial onboarding.

An implementation of the binary tree, referred to as
"cl.vendor.tools.policy_expression.CriteriaExpressionTree," may be stored as a nested dict, such as on the form: 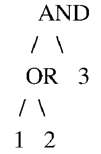 which may be represented as

```
         {
           "operator": "and",
           "left": {
                 "operator": "or",
                 "left": 1,
                 "right": 2
               },
           "right": 3
         }
```

where the integers (ints) are criteria primary keys.

In embodiments, each node in the tree stores an operator, represented by a string, and two leaves, which can be either CriteriaEvaluators or CriteraExpressionTree nodes. The CriteraExpressionTree node may have two methods. The evaluate() method takes a data_to_evaluate dict and recursively evaluates the criteria in the tree. As some CriteriaEvaluators return metadata, the CriteraResult objects returned by the left and right nodes are stored in the tree. The get_matches() method recursively traverses the tree and returns every CriteriaResult created by a CriteriaEvaluator, which was matched. The result of calling this function on the root node is a list of results from all matched criteria.

In alternative embodiments, rather than store the tree as a separate structure, a new "Tree" Criteria can be created that stores an operator with which it will be applied. A column may be added to the criteria table which references parent criteria. If this value is NULL, the criteria will be considered as the Root of the tree. Tree criteria will call evaluate on all their children and then combine the result with the specified operator.

An advantage of this approach is that it does not necessitate any external data-structure. The evaluation tree becomes implicit in the policy criteria themselves.

There are many examples for consolidating criteria evaluation, some of which are provided below. Perhaps the simplest of existing criteria is the Metadata criteria type. This criteria evaluates "true" if any key and value in the entity matches any key and value in the criteria extras.

In one example, CriteriaResult is a simple container class for storing the results of a criteria evaluation. The primary usage of this container is to capture additional metadata about the match that may be produced by content examination, such as context, number of literal matches, or other descriptive information. An embodiment of the class is as follows:

```
       class CriteriaResult(object):
         def _init_(self, match, status, criteria_pk):
          Constructor
          @param match: a list of SuspectMatch objects or None
          @param status: a boolean which is true if the criteria was matched
          @param criteria_pk: the criteria pk
          self.match = match
          self.status = status
          self.criteria_pk = criteria_pk
         def _repr_(self):
          return "CriteriaResult(%s, %s, %i)" % (self.match, self.status, self.criteria_pk)
```

In an embodiment, Criteria is a model storing the data stored in the criteria table in the database:

```
       class Criteria(Base):
         _tablename_ = 'criteria'
         pk = Column(Integer, primary_key=True)
         policy_pk = Column(Integer, ForeignKey('policy.pk'))
         criteria_type = Column(Enum(*CRITERIA_TYPE, name="PCRITERIA_TYPE"), nullable=False)
         name = Column(Unicode(255), nullable=False)
         severity = Column(Integer, nullable=False)
         created_on = Column(DateTime(), nullable=True, server_default=func.now())
         updated_on = Column(DateTime(), nullable=True)
         extra = Column(MutableDict.as_mutable(HSTORE))
         def _init_(self, **cols):
          super(Criteria, self)._init_(**cols)
```

In embodiment, a BaseCriteriaEvaluator class is the base class for criteria evaluation. The constructor takes a Criteria as input and stores it. The evaluate() function takes a dict which should contain the entity, acl, content scanner match information and whatever else that is necessary to evaluate a criteria. The evaluate() function returns a CriteriaResult:

```
       class BaseCriteriaEvaluator(object):
         def _init_(self, criteria, **kwargs):
          Constructor
          @param criteria: The criteria the object should be applied to
          @param kwargs: extra data to be stored as parameters
          @return: Initialized object
          self.criteria = criteria
         def evaluate(self, data_to_evaluate):
          Subclasses must implement this to evaluate a criteria
          @param data_to_evaluate: A diet of the information necessary to evaluate a criteria.
          Specifically, entity, acls, content_matches
          @return: a CriteriaResult object
          pass
```

In embodiments, a MetadataEvaluator class may implement metadata evaluation of the specified entity with respect to the stored criteria:

```
       class MetadataEvaluator(BaseCriteriaEvaluator):
         def evaluate(self, data_to_evaluate):
          entity = data_to_evaluate["entity"]
          entity_dict = entity.to_dict()
          status = any(entity_dict.get(key, None) == value for
                key, value in self.criteria.extra.items())
          return CriteriaResult(None, status, self.criteria.pk)
```

In other embodiments, the Criteria class shown above is extended with the addition of an "evaluate" function in the base class:

```
         def evaluate(self, data_to_evaluate):
          pass
```

The individual criteria are implemented by subclassing Criteria and implementing the evaluate function:

```
       class MetaDataCriteria(Criteria):
         def evaluate(self, data_to_evaluate):
          entity = data_to_evaluate["entity"]
          entity_dict = entity.to_dict()
          status = any(entity_dict.get(key, None) == value for
                key, value in self.extra.items())
          return CriteriaResult(None, status, self.pk)
```

The criteria_type field in the column database may be used by the Criteria DAO (data access object) to construct the appropriate subclass during criteria retrieval.

In certain embodiments, two pieces of information may be used to perform a policy evaluation: entity information (an entity optionally being an object generated, for example, from the entity table of the database) and ACL information. An entity might be a file, object, user or the like, and in embodiments entities may be generated dynamically in a scanning process and passed directly for policy evaluation, such as without being stored in a database. Entities may contain various information, such as vendor information, name information, mimetype, payload (object content), and a reference to the associated scope. An ACL may comprise an object derived from the scope and one or more tables, such as scope_role tables. Specifically, scope type, role, organization, name, scope value or permission id, and vendor may be indicated.

In embodiments of a policy automation engine 116, policies consist of a set of criteria trees, with the results of each tree combined by "AND" or "OR" operations to produce the final policy result. Criteria may be focused on data operations rather than user intent.

In embodiments, various backend implementations of front-end criteria may be provided, as described below. Note that some of these trees have Boolean criteria that are not strictly necessary, but these are presented to simplify the front-end logic in a few cases. While one could perform some tree optimization to remove them, the evaluation of these Boolean operators is fast enough that it may not be needed.

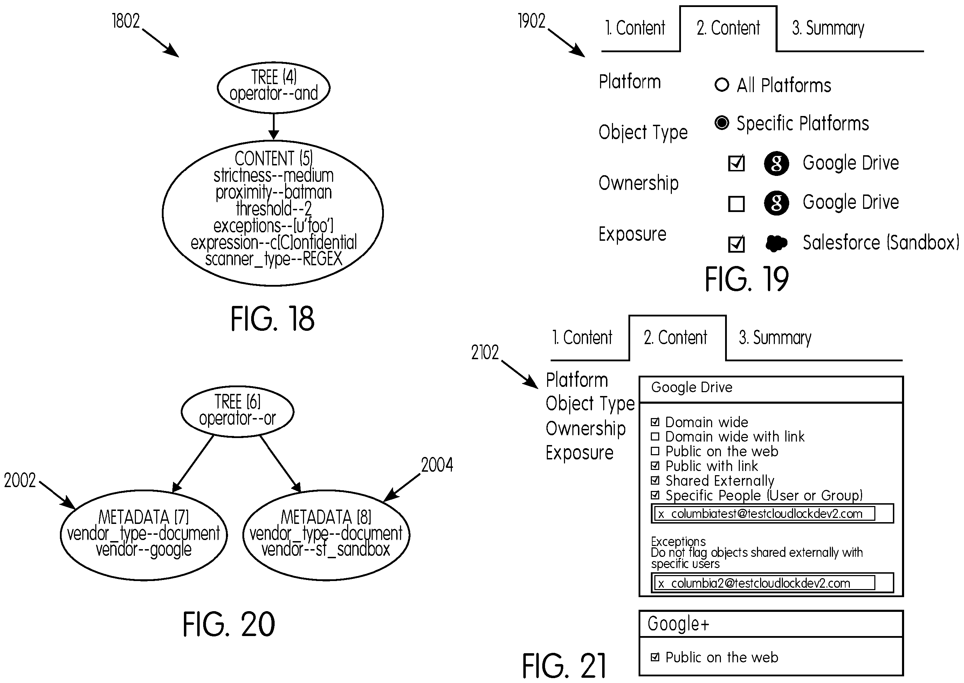

Referring to Fig. 18, a content criterion may cover custom regular expression (Regex), SSN and CCN scanning of objects. It may also cover Regex exceptions, thresholds and proximity. Because all these are handled directly by the content classification service of the CSF 100, the content criteria may be implemented as a single CONTENT node in the backend.

Referring to Fig. 19, platform criteria may be used to apply a platform-based restriction to a policy. It may be configured with part of a UI 1902. If "all platforms" is selected, no platform criteria are stored in the backend and the policy therefore will apply to entities regardless of the vendor and vendor_type. Referring to Fig. 20, if specific platforms are selected (here, Google drive and SalesForce™ sandbox), METADATA criteria 2002, 2004 are created to check the vendor and vendor_type of the entity.

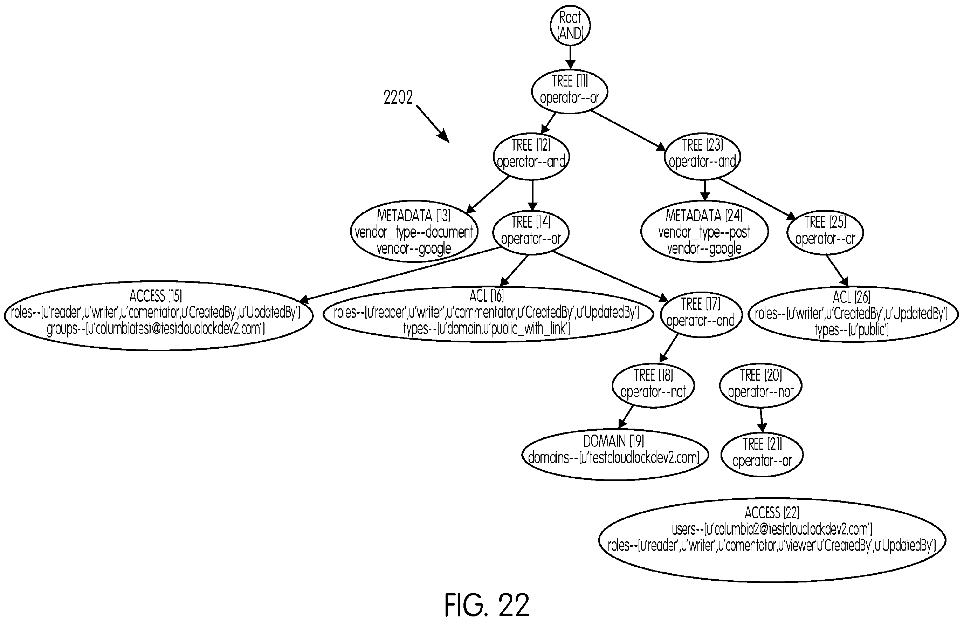

Exposure criteria may be used to flag objects that violate a set of specified exposure restrictions. Referring to Fig. 21, exposure criteria may be configured with an exposure configuration part 2102 of the UI. The policy configuration may be implemented as a relatively complex tree of METADATA, ACCESS, ACL, and DOMAIN criteria, which are shown in Fig. 22. Note that the tree 2202 consists of two major branches, each which applies to a different platform (restricted by the METADATA criteria). This example is a highly complex version of the exposure criteria. The unneeded sub trees may be pruned if they are not required.

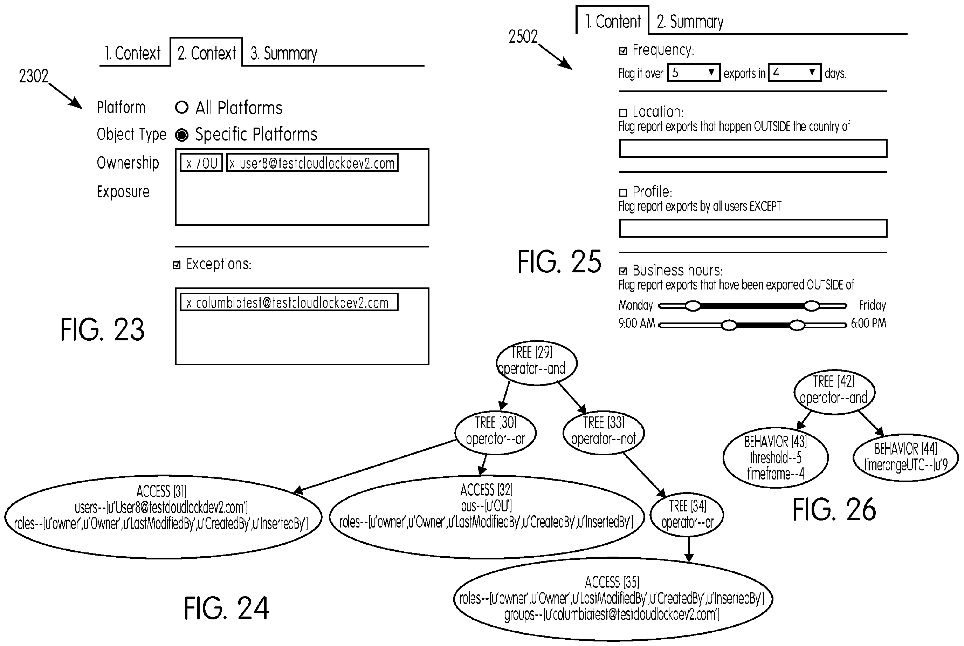

Ownership criteria may be used to flag objects owned by individuals, or members of OUs and groups, you can also define ownership exceptions, which let you say, "flag documents not owned by <users>". Referring to Fig. 23, the ownership criteria may be configured with an ownership criteria configuration part 2302 of the UI. If "All users" is selected, and "Exceptions" is unchecked, no ownership criteria are created and the policy will apply regardless of ownership. Otherwise, a set of ACCESS criteria are created, one for all the users, one for all the organizational units (OUs) (where an organizational unit may be a construct representing the membership of a user to a group in a hierarchy) and one for all the groups that have been selected by the user. The same pattern is followed for Exceptions, except a NOT operator may be added to make invert the result of the criteria. The UI configuration above is implemented in the backend as depicted in Fig. 24.

Referring to Fig. 25, behavior criteria may be configured with a behavior configuration part 2502 of the UI. Behavior criteria may be implemented as a set of platform-specific "BEHAVIOR" criteria that are combined with "AND" operators, with one criteria created per checkbox item in the UI part PE1402. Vendor or platform-agnostic implementation of behavior criteria may also be provided. Referring to Fig. 26, criteria configured as reflected in Fig. 25 may be implemented in the backend as depicted in Fig. 26.

Referring again to Fig. 1, in embodiments, the methods and systems disclosed herein may include one or more modules, associated with or as part of a cloud security fabric, for providing central configuration management for security related items.

In embodiments, the methods and systems disclosed herein may include one or more modules, associated with or as part of a cloud security fabric, for providing centralized auditing 118.

In embodiments, the methods and systems disclosed herein may include one or more modules, associated with or as part of a cloud security fabric, for providing federated searching.

In the realm of all applications and information technology resources that users of an enterprise are using, there is a percentage that is sanctioned and a percentage that is unsanctioned, or "shadow" information technology. While security companies today typically focus on reducing various risks associated with using sanctioned applications, of which there are a few thousand that comprise a significant fraction of the sanctioned applications used by enterprises in many different businesses, there are tens (and perhaps hundreds) of thousands of shadow applications that are used by users outside the control, or even knowledge, of the typical enterprise. For example, tens of thousands of different shadow applications, with millions of installations and users have been found in use, including many applications in the category of online analytical processing (OLAP) applications, where the users authorize an OLAP application, such as one in the cloud, to access to certain data or services in a user's account, such as contacts, documents on a drive, or the like. Users of an average enterprise may access many hundreds, and sometimes thousands, of different unsanctioned applications, and there are millions of unsanctioned installations. Many of these involve untrusted vendors, excessive access to enterprise or user data, or inappropriate applications. These kinds of shadow applications operate in a non-attended fashion, off of an enterprise network. In such case, the security of the enterprises data and resources are only as good as the security of the cloud application. There have been numerous documented attacks, as people exploit vulnerabilities in the security of these applications. Meanwhile, enterprises may not even know that their users are using the applications. Accordingly, a need exists to discover shadow IT usage, and to block its usage when needed. By discovering shadow IT, an enterprise can also educate users and sanction the applications, under certain policies and controls.

This disclosure relates to the capability of the CSF 100 to enable application discovery, monitoring and control on a user's network, such as an enterprise network, in addition to providing those capabilities for applications used elsewhere, such as in the cloud, as described elsewhere throughout this disclosure. The methods and systems disclosed herein include the capability of the CSF 100 to provide unified visibility, monitoring and control for a wide range of scenarios for how applications are deployed and where they operate, including situations in which the applications are on an enterprise network, situations in which applications interact within a cloud or between clouds, and situations in which applications involve activities on a network and in the cloud. This unified, monitoring and control capability of the CSF 100 is referred to herein as the "unified application firewall," the "unified AFW," the "AFW platform," or simply the AFW 300 in this disclosure. In embodiments, the unified AFW may comprise one or more services of the CSF 100, such as the application firewall services 148.

Among other benefits, the methods and systems described herein address the needs of enterprises to have visibility as to the IT resources being used by their users, including shadow IT. The unified AFW methods and systems can allow an enterprise to learn what applications and other resources are being used (in the cloud and on the networks of the enterprise); identify opportunities to sanction certain applications, consolidate usage of such applications, and manage policies and usage of such applications; and block risky applications or risky activities in or with applications.

Among other things, by providing a unified view across different applications used by an enterprise in different environments and on different platforms, the use of the CSF 100 can allow for a quick assessment report of the "shadow IT" used by an enterprise. The AFW capabilities of the CSF 100 may also provide the ability to block usage of certain applications and/or certain operations of applications, like the uploading or downloading of files.

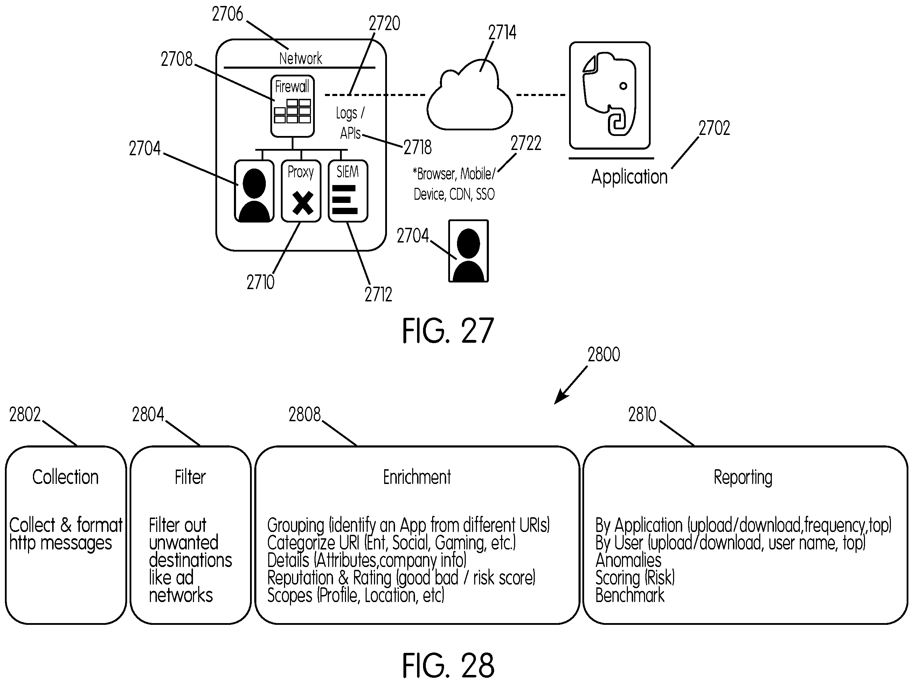

As seen in Fig. 27, an application, such as Evernote™ 2702, may be accessed by an enterprise user 2704. The user 2704 may be on an enterprise network 2706, such as behind a firewall 2708, and in some cases access may involve a proxy server 2710. The enterprise may track application access and usage events, such as file uploads and downloads, occuring on the enterprise network, and relay those events to a SIEM 2712. In some cases the user 2704 may access the application 2702 through the cloud 2714, which may occur through various APIs 2718. Where the cloud 2714 is accessed through the firewall 2708, the enterprise may have various logs 2720 that record information about the access to the application 2702, and the logs 2720 may provide a source of information for the SIEM 2712. The APIs 2718 and logs 2720 may also provide sources of information for the CSF 100 as it collects data according to the varous capabilties described throughout this disclosure. In some cases the user 2704 may access the application 2702 from devices that are not on the managed enterprise network 2706, so that the enterprise may not have access to complete usage information via the same APIs 2718 and logs 2720 that are associated with tracking usage on the managed network of the enterprise, because the application and related traffic did not traverse that network. This may occur through a browser on a home computer, laptop or mobile device, or through some other facility 2722, and it may be undertaken by a user, or may be done by a program or machine (such as an Internet of Things (IoT) device). Information about these types of access may be tracked in other facilities that handle device access, such as tracking facilities within the cloud platform 2714, PaaS/IaaS facilities that enable the application without the cloud 2714, mobile device management facilities, content delivery networks (CDN), identity management systems, single-sign on systems (SSO), or the like, each of which may provide information to the CSF 100, either by feeding information to one or more of its services or by having an API that the CSF 100 may inspect according to the various embodiments described throughout this disclosure. In addition, a cloud service, such as a cloud SWG™ or cloud DNS service, may provide a stream of requested data, such as by providing a port that mirrors the traffic occuring on some part of a network or device, referred to in some cases as a "tap." Thus, in order to provide a unified view of the usage of the application 2702 by the user 2704, it is necessary to know more than can be obtained simply by viewing the logs 2720 or simply by viewing activities in the cloud 2714 alone.

Referring to Fig. 28, a process 2800 may include a series of steps that enable development of a unified view of the usage of each application, and in turn the entire collection of applications, used by the users of an enterprise. At a step 2802, the CSF 100 may enable the collection of various events, such as from the logs 2720, APIs 2718, publication of events from a SIEM 2712, servers in the cloud 2714, and other APIs, logs, and tracking systems of the various facilities that enable or report on access to or usage of an application, as noted in connection with Fig. 27 above. This may include collecting and formating messages in various formats, such as http messages. At a step 2804 the CSF 100 may enable filtering of the information collected. For example, the enterprise may not be interested in tracking usage with respect to some kinds of resources, such as advertisements from ad networks, and known destinations for ad networks can be filtered out. In embodiments, the process 2800 may optionally enable the ability to obfuscate, tokenize, and/or encrypt some content from the API, log or tracking system, or the like, so that the data may be stored in a form other than clear text.

Various scanning strategies may be used in the collection step 2802, which may vary depending on the environment that is scanned, such as a cloud platform. For a platform like Google™, the process may use a directory API and a token API for a base level of scanning, as well as an OAuth audit report in some cases. For a platform like Salesforce™ the process 2802 may use a facility known as AppMenultem or an OAuth token (e.g., from API v32) for more rich information. For an environment like Dropbox for Business™ the process 2802 may use event logs (which may be based on APIs, such as with "install" and "revoke" events. In other situations, an environment may push data to the process 2800, such as based on a subscription to certain types of events or data feeds relating to particular defined types of activities.

At a step 2808 the information collected from various sources may be enriched in various ways, such as by formatting data into a common format for further manipulation, cleansing data (such as by de-duplication, development of consistent identifiers for the same application, and normalization of information that is presented differently in different protocols), grouping data for an application (such as by grouping different URLs that are used to access the same application in different domains), categorizing the domain in which the application was discovered (e.g., in a category such as entertainment, social media, gaming, file management, or the like), organizing and adding details on the applications (such as descriptions of the application and its attributes and/or information about the vendor of the application), collecting and organizing data about the quality of the application or the vendor of the application (such as based on ratings identified in third party environments, ratings based on the attributes of the application, ratings based on the vendor, and the like), and providing an indicator of the scope of the application (such as a profile of its capabilities, a profile of risky features or capabilities, a profile of the location of the application, and/or a profile of the platform on which the application is deployed). In embodiments, enrichment may occur through use of APIs, including obtaining data used for enrichment through APIs to various other systems, including those of cyber security vendors. The step 2808 includes developing a directory of applications and associated URLs. Absent the association of various URLs used to access each application, a list can be developed of all of the applications that were found, but a unified understanding of each application is much more difficult to develop, because usage details may be fragmented across different targets that are accessed.

Thus, a wide range of information can be gathered about the application, obtained in the collection step 2802 and through collection of other data about the application 2802 through various sources. At a step 2810, the information can be reported in various ways, such as by application (such as providing information about uploads to and downloads from the application, the frequency of usage, and the like) and by user (such as indicating which users have undertaken how many uploads to or downloads from the application). Determining user information may involve integration with the application directory developed at the step 2808, so that a user can be observed across different URLs and across different devices that the user uses to access the application. This may further include accessing information about the user's identity, such as linking various user names that may be associated with the same user when accessing an application in different environments, such as different clouds or PaaS/IaaS environments. The collection step 2802 may be undertaken on various cloud environments and platforms, such as provided b Dropbox™, Google™, SalesForce™ and others. In embodiments, collection is geo-aware, such that usage of an application can be understood by geography, such as by identifying IP addresses of known location that are used to access applications, or by using mobile device locations obtained from cellular network information, from a catalog of locations of Wifi access points, or other techniques.

The information collected and organized in the steps described above can be used to identify anomalies, both in the context of a single application (such as identifying a user with unusual numbers of uploads or downloads, or by identifying users who are using the particular applications much more than other users) and across applications (such as by identifying patterns of usage of types of applications that are unusual as compared to other similar enterprises). The information collected about application usage can be used, together with the other information gathered and organized at the step AFW-208, to provide various metrics about the application, such as an overall score (e.g., a risk score, or a trust rating) for the application, or a score for particular attributes of the application (such as the reputation of its vendor, the level of risk of creating a data breach, the level of risk of enabling a hacker to exploit a vulnerability, or the like). The overall scores for various applications or the component factors can be used for benchmarking purposes, such as to help an enterprise understand a level of risk relative to other similar enterprises with respect to use of a particular application, a class of applications, or applications in general, or to provide an understanding of which users within the enterprise are undertaking usage of risky applications, or undertaking risky behaviors within or witih applications, as compared to other users in the enterprise or other users across the enterprises that use the CSF 100. By collecting information for many enterprises across many applications and platforms, the CSF 100 can provide a much more complete view of an application and its users than is possible simply by observing information about a single application, user, or enterprise.

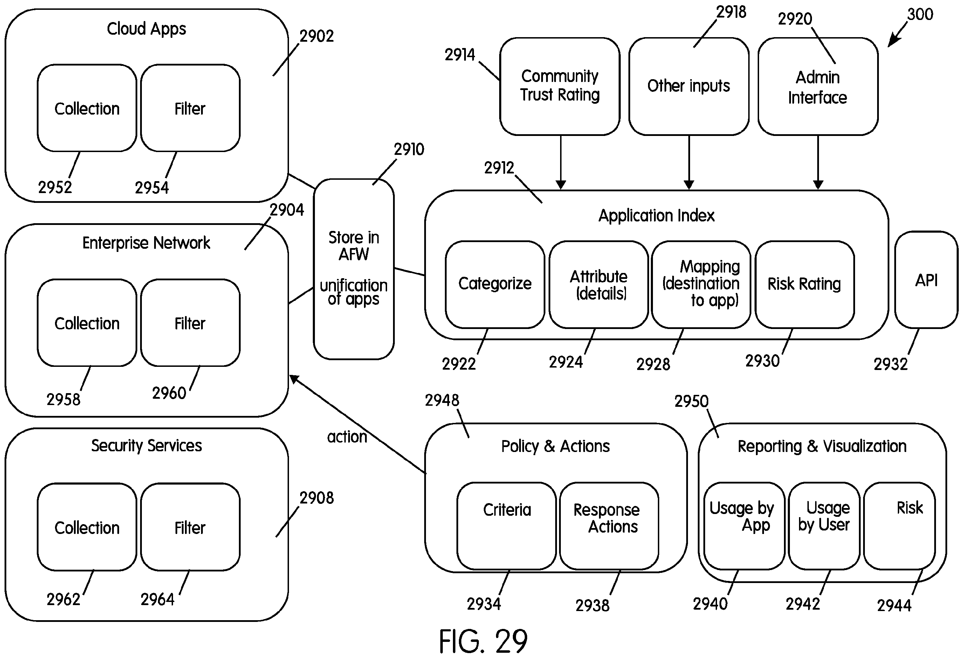

Fig. 29 depicts functional components and capabilities for enabling a unified AFW platform 300 for use in connection with the CSF 100. An objective is to provide an application index 2912, which may collect various types of information as described in connection with Fig. 28, which may use or generate a community trust rating 2914, a risk rating 2930, or other metric, rating or score (which may be an overall score or a component score relating to a particular attribute) for each application discovered in various environments in which users of an enterprise operate.

The AFW platform 300 can discover cloud applications 2902, such as by connecting, obtaining a list of tokens, and discovering apps via a collection facility 2952, which may use various capabilities described in connection with the CSF 100 throughout this disclosure, including collecting information from logs and APIs, as well as taking feed information from various sources. For example, one way to discover cloud applications is by integrating with logs that indicate cloud usage, such as Checkpoint™, which in embodiments can enable a collection facility 2958 and zscale™ logs, which can enable a collection facility 2962 for applications that can be discovered and for which data may be collected using a similar range of options for data collection, as well as from other (e.g., security) services 2908 (such as CDN services like Akamai™, DNS services like DynDNS™ that indicate applications on a network, services like Airwatch™ that have information about device usage (e.g., mobile device usage) and services like Okta™ that manage user identities and that also have information about what applications are being used. A wide range of services that interact with applications, log application activities, manage access to applications, or the like can be inspected for information that indicates that an application is being used. Data from cloud applications 2902 can be filtered by a filtering facility 2954, and data from another service 2908 can be filtered by a filtering facility 2964.

Data may also be collected via the collection facility 2958 and filtered by a filtering facility 2960 for applications running on an enterprise network 2904 (including non-cloud applications). This may include collecting information relating to on-premise policies and firewall rules for such applications, which may be stored for the application in a unified AFW platform 300, such as for later use in connection with applications in other contexts, such as off-premises use (including cloud usage) of the same or similar application.

Thus, the AFW platform 300 can collect all of the information that indicates application usage from the various services and platforms and filter out unneeded information. Once filtered, the information can be stored in a unified AFW store 2910, providing the data needed for a unified model of application usage (including how a particular application is being used across different networks and platforms, as well as information about what applications are being used). In embodiments, with respect to a particular application, the unified information store 2910 can store various attributes of the application, such as that the application has a network presence, the URLs by which the application can be accessed in various environments or on various PaaS/IaaS platforms, how the application can connect to third party applications or resources, what types of access the application enables, and other feature and attributes of the application.

With this unified view, the methods and systems of the AFW platform 300 allow creation of the application index 2912, where the AFW can categorize the application 2922 (such as by subject matter, by attributes 2924 (the vendor that provides it, marketplace reviews about it), and many others as noted throughout this disclosure and as would be understood by one or ordinary skill in the art). The searchable application index 2912 may leverage various inputs, such as a community trust rating 2914 and other inputs 2918, such as web scanning, third party rating sources like indexes provided by Checkpoint™ and others, and human research, as well as any other available types of classification. Classification may be automatic and/or dynamic (such as by tracking access scopes of the application) and may augment, or be augmented by, human classification and classification information from other sources, such as from the cyber security community. Classification may include observation of the behavior of an application, such that an application that performs actions that increase risk may be classified as malicious. Applications may also be classified using honeypotting techniques, where applications are allowed access to a secure area (such as one that does not have access to real enterprise data) where their behavior can be observed and their riskiness assessed as part of classification. The index 2912 can include the mapping 2928 of the destinations by which the application can be accessed, such as URLs in cloud environments 2902, network addresses (e.g., IP addresses) on an enterprise network 2904, and addresses used by various services 2908 to access the application. In many cases an address doesn't clearly say what the application is, or what the address really is. For example, it might be a string like "dfb/docx/app1." The mapping facility 2928 may be used to map a string used to access an application to what it really is (e.g., a particular application accessed on a Dropbox domain). The mapping facility 2928 allows mapping various identifiers to an application, so that all of them can be shown as relating to one application. In embodiments, mapping of such information may be automated, such as by providing natural language processing, which may be aided by human input, such as by training a machine learning facility to recognize and classify addresses as being associated with an application, using examples that are validated by human classifiers. Mapping of applications and URLs may include using sets of attributes that work as signatures for an application (such as recognizable features), which in turn can be used to unify entities, such as associating various URLs with an application, or associating various versions of an application (such as on different platforms) as being associated with the same application. In embodiments, an automated categorization engine may be used to categorize applications, such as based on feature that can be extracted automatically from on-network and cloud environments, such as URLs, attributes, and categories. In embodiments, users may update the application index 2912 directly, such as by indicating information that has been obtained based on actual experience with an application. For example, an application that is not widely trusted by the community, because it is new, may be upgraded to an improved risk score if the security personnel or other users of an enterprise have confirmed that the application is safe for the enterprise.

The application index 2912 may be used to provide simple information, such as collecting information indicating access to web applications from a managed network of an enterprise. This may indicate usage by application, classification of applications (such as by category), a risk rating, and usage by a user (or by an IP address if not linked to a user name).

The application index 2912 may also provide a metric 2930, such as a risk rating, for the application, which may be an overall score or a set of component scores that relate to particular categories of risk.

There are various factors that contribute to determining a risk rating 2930 or similar metric for an application. One set of factors may be dynamic, such as interpreting the scope of access of the application at a given point in time (such as whether the application has access to sensitive data, whether the application uploads data, and the like). Another set of factors relate to the extent to which the community trusts the application. The community trust rating 2914 can be provided, which may represent the aggregated (e.g., crowd-sourced) information about the application, such as whether the application is trusted by other enterprises, whether the application is banned by other enterprises, or the like. The community trust rating (CTR) 2914 may apply to cloud applications and applications accessed on an enterprise network. Because the CSF 100 can be deployed across many enterprises and platforms, and collect information from and about all of them, it can provide the data needed to develop a holistic view of how trusted an application is across those enterprises and environments, which can be used to provide the overall community trust rating 2914. For example, a trust rating 2914 may be based on the percentage of enterprises that trust the application and the percentage of enterprises that ban the application, in each case optionally weighted by the size of the enterprises that contribute to the rating. Various approaches can be used to enable the use of a community trust rating 2914. A CTR preferably would have fields relating to a company sector, size and the like, and would provide visibility as to the reasons for a rating. In embodiments, the data may be anonymized. The AFW platform 300 may include a job in the background, such as a "CTR sync" job, to keep the CTR facility 2914 synchronized with another system, such as any other system tracking activity of a user or application. The job may use various instances data via the API, such as based on baselines and deltas. The job may feed events into the AFW platform 300, such as into a database or other data storage facility. A second job may take classification events from AFW platform 300 databases and perform CTR conclusions. In embodiments, feedback may be provided to instances of the other system. Similar APIs may be developed for various situations (such as for government versus regular customers).

Other inputs 2918 may also be provided, such as ratings or scores from third party sources, which can contribute to the risk rating 2930. Information from the attributes of the application can also contribute to the score; for example, applications in the social networking category that access user contact data might generally be considered riskier than productivity applications provided by major enterprise software vendors, or vice versa. As another example, information from a third party system like Checkpoint™, which discovers cloud applications, can be used to enrich data about an application. Such information can be obtained through an API to a third party system or by scanning reports (e.g., .pdfs) provided by such third party systems. In addition, information may be obtained from third party systems or sources that focus primarily on determining a reputation of a provider.

Ultimately, an algorithm may be developed, taking into account all of these factors, to provide an overall risk score for the application, and/or a set of component scores relating to particular types of risk. This algorithm may be improved over time, such as by a machine learning facility, based on feedback, such as feeding information about actual experiences encountered by the enterprises that use the CSF 100.

In embodiments, one may wish to adjust the index 2912, such as to account for the importance of various factors. For example, more weight may be given to a rating from a large enterprise than from an individual user. On the other hand, less weight might be given to incremental input from additional users in an enterprise that has already provided a large number of ratings. Various statistical techniques can be used to assist in providing normalization of the inputs that are used to rate an application, as well as automated techniques, such as using machine learning based on learning (which may be aided by input from human raters or classifiers).

The access of the CSF 100 to a holistic view of applications deployed in cloud environments, PaaS/IaaS platforms, SaaS applications, and on network applications provides visibility over a very large number of applications, across many different kinds of enterprises, thereby providing a more complete view of the usage of the application, and the associated risk, than can be obtained by looking only at the individual application. This includes the behavior of applications (and risks) that interact with each other within a cloud and between clouds, not just how applications behave on an enterprise network. Various attributes can be accounted for in the application index 2912, including application attributes (description, vendor, reputation), categorization, URL destination mappings, and risk classification and rating/scoring.

The AFW platform 300 may include an administrative interface 2920 that allows a level of human work too, such as allowing an administrator to note well-known, trusted vendors or applications. To obtain inputs 2918, the AFW platform 300 may programmatically scan various marketplaces where applications are reviewed and collect the reviews and ratings. Programmatic collection of information may be desirable, because as the number of unique applications exceeds one hundred thousand, it is very difficult for approaches that rely on manual classification of attributes or the manual evaluation of risk, such as the manual risk scoring approaches used by vendors, to keep up with the proliferation of applications.

As with other services of the CSF 100, an API 2932 may be provided for the searchable application index 2912. The API 2932 may be used to access an overall score or other information collected by the AFW platform 300, as well as additional reports (including visualizations), that may be generated using information collected by the AFW platform 300 and created by and for the application index 2912. Reporting and visualization facilities 2950 may be provided that relate to usage by application 2940, that relate to user behavior 2942 and that relate to risk 2944. Reporting may include providing feeds or batches of data that can be incorporated in other reports (including those developed offline), as well as reporting of relevant information via APIs, including for automated reporting. Reports may also enable display of relevant statistics or information in applications or environments, such as providing categorization and additional attributes. Reporting can also be done by providing connectors, such as to relay event reports, risk information, or other information, so that the information may be used by or in various third party environments.

The AFW platform 300 may also include the capability to manage and deploy policies and actions 2948, such as allowing a user to define criteria for rules 2934 and to define response actions 2938, such as blocking an application that is discovered to provide access to sensitive data resources of an enterprise, blocking excessive usage of an application, or blocking an application that has a poor risk score or community trust rating, and the like. Policy and action handling 2948 may be integrated with other systems, such as a security system like those provided by Checkpoint™ or a firewall provided by a party like Cisco™ to use the information collected by the AFW platform 300, including in the application index 2912, such as to invoke an action in the other system (like blocking suspected malware from crossing a firewall). Thus, the AFW platform 300 may enable not only classification of applications and reporting of risk, but active remediation, such as by automatic blocking of access to high risk applications, automated implementation of increased security measures (e.g., requiring higher level or more frequent authentication) for high risk users, automated education of high risk users, and the like. This may be done in conjunction with the other capabilities of the CSF 100 as described throughout this disclosure.

The AFW platform 300 may be enabled by code, such as stored in a cloud-based repository (e.g., labeled "csf_afw," or the like) that is part of or associated with the code base that enables the various services of the CSF 100. A different repository may be developed for each significant cloud platform. The code base may include enabling code for the APIs and other functional components, including code for configuration, version control, and migration. Data collected, used, and generated by the AFW platform 300 can be stored in various types of data storage resources, such as one or more relational databases, object oriented databases, or other data repositories. This may include PostgresSQL™, SQLAlchemy ORM™, or the like. Different schema may be used to address different use cases, such as for enabling different types of security solutions.

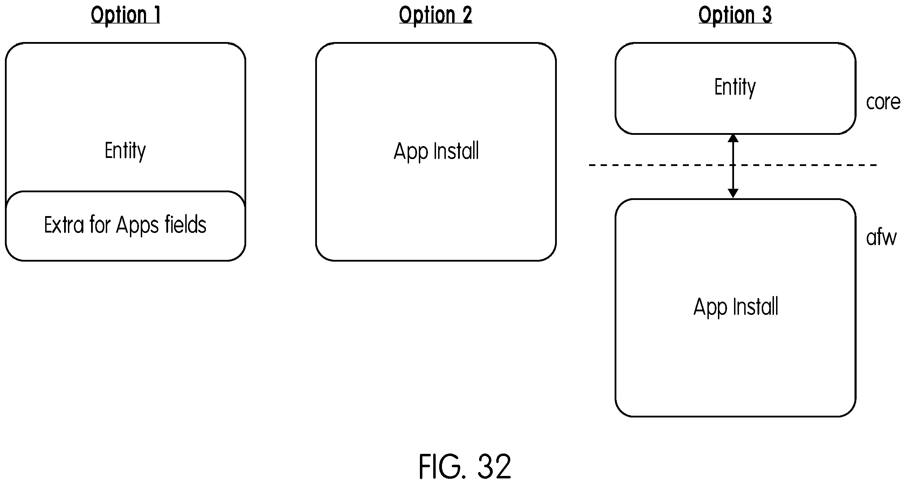

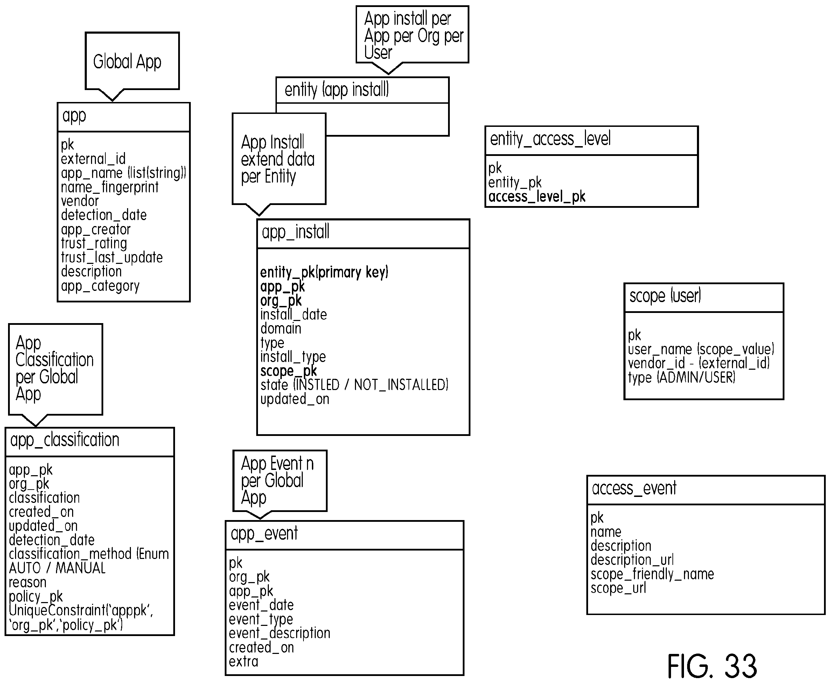

To enable interaction with the core capabilities of the CSF 100, the AFW platform 300 may have various components and services, such as a scheduled job registration service; a licensing services (to grant a license / verify if a license has been granted and to provision a license (for scheduled jobs)); a policy engine (such as to allow the system to send AFW entities to the policy engine for evaluation and to handle AFW-specific criteria); an entities service (such as where each installation of an application is modeled as an entity; a scope service (such as to get the list of users (e.g., for the Google™ platform, which may depend on the organization profile job); a caching service; an OAuth service; and an onboarding service. There are various possible approaches for modeling the installation of an application as an entity, as shown in Fig. 32. These include having an entity model with extra elements for application fields, having a unified App Install entity, or having the App Install entity stored in the AFW platform 300 with a mapping to an entity in the core of the CSF 100. Fig. 33 depicts a number of the types of objects, and related attributes, that may be used in an entity model for the methods and systems disclosed herein. A service may be used to save an entity, and a service may be used to save the scope, such as during a user scan. Various criteria can be developed for use in the policy engine, and it can be used to trigger various response actions. Policies may take into consideration priority, such as to prioritize certain criteria or response actions, such as where there are many possible events that could require intervention. Criteria may include ones related to assessing scopes (such as the extent of the access scopes allowed to an application), ones related to the community trust rating (including reasons for the rating), ones related to ownership criteria (e.g., by user, by administrator, by organization unit (OU), or by group), and explicit criteria for particular applications (such as relating to individual applications or a list of applications). Response actions may include revoking access, classifying an application, providing notifications, providing education, and the like. The engine may enable whitelisting policies, where an enterprise indicates which applications are allowed (and all others are not allowed), blacklisting policies (where specific applications are allowed), and collision policies (such as to surface potential conflicts faster in the AFW platform 300). Collision situations may occur when the same item is on a whitelist and a blacklist, for example, and may be addressed in embodiments by giving precedence to a blacklist policy by default, or alternatively by surfacing collisions for manual resolution. In embodiments, a classification may comprise a result (manual or automatic), but not be used as a criterion. When an admin classifies an application, in embodiments this may result in the application, and related matching criteria, being automatically transformed into a policy, so that the admin does not necessarily need to separately configure policies in a policy engine or set up a new rule in addition to undertaking the classification.

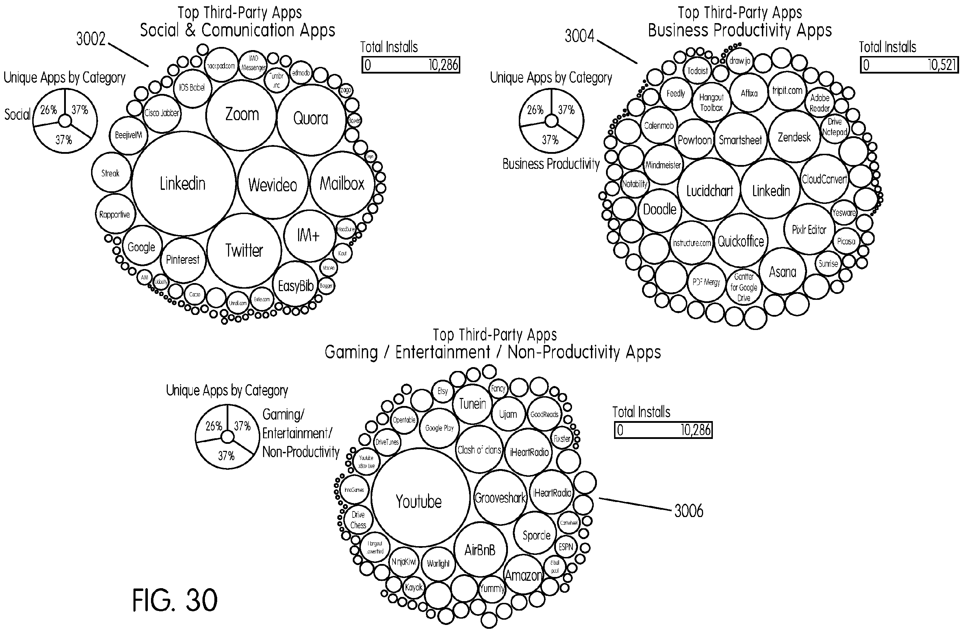

Fig. 30 provides for examples of visualization that can be produced by the reporting and visualization facilities 2950 to indicate the different kinds of applications that have been discovered by the AFW platform 300 in a given situation, such as to provide a sense of what applications a set of enterprise users are using in different categories. Fig. 30 shows the applications used by the users of an example enterprise in the social and communications category 3002. Fig. 30 shows the business productivity applications used by the enterprise 3004. Fig. 30 shows the other applications (such as gaming, entertainment, and other non-productivity applications) used by the users of the example enterprise 3006. In each case, the visualization can use attributes like size (e.g., the relative size of the circles in Fig. 30), opacity, color, and positioning of visual elements to give a viewer a quick sense of the application usage within an enterprise, overall, or in a category. For example, a viewer of the visualization in Fig. 30 can quickly see that many of use users are spending time on Youtube™, Grooveshark™ and Airbnb™ 3006. These visualizations can leverage information in the enrichment step 2808 of Fig. 28, such as information that puts the applications into one or more categories based on a description or other attribute of the application.

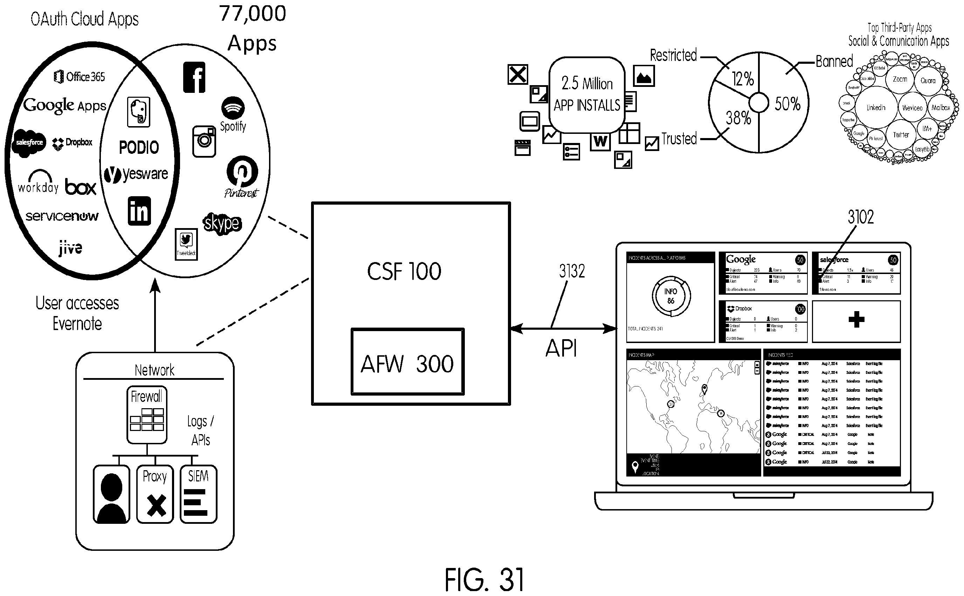

Referring to Fig. 31, a separate system 3102, such as including a dashboard for reporting on security of applications, such as provided separately by the host of the CSF 100 or by a vendor like Checkpoint™, may be integrated with the CSF 100, including the AFW platform 300, such as through the API 3132. This integration may provide the third party system 3102 with increased unification of information about usage of cloud and on-network applications by the users of an enterprise, simplify the generation of reports and visualizations, and provide an enhanced directory of applications both for the AFW platform 300 and the third party system 3102. Information for an integrated solution may obtain software using various techniques described throughout this disclosure, such as obtaining information from SIEMs like those provided by Splunk™ and others, as well as from other services that have access to information about usage in the cloud, such as DNS systems, SSO systems, CDN systems, MDM systems, VPN systems, SDNW systems, and others.

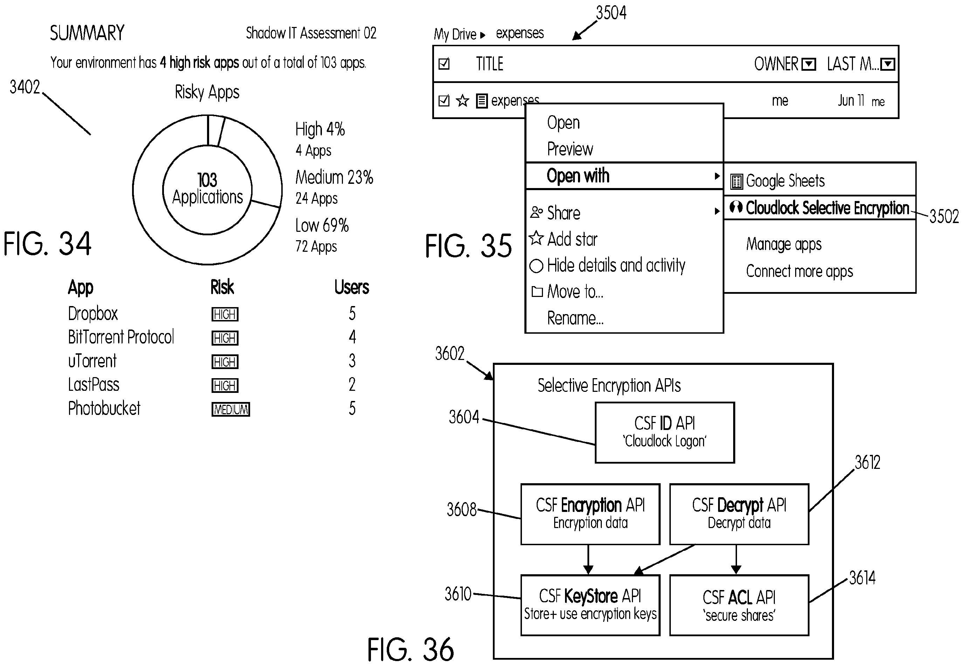

Fig. 34 shows an example of a report 3402 that provides information collected in the application index 2912, including information relating to the risk rating 2930 that is determined for each application. The information indicates the number of high risk applications and medium risk applications out of the total number of applications that were discovered for the enterprise, the percentages of each, the names of the high risk and medium risk applications, and the number of users who are using each of the high risk and medium risk applications. The report 3402 provides a good overall review of areas of risk for the enterprise.

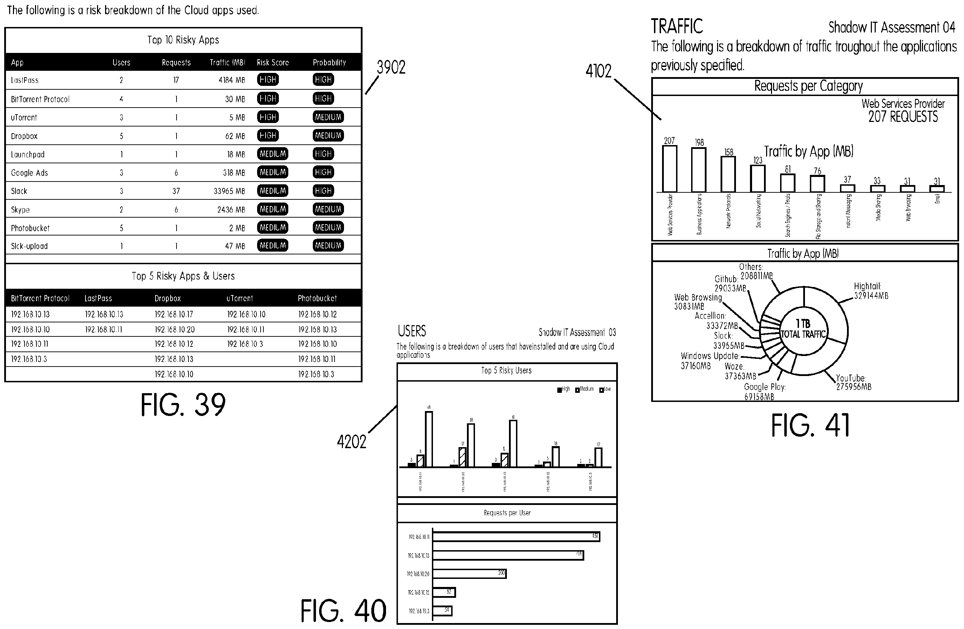

Fig. 39 shows an example of a report 3902 that provides a breakdown of the cloud applications used by an enterprise according to levels of risk. It shows the applications discovered, the number of requests for access to each application that were discovered, the amount of traffic involved in usage of the application, and the risk score for the application. The report also shows a probability or predictive score, which may indicate the probability that users of the enterprise have actually installed the application, the probability that usage of the application will create a problem, or the like. The probability or predictive score may be different from the base risk score for the application in the case of a particular enterprise, such as because the application is involved in a large number of requests for access (as in the case of LastPass™ in the report 3902), or there is a higher amount of traffic for the application (as in the case of Slack™ in the report 3902). The probability or predictive score may be useful in situations where incomplete information is available, such as where a user is not fully allowing the monitoring of all applications. This score can be based on information collected in various services of the CSF 100, such as where information indicates that users are connecting to an application in one environment, which may support an inference that if the application is discovered in another environment, there is an increased chance that the application is in use, even if there is not direct data to indicate whether that is the case. The report can also show the most risky applications and users, with specific IP addresses for the users, so that the enterprise can intervene, such as by educating the users, blocking the access to the particular applications, or the like.

Fig. 40 shows an example of a report 4002 that can be generated using the information collected in the application index 2912 once applications are identified and risk ratings 2930 are performed for each of them. The report 4002 shows the top 5 most risky users that have installed and are using cloud applications, with the users identified by unique IP address. The report shows a breakdown of the applications used by each user by high, medium and low risk according to the risk rating 2930 for each of those applications.

Fig. 41 shows an example of a report 4102 that provides a breakdown of traffic throughput for applications used by the users of an enterprise that were identified as having high or medium risk. The report shows the number of access requests by category of application as well as a breakdown of the traffic, as a part of total traffic, involved in usage of each application. This provides a good sense of where the enterprise may be risking a data breach (as high amounts of traffic may be associated with the uploading of large batches of files, which could contain sensitive information) and where the enterprise may be wasting money (as high traffic may involve excessive data usage charges in some cases, such as when usage is by mobile devices).

It should be noted that while the reports shown in Figures 34, 39 and 40 mention cloud applications, consolidated reports can be provided that report on both cloud application usage and usage of applications on the enterprise network. For example an on-network application that is used to upload large amounts of data can be flagged as risky and presented along with the other applications in a similar manner to the presentations in Figures 34, 39 and 40.

In embodiments, the various features and services of the AFW platform 300 may be accessible through various APIs, which may be RESTFul compliant. Support may be provided for filtering, pagination, schema validation, resource caching, versioning, layer separation and other features. In embodiments, a client may access the AFW platform 300 transparently, such as through a proxy. Thus, the AFW platform 300 may adopt an 'API First' approach, supporting a rich eco-system around API frameworks (public) that add documentation, and the like. Since the AFW platform 300 may be installed separately to add its own endpoints, one may use Flask™ as a separate API server and the Flask RESTful™ package as a basis for the REST layer for the AFW platform 300. End points may include the following examples: 1) /**app**, which may be used to retrieve application installs based on a filter; 2) /**app?count** which may be used to retrieve a count of application installs based on a filter; 3) /**app?agg=app,** which may be used to retrieve aggregate applications based on a filter for summary classification boxes; and 4) /app/agg=install, which ma be used to retrieve aggregate installs. In embodiments the AFW platform 300 may be installed separately. The front end of the platform for the AFW platform 300 may be stored in an independent repository. A plug-in-based architecture may be used.

In embodiments, data may be obtained without access to an API, such as by ingestion of logs, such as from a system like Checkpoint™. The AFW platform 300 may take an export of a log as a snapshot analysis. In embodiments, continuous streaming of the data may be enabled. Sources of data may include cloud-based applications like Zscaler™, where data can be accessed through APIs, as well as on-premise applications like Splunk™, which can provide events in various formats, including through an API.

In embodiments a predictive or probabilistic score may be provided. Even in situations where an enterprise has not installed the AFW platform 300 on the enterprise network, the CSF 100 may say, predictively, such as based on a global data set for multiple enterprises, that there is a high probability that users of a given enterprise are installing a particular application (before the enterprise even installs the AFW platform 300).

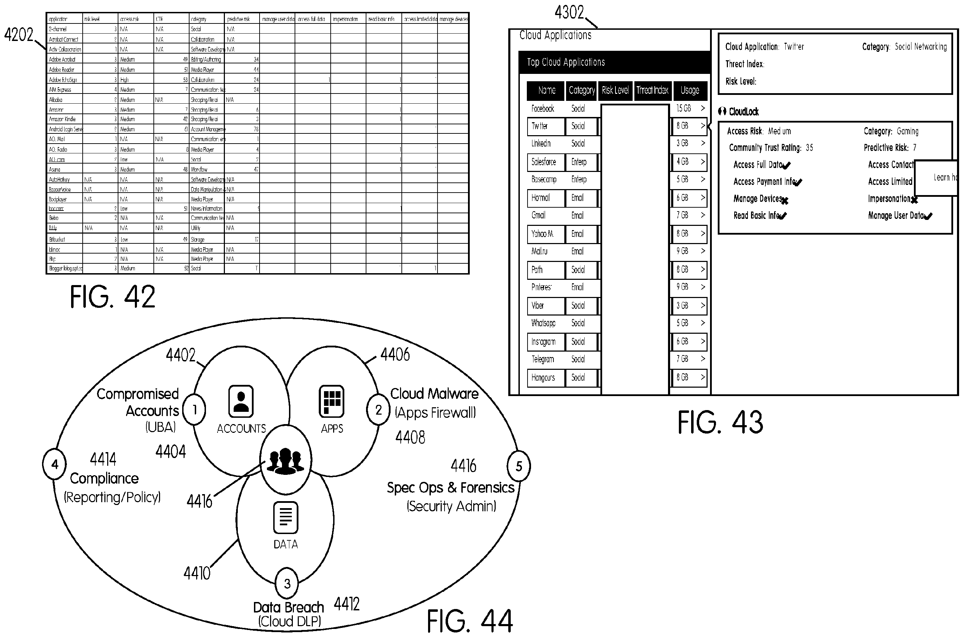

Fig. 42 shows an example of a portion of shadow IT report 4202 that lists some of the applications used by the users of an enterprise in the cloud and on its network, along with a subset of the various types of information that may be available from the application index 2912, such as an indication of the risk level of the application (such as determined by risk rating 2930), the access risk (i.e., the level of access the application requests, such as "full data access" versus access to limited data or no data), the community trust rating for each application, the category of the application, a predictive risk level (which may reflect the probability that the application is being used, the probability that there are users who in addition to regular usage granted access to enterprise assets (e.g., OAuth-based) for the application, or the like, as well as the community trust rating, which in turn reflects the probability that the application was used, that the application was actually granted access for this enterprise, or the like), whether the application manages user data, whether the application allows access to full data, whether the application could involve impersonation, whether the application reads basic information, whether the application accesses limited data, whether the application manages devices, and the like. This allows a more detailed breakdown of the kinds of risk that usage of various applications creates for the enterprise. A report like that shown in 4202 may be the result of the process described in connection with Figure 28, and it may also involve developing a compound index that includes information obtained from other indexes, such as manual classifications of applications performed by third parties, which may be accessed by file transfers or by using APIs that provide access to the indexes of other parties. Thus, in embodiments the application index 2912 may be a compound index that includes information obtained from various sources and various data collection, filtering and enrichment processes.

Access level attributes can include various attributes of an application that can create risk, such as the following: "access contacts," meaning the application requests access to contracts information (which may be considered a medium risk attribute); "access full data," meaning the application requests full access (read / write) to data or files (which may be considered a high risk attribute); "access limited data," meaning the application requests access to a limited portion of the data (which may be considered a medium risk application); "access payment info," meaning the application requests access to payment information (which may be considered a high risk factor); "impersonation," meaning the application requests use of impersonation to access user data (which may be considered a medium or high risk attribute); "manage devices," meaning the application requests to manage the allowed devices (which may be considered a medium risk attribute); "manage user data," meaning the application requests to control user attributes (which may be considered a high risk attribute); "read basic information," which means the application requests read access to the user's basic identification information (which may be considered a low or medium risk attribute); "read data," meaning the application requests read access to portions of the data (which may be considered a medium risk attribute); "read location," meaning the application requests read access to the user's location (which may be considered medium risk); "read personal information," meaning the application requests read access to basic identification information (which may be considered a low risk attribute); and any other attributes of applications that reflect the capability of applications to read or access data of a user, a device, or an enterprise.

In embodiments, reports from the AFW platform 300 can be provided to augment information provided or used in third party platforms, such as secure web gateways provided by parties like Zscaler™. For example, reports provided by such platforms may include details about shadow IT that are obtained from the application index 2912, such as the risk rating 2930 or the community trust rating 2914. The third party platforms may access the information through the API 2932 of the AFW platform 300. Alternatively, the third party may be given access to the application index 2912.

In embodiments, the creation of the application index 2912 may be automated, as compared to more conventional manual construction of the index, using techniques such as review of materials obtained from techniques like web scraping, where human reviewers obtain information about applications by reviewing materials on an application found in web pages and similar materials. In embodiments, a software agent or similar facility may go into online application marketplaces (e.g., Google, Microsoft, etc.) and scrape information about where the applications are located (e.g., domains where they can be accessed), the URLs by which they can be accessed, and the like, so that the applications can be identified for the index 2912. The agent can also obtain information from other domains, such as attributes like the vendors of the applications and descriptions of the applications. In embodiments, natural language processing (NLP) may be used to increase the information contained in the index 2912 on the application. For example, one may take a description from a blog on the web that talks about the application, what it does, and what industry it belongs to. The system can then extract entities and information from that text and augment information in the index 2912 about that application.

As compared to manual approaches conventionally used by security companies, automation of the index 2912 can enable the classification of large numbers (e.g., tens of thousands or more) of applications. As the number of applications being tracked increases, it becomes increasingly important to be able not only to scale the creation of a list, but to automate the process of surfacing the things that are most important within it (e.g., the attributes that contribute the most to riskiness of an application).

Fig. 43 shows an embodiment in which information about an application (in this case Twitter™), such as from the application index 2912, may be reported in a third party environment or dashboard 4302 along with information from other sources about the application.

In embodiments, the methods and systems disclosed herein may include one or more modules, associated with or as part of a cloud security fabric, for providing encryption services, including enabling encryption management 122, which may include enabling selective encryption (where a user (not just the enterprise as a whole) may self-select an additional measure of control over items of data that are stored in, or shared through, a cloud platform, such as one with respect to which the CSF 100 has information). Referring to Fig. 35, as noted above, selective encryption 3502 may allow an enterprise or user to have a party provide another factor to be able to access, modify, or share certain, selected data. For example, an enterprise may employ policies and rules that cause the automatic encryption of certain classes of data based on a contextual policy, a content policy or a behavioral anomaly managed by the policy creation and automation capabilities noted elsewhere in this disclosure. Selective encryption may provide significant benefits over conventional wholesale approaches, where enterprises typically encrypt entire drives or encrypt all traffic traveling across a firewall or secure tunnel. As items of data are now frequently stored or transmitted from cloud to cloud, remote from the enterprise network, it is not feasible for the enterprise to be able to encrypt everything that is sent to the cloud (before it leaves their network). Thus, it is increasingly important to be able to help identify what is sensitive and to enable users to apply encryption selectively, such as only to sensitive information. In embodiments, selective encryption 3502 may benefit from a process of discovery, classification and control. Thus, by accessing APIs for a given cloud platform (e.g., Google Drive™), a user of the CSF 100, such as an enterprise security administrator, may discover sensitive information that is stored on the cloud platform, such as FERPA, PII, PCI, IP, HR data, financial data and the like. Through a set of classification services of the CSF 100, as depicted in the classification services architecture of Fig. 9, various types of stored content, such as on a cloud platform used by users of an enterprise, may be classified. Such classification services, as described elsewhere in this disclosure, may involving extracting and analyzing text and other content in stored documents, then providing a set of results to or through the CSF 100 that indicate the likely nature of the types of content that are being stored, used or shared on or through a given cloud platform. For example, text extracted from a document may be fed to a content analyzer, which may, based on the text, conclude that the data is sensitive. For example, the presence of numbers in the format of a social security number, combined with common medical terms (e.g., names of medications), may suggest that the data should be classified as a medical record of a patient. A wide array of content inspection and analysis services may be used to provide such classification. Based on classification, an enterprise or user may control certain information, such as by selectively encrypting items of a particular classification, optionally without restricting the collaboration features available through the cloud platform, such as the ability to share the content item with another user. In embodiments, selective encryption may respond to the policy automation engine 116 of the CSF 100, such that encryption is based on a policy. For example, a policy may leave it to a user to decide whether to encrypt particular types of content, while it may automatically encrypt other types of content or it might 'quarantine' sensitive content until a user encrypt it or approves an exception. As noted elsewhere in this disclosure, this may occur in an automated way from a centralized policy automation engine 116 that publishes consistent policies with respect to encryption that are implemented in native formats appropriate for different applications. Thus, the options for encryption afford to a user may be consistent with respect to a type of data, regardless of the environment in which the user has chosen to work with that data (or, in some embodiments, taking into account policies that are based on the context or environment of the user, such as the perceived safety of a given environment).

In embodiments, selective encryption provides a people-centric encryption capability for users of cloud platforms. A selective encryption module 102 works natively in the cloud platform, without impeding real-time collaboration and editing capabilities that are enabled in the cloud platform. In embodiments, the classification services of the CSF 100 continuously monitor a given cloud platform (e.g., Google Drive™), discovering and classifying potentially sensitive information as described elsewhere in this disclosure. Built into the monitoring is a flexible system for informing users and administrators of potential risks and providing encryption capabilities without requiring additional overhead of hardware. Users who create and share files using a cloud file sharing platform may be notified, based on classification, by the CSF 100 of the potential sensitivity of certain content items (e.g., files that appear to contain HIPPA data), in which case users of administrators can use selective encryption services of the CSF 100 to add password-based encryption to the sensitive items or a secondary factor or secondary authentication as additional controls. The users can still securely share and collaborate with anyone to whom they share the password or, for example, to anyone who registers with the CSF 100 for secondary factor or authentication if used. Thus, security is encouraged and enabled, but the ability to share material within and from the cloud platform is not impeded. Thus, an enterprise can use the policy automation engine 116 and classification services to find sensitive and regulated data of its users on various cloud platforms; require, allow or encourage the users to encrypt the data; and allow the users to securely share and collaborate on encrypted documents from within the native cloud platform interface, without requiring the user to access, install or operate other software or hardware.

In embodiments selective encryption helps ensure that only trusted external users, partners, prospects and customers can see and share sensitive information, can protect against accidental over sharing and can enforce protection from offline data access of permission propagation for highly sensitive information. For instance, if client synchronization is used, and a file is encrypted, that file will now synchronize and become encrypted on the end point, which will be configured to prevent offline access.

In embodiments, selective encryption can ensure that a compromised set of credentials does not equate to a compromised set of sensitive files. In embodiments, selective encryption allows enterprises to securely enable third party applications without compromising sensitive data stored on sent through cloud platforms.

Selective encryption and the CSF 100 may allow users to enable functions like synchronization to a cloud platform while avoiding significant additional endpoint security risks. Selective encryption provides options for additional layers of security around confidential business data, such as M&A planning documents, software roadmaps, intellectual property and financial records.

In embodiments, encryption services enabled by the CSF 100 may be used to help quarantine a workflow or make it more secure. For example, within a given work flow, data may be stored in various fields, some of which are appropriate for confidential information (e.g., encrypted fields used for social security numbers and other PII, credit card numbers, passwords, and the like) and some of which are for less sensitive information (such as dates, non-sensitive numbers and the like). In embodiments inspection of fields associated with a work flow may be undertaken, such as using the content inspection and classification services noted herein, and sensitive data that is discovered to be in unprotected fields may either be encrypted (within the same field) or moved from an unprotected field to a safer, encrypted field. This may be undertaken automatically, or users may be notified and prompted to undertake action to secure the improperly located data. In this workflow, sensitive data can be quarantined (e.g., moved temporarily to a system account and made private) while a user gets notified with a 'smart' action in email prompting the user to review the sensitive data and encrypt it. When the user acknowledges the prompt, then the selective encryption engine in this embodiment may 'resume' and move the data back to the original field in encrypted form or may move the data to a different, encrypted field.

In embodiments, encryption services, such as selective encryption, may use a strong encryption protocol, such as Strong AES 256 encryption, sometimes denoted as "military grade" encryption. This level of encryption can help users attain compliance with certain regulations relating to protecting sensitive data, such as HIPAA regulations relating to patient data, financial data regulations (e.g., relating to credit card numbers, names and CVVs) and regulations relating to personally identifiable information (PII). In embodiments, it is not necessary to install client software to use selective encryption, as the capability to selectively encrypt may be integrated into a cloud resource, such as the Google cloud. Selective encryption may allow encryption of a wide range of content types, such as stored in cloud storage and applications (e.g., Google Drive, Box, Drop Box and the like), such as images, documents, .pdf files, and cloud native content items, such as Google™ documents. In embodiments, encrypted files can be shared. Such files may have an encrypted file type (e.g., .clk format) and can be shared like other file types in a cloud-based sharing environment, such as Google™ Drive. For example "can edit" and "view only" sharing privileges can be honored with respect to selectively encrypted content items. In embodiments selective encryption may be enabled without the host of the CSF 100 having access to passwords; for example, a selective encryption administrator of an enterprise that is using the CSF 100 can access files encrypted in his/her domain, without the host of the CSF 100 having access to the passwords. In embodiments, selective encryption may be enabled for folders and bulk operations, so that encryption can be performed and managed simultaneously for multiple content items.

In embodiments, access to selectively encrypted files can be provided with timeout characteristics, so that file access is ended automatically when a browser window is closed or when a browser session has ended, such as due to a detected network failure. In embodiments, an administrator may enable selective encryption for a group of users, such as a Google™ group by adjusting settings for the group.

Selective encryption 3502 may be enabled in native user interfaces of various cloud platforms with minimal impact on the user. In embodiments, there may be user interfaces by which a user may use selective encryption 3502. Referring to Fig. 35, a user interface 3504 for selective encryption 3502 may allow a user to open a document, such as within a platform like Google Drive®, to open a document using selective encryption 3502 as an option. In embodiments, the user may be prompted to set a password, in which case the document will be saved in an encrypted file format. Thus, encryption, on a document-by-document basis, is under control of the user and requires no more complex action than is required in saving a file. In embodiments, to open the document, a user or another user is prompted to enter the password that was set by the original user.

In embodiments, once a user enters a password, the user is taken directly to the file. When the window is closed, changes are automatically re-encrypted. A user may remove encryption by a simple action, such as clicking the "remove encryption" button.

In embodiments, to share an encrypted file, the user can simply select the file that will be shared in a file system of a cloud platform, such as Google Drive®. In embodiments, a user can click the "share" button and add collaborators through a user interface in the cloud platform.

In embodiments, a user can also elect to use selective encryption 3502 of the CSF 100 as a default encryption approach.

In embodiments, opening encrypted files by default may be accomplished in the "Manage Apps" menu of the platform or file system.

Referring to Fig. 36, in embodiments, the CSF 100 may have a plurality of selective encryption APIs 3602 that enable or interact with the selective encryption module 102 and its services to enable encryption and/or decryption. These may include an ID API 3604, an encryption API 3608, an ACL API 3614, a decrypt API 3612 and a keystore API 3610.

The ID API 3604 may log the user onto either to a selective encryption module 102, to the CSF fabric 100, to a system of a host of the CSF 100, or the like. The ID API 3604 may act as a second factor of authentication, such as in parallel with a user logging onto a cloud platform like Google™, for example. The ID API 100 may store and access sufficient information to identify a user of the CSF 100, which may include, optionally, mapping the ID of a user on a given platform to an ID associated with the host, the CSF 100 or the like and storing the user's password (or a hash thereof or the like). The ID API 3604 may thus implement logon and password management methods.

In embodiments, other factors may be used in connection with logon, in addition to or as an alternative to a password. This may be desired in some cases to avoid requiring a user to log on to a second system. A second authentication factor might be generated by the CSF 100 via integration into capabilities of the particular platform 130 or by integration with a customer-controlled identity or multi-factor authentication (MFA) system like that provided by Okta™.

The encryption API 3608 may encrypts data fed to it, optionally using a file format that is specific to the selective encryption module 102 or to the CSF 100 or its host, such as a ".clk" format. The user ID passed in to the encryption API 3604 from the ID API 3604 enables the data to be encrypted for that user, and for that user's domain administrator. The encryption API 3608 thus implements methods for encrypting data and user IDs.

The ACL API 3614 may set up and manage relationships between users and data. In each relationship, one can specify parameters controlling that relationship, such as time limit, number of times a user can interact with particular data, custom password relationships and the like. The ACL API 3614 can be used for various purposes, such as secure sharing, sharing a resource to a group, resetting a password, and letting users access a quarantined file as described above. When a user opens a document, the selective encryption module 102 can look to see if there is an access control list (ACL) set up for that relationship. If so, one can follow the rules set up there (e.g. requesting a password). Once access is granted through the ACL API 3614, one can enable access to the information, via the decrypt API 3612 described below. Methods implemented by the ACL API 3614 may include add ACL methods (user ID, resource ID, parameters); find ACL methods (ACL, user ID, resource ID), evaluate ACL methods (ACL ID, parameters) and enumerate ACL methods (userToken, resource ID).

Once access is granted from the ACL API 3614, one can use the token to decrypt a payload of data using the decrypt API 3612. Methods implemented by the decrypt API 3612 include decrypt data methods (data, ACL token) (such as for use when going through an ACL to access the data) and decrypt data methods (data, user token)(such as for use when decrypting a file owners data).

The keystore API 3610 may operate within the selective encryption module 102 or the CSF 100 to generate keys and manage (e.g. control access to) keys. The keystore API 3610 may act as an integration point with key stores and key management capabilities of third parties and customers. Also, the keyserver/keystore API can interact with customer-managed keystores (such as through a gateway, proxy or the like), such as ones deployed in public cloud, private cloud, or on premises keystores of the customer.

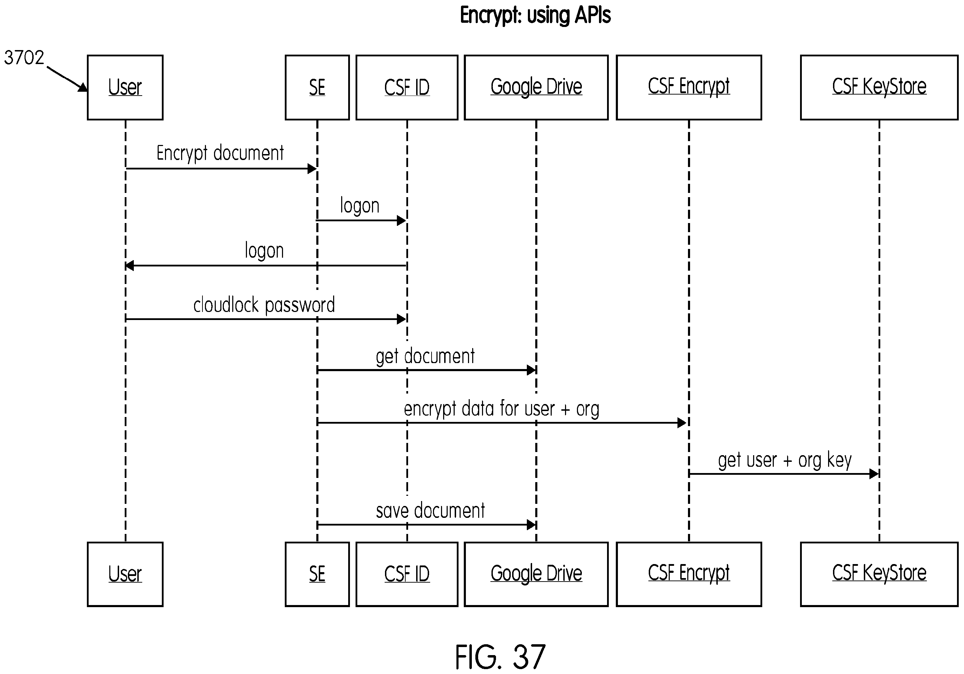

Referring to Fig. 37, an example is provided of an embodiment of a flow for using the APIs of the selective encryption module 102 for encryption. A user may encrypt a document using the user interface of the selective encryption module 102 and may be prompted to log on by the ID API 3604. After entering the user's password for the selective encryption module 102 or the CSF 100, a request to get the document may be delivered to a cloud platform (in the example of Fig. 37 this is Google Drive™, but it could be any platform) and the selective encryption module 102 may encrypt the document using the encryption API 3608 for the user and/or the organization. The encryption API 3608 may get the user and/or organization key from the keystore API 3610, after which the selective encryption module 102 may save the encrypted document to the cloud platform.

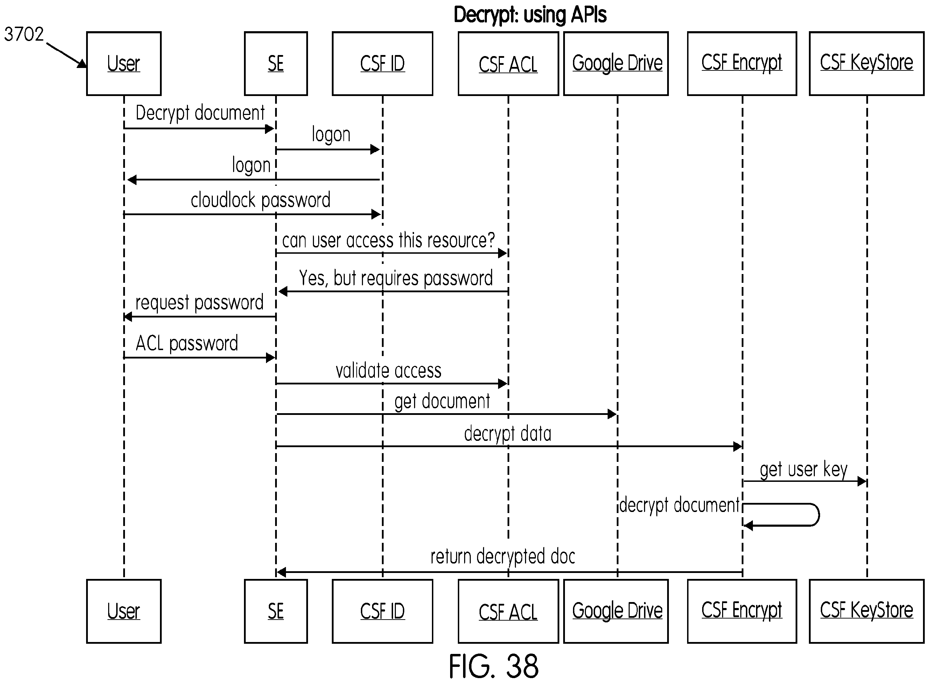

Referring to Fig. 38, decryption may involve a request from a user to the selective encryption module 102 to decrypt a document, leading to a logon process involving the ID API 3604, followed by an interaction with the ACL API 3614 to determine whether the user is entitled to access the requested resource. If so, then the user is requested to enter a password (which may be for the ACL API 3614 or for the CSF 100 more generally). When the password is validated by the ACL API 3614, the document may be requested from the cloud platform (e.g., Google Drive™) and the decrypt API 3612 may be used to decrypt the document (optionally accessing the keystore API 3610 for a user key). The decrypted document may then be provided to the user.

Referring again to Fig. 1, application development is increasingly taking place in PaaS/IaaS environments 138, and security of such environments requires a shared responsibility model. In a shared responsibility model, the degree of security that vendors are willing to assume and provide is often overestimated. For example, a provider of a PaaS/IaaS environment 138 may provide security "of the cloud." However a customer who uses the PaaS/IaaS environment 138 provided by the service provider may have to provide security "in the cloud." The customer and not the provider is ultimately responsible for what the users of the customer are doing in the PaaS/IaaS environment 138, which data is stored in this environment, and how this environment is configured.

A platform as a service (PaaS) environment may provide a platform to allow customers to develop, run, and manage applications without the complexity of building and maintaining the infrastructure typically associated with developing and launching an app. PaaS may be delivered in at least two ways: (1) as a public cloud service from a provider, where the user controls software deployment and configuration settings, and the provider provides the networks, servers, storage and other services to host the user's application, and (2) as software installed in private data centers or public infrastructure as a service and managed by internal IT departments. PaaS providers may include ActiveState, Anaplan, AppearIQ, Apprenda, AppScale, AWS, AWS Elastic Beanstalk, Cloud Foundry, CloudControl, Cloudera, Distelli, Corvisa, Engine Yard, Google App Engine, Heroku, Hewlett Packard, IBM Bluemix, Jelastic, Microsoft Azure Web Sites, Azure Cloud Services, Azure Mobile Services, Mendix, OpenShift, Oracle, OutSystems, Pivotal Software, Progress Software, QlikView, Ragic, Red Hat, Rollbase, Salesforce.com, Tsuru (PaaS), WaveMaker and the like.

Infrastructure as a Service (IaaS) refers to online services, including cloud services, that may abstract a user from the detail of various infrastructure elements, like physical computing resources, location, data partitioning, scaling, security, backup and the like. As an example, a hypervisor, such as Xen, Oracle VirtualBox, KVM, VMware ESX/ESXi, or Hyper-V may run one or more virtual machines as guests, and pools of hypervisors within a cloud operational system may support large numbers of virtual machines, enabling the ability to scale services up and down according to customers' varying requirements. IaaS clouds may offer additional resources such as a virtual-machine disk-image library, raw block storage, file or object storage, firewalls, load balancers, IP addresses, virtual local area networks (VLANs), and software bundles. IaaS providers may include Amazon Web Services, AT&T, Bluelock, CA Technologies, Cloudscaling, Datapipe, ENKI, Enomaly Elastic Computing Platform, Eucalyptus Systems, GoGrid, Google Compute Platform, HP, IBM, Joyent, Layered Tech, Logicworks, Microsoft Azure, Navisite/Time Warner Cable, OpSource, Oracle, Rackspace, Savvis, Terremark/Verizon and the like.

For purposes of this disclosure, PaaS and IaaS each comprise sets of services and resources that allow users, such as enterprises, to develop, deploy, and run applications in cloud environments, including to support other users, such as employees, where many important functions occur in the cloud, rather than on an enterprise network or on a user's desktop computer. Except were context indicates otherwise, PaaS and IaaS may be understood as interchangeable for purposes of this disclosure.

As illustrated in Fig. 1, the CSF 100 that is described throughout this disclosure can be extended to protect many types of applications, including applications developed and hosted entirely in the cloud, including applications developed and hosted in PaaS/IaaS environments 138. Protection may include tracking and reporting on events occurring within PaaS/IaaS environments 138, tracking and reporting on user behavior, and various remediation actions, such as sending alerts, changing access control privileges, blocking or suspending access, and the like, including any of the remediation actions mentioned throughout this disclosure.

The CSF 100 may protect applications developed and hosted in PaaS and IaaS environments 138 using an extension framework and an API 140. This extension framework and API 140 may be or include a CyberDev Pack 142. The CyberDev Pack 142 may be or include a PaaS/IaaS connector 146 to services on PaaS/IaaS environments 138.

This PaaS/IaaS connector 146 may extend the use of the CSF 100 services into the applications that may be built in on a Paas/IaaS environment 138. To enable a developer, the CSF 100 may provide packaged access to all of the individual services of the CSF 100 through connectors 144. The use of connectors 144 may allow developers 102 to enable core CSF 100 services to be applied to the applications that may be developed and run on a PaaS/IaaS environment 138, such as the Amazon Web Services™ platform (AWS™).

In embodiments, the CSF 100 may monitor all activity on an environment 138 like AWS. Monitoring all activity on an environment 138 like AWS may allow developers 102 to deploy everything to do with an application on top of AWS as a platform. When a developer creates an application the CSF 100 may be instantly configured to detect events and data that are logged by the environment 138 that supports the application.

As an example, a customer may go to the Amazon app marketplace and download an app, such as Gladinet™, which lets a user "run your own Dropbox" on the user's AWS resources. The user may set up this application in a few minutes. Because the app uses S3 as the storage mechanism, the CSF 100 may automatically protect it, with no coding required. The CSF 100 may be used to monitor the content by monitoring access logs to S3. The CSF 100 may monitor user activity. Similar capabilities may be enabled for each Paas/IaaS environment 138.

On each PaaS/IaaS environment 138, such as each platform like AWS, an enterprise may want to monitor the applications that run on it. In many environments 138, including the AWS platform, applications may generate log files. Cloudwatch™ is a log aggregator for such log files. In embodiments the CSF 100 may provide integration into Cloudwatch™ or similar log aggregators to monitor the application logs of various environments 138. In embodiments, a log aggregator is not required; for example, an operator of the CSF 100 maybe provide information about where application logs reside in a given platform or environment and may obtain information from that location. Similar to monitoring a SaaS application like SalesForce™ as described in various embodiments of the CSF 100 described herein, the CSF 100 may use aggregated application logs that are captured with respect to the applications that are running on each PaaS/IaaS environment 138. As with other APIs described herein, a PaaS/IaaS connector 146 may be provided between the CSF 100 and the PaaS/IaaS environment 138 to provide access to such aggregated log information.

In embodiments, many private cloud implementations are supported by the Openstack™ platform. By supporting the Openstack™ platform, the CSF 100 may monitor and report on activities on private clouds, as well as public clouds.

CSF 100 may also provide an enabler for Docker as well. Docker may allow a developer 102 to package an application with all of the dependencies of an application into a standardized unit for software development. Docker containers may wrap up a piece of software in a complete file system that contains everything it needs to run such as code, runtime, system tools and system libraries.

The CSF 100 may support and make more secure the entire lifecycle of an application, from designing, to coding, to testing, deploying, running, data collection and logs. The CSF 100 may provide support for a very wide range of environments. If an environment has an API, or provides logs on a PaaS/IaaS environment 138, the CSF 100 may be able to acquire data and use the data within the various services of the CSF 100.

In many cases, SaaS applications may not have event-based APIs. Some SaaS applications may have a screen that shows a page of events that have occurred with respect to the application. In embodiments, the CSF 100 may have a service that performs a screen scrape of such an event page to obtain at least some information that would otherwise be obtained via an API.

It may be noted that when the CSF 100 operates at the level of a PaaS/IaaS environment 138, like AWS, there may be cases where there is no application awareness, for example awareness of activity that would be observable if the CSF 100 were inspecting the API/resources of the application itself, as opposed to the PaaS/IaaS environment 138. In embodiments, the CSF 100 may see the platform and the CSF 100 may be used to map resources for the app.

The CSF 100 may be used to give the application a name, track the presence of the application as being at a designated location, and map resources, such as storage, for the app, so that the CSF 100 may see what the particular app is doing by observing what is happening with respect to the particular resources of the PaaS/IaaS environment 138, such as reflected in the event logs noted above. Elements within the PaaS/IaaS environment 138 may be tagged and observed with an understanding of their relationship to an application that may be developed or running on the PaaS/IaaS environment 138.

For example, a developer may specify where the Cloudwatch™ or similar log is for a particular application, may specify the storage resources (e.g., S3 buckets) for the app, or the like. Once mapped in this way, the CSF 100 may see the relevant behavior of or with respect to the actual application just as if the CSF 100 were inspecting the APIs/Resources of the application.

Thus, provided herein is a facility for allowing a developer to map what resources in a PaaS/SaaS environment 138 are being used by the app that the developer is using. To the extent possible, an operator of the CSF 100 may have the CSF 100 discover application resources automatically and, if that is not possible, the operator may map application resources in various other ways, such as through tagging and similar activities.

Today, in some PaaS/IaaS environments 138 like Azure™, security administrators may look at logs around the administrative activity of privileged users. In embodiments, the CSF 100 may be used to extend security to the application itself, not just activity of certain users.

The CSF 100 may include capabilities that provide and enable user-centric cyber security solution, including addressing the key areas and use cases of cyber security. For example, referring to Fig. 44, users 4416 may have access to accounts 4402, apps 4406 and data 4410. CSF 100 may protect accounts 4402 from security breaches such as compromised accounts 4404. CSF 100 may also protect apps 4406 from security threats such as cloud malware 4408. CSF 100 may also protect data 4410 from a data breach 4412 security event. CSF 100 may include additional capabilities that provide user-centric security, such as a compliance capability 4414 and a security operations (referred to in some cases as "secops") and forensics capability 4416. These additional capabilities may also protect accounts 4402, apps 4406 and data 4410 from security events. Thus, the CSF 100 may provide a unified security approach that addresses each of the major needs and use cases of a cyber security solution.

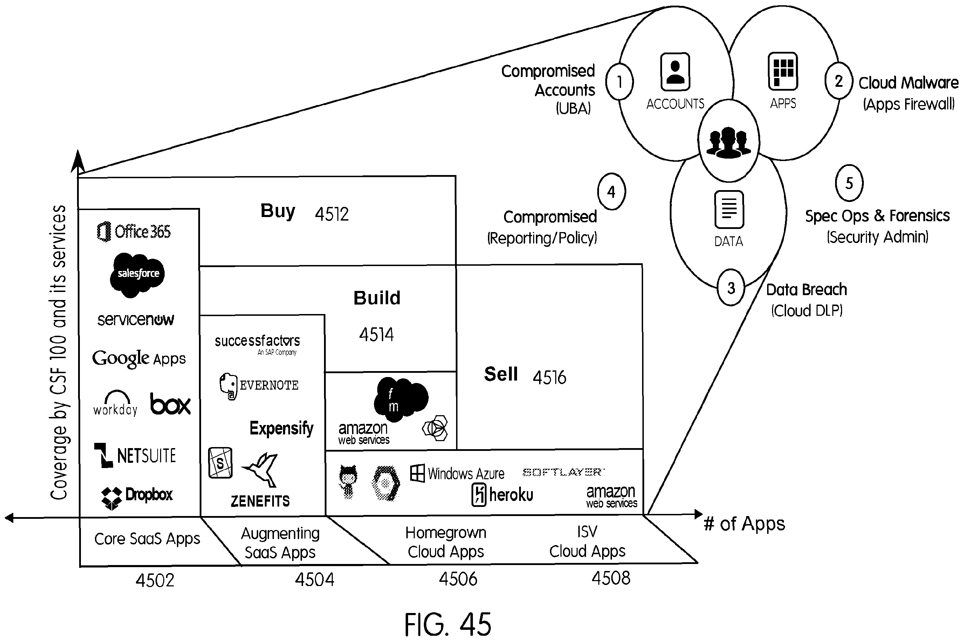

Referring to Fig. 45, CSF 100 applications are increasingly being developed and deployed solely in cloud-based computing environments. Applications that are increasingly being developed and deployed solely in cloud based computing environments may include core SaaS applications 4502, augmenting SaaS apps 4504, homegrown cloud apps 4506, ISV cloud apps 4508 and the like. Applications that are increasingly being developed and deployed solely in cloud based computing environments include ones that are bought and used 4512, built 4514 and/or sold 4516. As such applications are developed and proliferate, many for specialized purposes that may serve the needs of small numbers of users, it becomes increasingly difficult to manage this "long tail" of less-known applications on a one-by-one basis. By tracking various activities on IaaS/PaaS environments, the CSF 100 can more readily provide coverage with respect to such applications.

CSF 100 may connect to SaaS, PaaS/IaaS, and IDaaS applications to provide a continuous stream of security insight and control. By harnessing the power of formerly disparate data sets, APIs 108 may correlate information across platforms and throughout the organization to add depth and context to seemingly innocuous events and incidents.

Cyber security considerations may not be limited to the applications that organizations purchase. Cyber security considerations may extend to apps businesses build for internal use. By integrating the CSF 100 with custom, homegrown, internal applications, technology professionals may close security gaps within the environment and monitor custom applications with the same level of visibility and control organizations have with sanctioned SaaS applications.

The CSF 100 may allow security to be built into applications through API-based integrations with various security services of the CSF 100. This may allow independent software vendors (ISVs) to bring products to market with confidence in the security integrity of the application without shifting focus or resources away from core competencies.

Traditional approaches that focus on security events happening in the enterprise network behind a firewall, or even at the firewall boundary, may miss many of the most relevant security events related to users 4416, accounts 4402, data 4410 and PAAS 446, as illustrated in Fig. 44. CSF 100 may include capabilities that address key areas of cyber security, as illustrated in Fig. 44, which address core SaaS applications 4502, augmenting SaaS apps 4504, homegrown cloud apps 4506, ISV cloud apps 4508 and the like, which may be bought 4512, built 4514 or sold 4516.

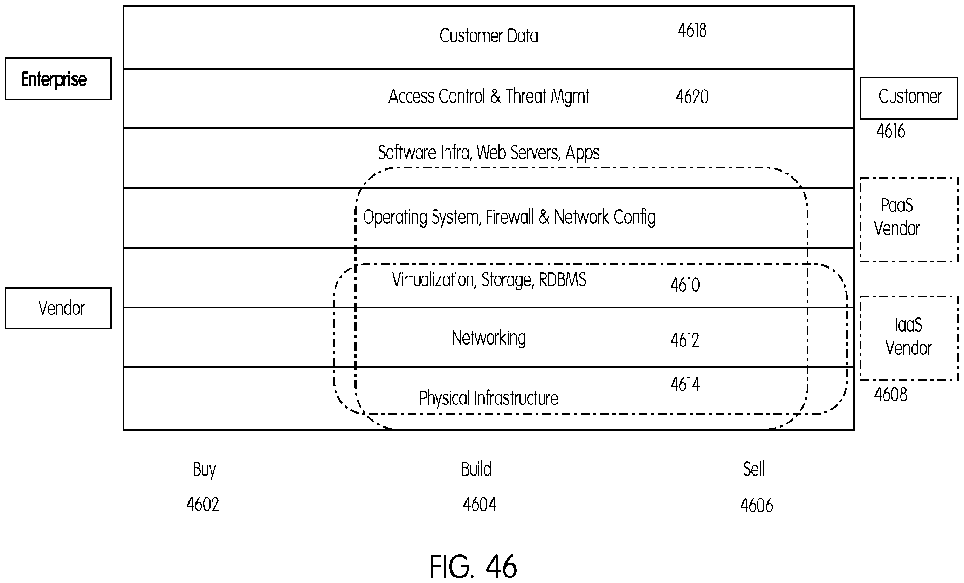

Referring now to Fig. 46, as apps are increasingly being developed and deployed solely in cloud based computing environments, the boundaries of responsibility may be shifted among a buy 4602, build 4604 and sell 4606 scenarios. Security measures that the cloud service provider may implement and operate may be referred to as security of the cloud. Security measures that the customer implements and operates, related to the security of customer content, usage and applications may be referred to as security in the cloud.

For example, leveraging IaaS may shift some of the lower level responsibilities to the IaaS Vendor 4608. Lower level responsibilities may include virtualization, storage, RDBMS 4610, networking 4612 and physical infrastructure 4614. Selling SaaS services to enterprise customers 4616 may introduce enterprise customer responsibility areas. Customer responsibility areas may include customer data 4618 and access control and threat management 4620.

CSF 100 may protect applications that may be built in a PaaS deployment or an IaaS deployment from security events. Applications that may be built in PaaS and IaaS deployments may be increasingly vulnerable to a wider range of security events than application deployments built in traditional, on-premise based application deployment environments, for example.

It may be also be understood that because applications that may be built in a PaaS deployment or an IaaS deployment may serve multiple users from multiple customers, the security events to which applications may be vulnerable may impact many more users and customers than the security events that threaten on-premise application deployment environments.

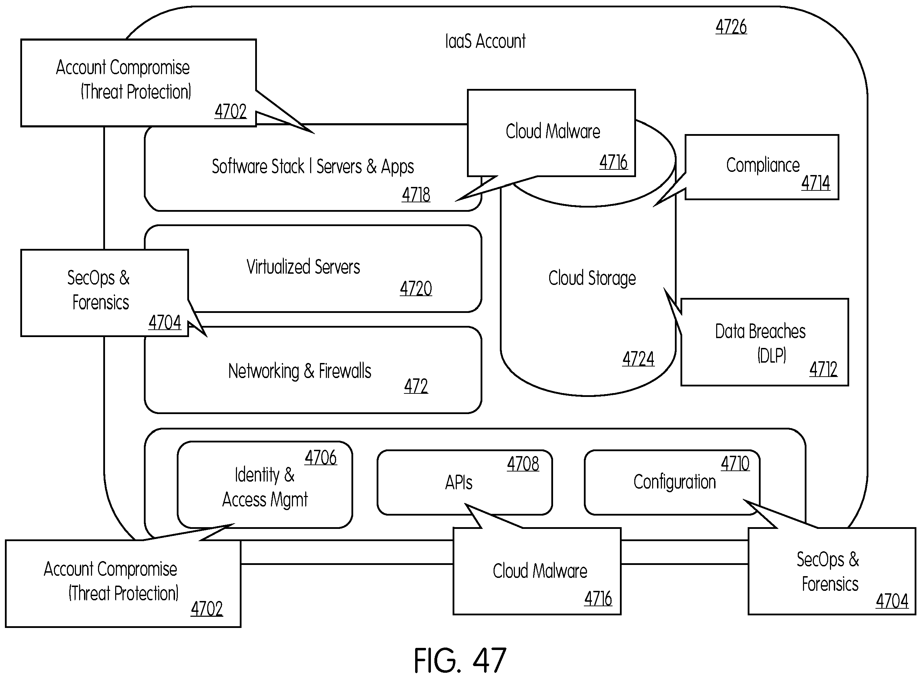

In an example and referring to Fig. 47, an IaaS account 4726 may include components that were not typically present in on-premise based application deployments such as software stack/servers and apps 4718, virtualized servers 4720, networking and firewalls 4722 and cloud storage 4724. Software stack/servers and apps 4718 may be vulnerable to adverse security events, such as account compromise 4702 and cloud malware 4716 security events. Network devices and firewalls 4722 may be log and produce various events that require evaluation by SecOps and forensics groups 4704. Cloud storage 4724 may require valuation for compliance 4714 with various rules and regulations and may be vulnerable to security risks like data breaches 4712. Also, in some cases there may be information that provides additional object context at the application level (such as, for example, an ACL representing sharing of an object with an external user). In many cases the CSF 100 may be configured (such as in a configuration interface and/or resource mapping activity) to understand the schema used to provide such context. Alternatively, an application developer, such as using the developer API of the CSF 100, may programmatically enrich the object context information provided for objects handled by an application that is being developed.

An IaaS account 4726 may also include components that were typically present in SaaS or on premise based application deployments, such as identity and access management 4706, APIs 4708 and configuration 4710. Access management 4706 may also be vulnerable to account compromise security events 4702. APIs may also be vulnerable to cloud malware security events 4716. Configuration D-10 may require work by security operations ("secops") and forensics groups 4704.

It may be understood from this example that applications in PaaS/IaaS environments 138 may be vulnerable to a wider range of security events than application deployments built in traditional, on-premise based application deployment environments and that CSF 100 may protect such applications from this wider range of security events, as well as provide operational and forensics capabilities, such as configuration, reporting and compliance.

The CSF 100 may include capabilities that may be used to support developers in developing applications 4802. Applications may be cloud-native applications that may be built in or run in a PaaS/IaaS environment 138. Capabilities of the CSF 100 that may be used to support developers in developing applications 4802 may be enabled through services provided by the CSF 100 and may be made accessible to developers through individual APIs for each service or through Cyber dev packs.

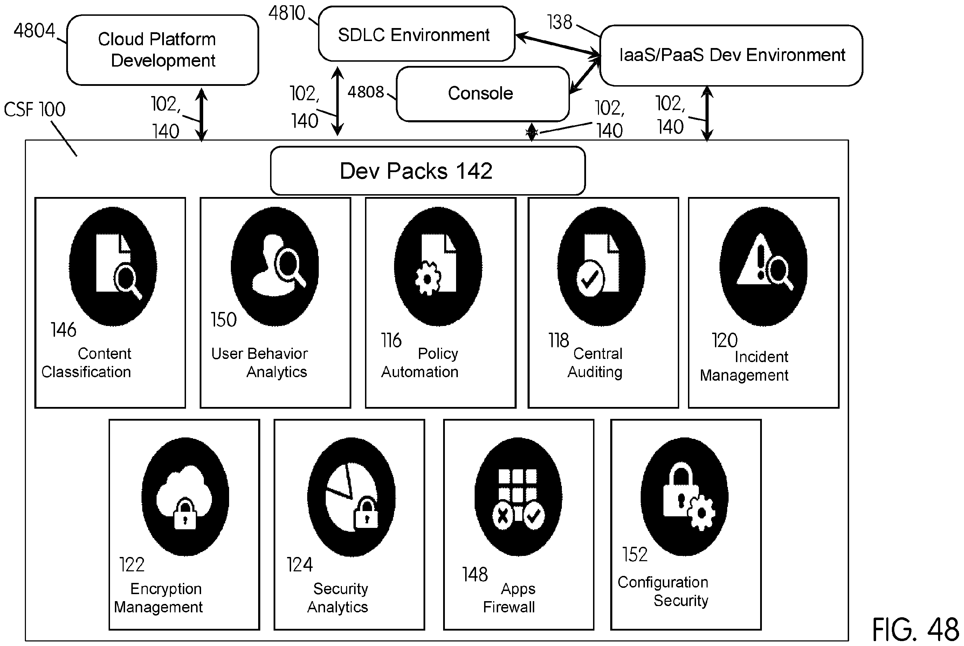

Referring to Fig. 48, capabilities that may be used to support developers in developing applications may include content classification services 146, user behavior analytics 150, policy automation 116, central auditing 118, incident management 120, encryption management 122, security analytics 124, application firewall 148 and configuration security 152 services, among others. These services may be accessed individually or in groups through developer APIs 102, including cyber developer APIs 142, as well as in packages (including cyber dev packs 142) that are appropriate for embedding particular capabilities for particular types of solutions.

Capabilities of the CSF 100 that may be used one-by-one or in combinations to support developers in developing applications for cloud platforms. Development of such cloud applications may occur, for example, within various cloud application development environments 4804 or or a system for developing and managing a SaaS application during the software development lifecycle (SDLC) 4810. Once developed, a cloud application may be deployed, configured, provisioned and managed, such as using a console 4808 for a specific environment 138, such as the AWS Console for IaaS™. The services of the CSF 100 may be provided, either one-by-one, or in combination, as services that are packaged or deployed for development of custom cloud applications by the developer (including using cyber developer APIS 142 or other developer APIs 102 for the CSF 100) that can enable such applications to embed services from the CSF 100 and/or to integrate with the CSF 100. Packages of services that help a developer, in the cloud platform development environment 4804, embed services of the CSF or otherwise access or integrate with services of the CSF 100 for purposes of enabling an application are referred to herein in some cases as dev packs or cyber dev packs 142. Other capabilities of the CSF 100 include various APIs to the services of the CSF 100 that can be used to protect a console 4808, SDLC environment 4810, or other environment, such as for configuring the services in connection with the management, provisioning, configuration or the like of the application, such as during the running of the application on an IaaS/Paas environment 138. Services and packages for IaaS may include features such as UBA policies (such as for a specific form like AWS), storage resource (e.g., S3) bucket scanning, access to access logs (such as S3 logs) and overall platform integration. CSF 100 capabilities for custom applications or dev packs may include features such as application awareness (which may be provided through automatic discovery of applications and/or tagging of application resources), application logs (e.g., with CloudWatch™, a log aggregator) and awareness and logging for additional platforms or environments 138. Additional platforms or environments 138 may include Force.com™, Azure™, OpenStack™, Heroku™ and the like. Security service APIs of the CSF 100 may include features such as a data scanning API, encryption APIs and UBA APIs, among others. A secure SaaS SDLC service may include developer services, features and resources enabled by development environment providers such as GitHub™, Slack™, Hipchat™, Bitbucket™, Confluence™, JIRA™, as well as out of the box ("OOTB") Dev Policies and response actions. Other features may include application awareness, EC2 logging (such as for UBA), packaging and onboarding, and key management (such as for each platform). In embodiments, security is extended beyond usage of an application in production to other phases of the lifecycle of the application, such as during design and development and at runtime. For example, resources used by developers (like github™) to store code files may be scanned for sensitive content during the software design process, conversations in forums like Slack™ can be scanned for sensitive content, and tickets in ticketing systems like Jira™ can be tracked.

Capabilities that may be used to support developers in developing applications 4802 may include cloud development CASB mapping for both developers and users. Users may be customers, internal users and internal workloads or processes. CASB mapping of cloud development for developers and users may include mapping to threat protection, data protection, compliance, visibility and auditing requirements of CASB solutions.

Threat protection for developers may include tracking which developers have access to infrastructure and how users or resources are accessing it. Data protection for developers may include tracking and managing access to code, secrets in code and logs, toxic customer data in applications and sensitive developer data. Sensitive developer data may include data relating to revenue. Compliance for developers may include tracking compliance with respect to requirements relating to sensitive customer data used by or in an application, such as PCI, PII or HIPPA data. Visibility for developers may include external integrations in development and deployment environments and "shadow" tools used by developers. Auditing for developers may include infrastructure configuration changes.

Threat protection for users may include who has access to an application and how a user is using or accessing it. Data protection for users may include identification of and/or protection against excessive sharing of data to the application, identification or protection against excessive access to application data, and encryption for sensitive app data. Compliance for users may include compliance with respect to sensitive data and/or toxic data used by or in an application. Visibility for users may include reporting of events by APIs and integrations of reporting features into applications. Auditing for users may include the ability to audit usage, including application configuration changes.

Capabilities that may be used to support developers in developing applications 4802 may include providing CASB mapping on environments 138 like AWS™ for both developers and users. Users may be customers, internal users and internal workloads. CASB mapping on AWS for developers and users may include mappings with respect to threat protection, data security, compliance, visibility and auditing, among others.

Threat protection for developers may include user behavior analysis capabilities and configuration monitoring (such as for AWS accounts), such as by configuration monitoring services like CloudTrail™ and AWS Config™. Data security for developers may include Github™ configuration monitoring and scanning of Github™ logs (including S3 logs and CloudWatch™ or similar logs), such as for the presence of secrets or other sensitive data. Compliance for developers may include the ability to scan storage resources like S3™ buckets, database tables, such as RDS DB tables, and database objects, such as DynamoDB™ objects. Visibility for developers may include providing information about access to keys or tokens, such as AWS keys or tokens, as well as providing information from the AFW 300, such as for Github, Slack, JIRA and the like, as well as scanning of code for included packages. Visibility for developers may include basic UBA features and may also include content scanning. Auditing for developers may include monitoring AWS account configuration changes (such as by monitoring using a capability such as provided by CloudTrail™). CASB mapping on AWS for developers and users may also include collecting information from S3 access logs (including for UBA) and content scanning (such as for DLP), as well as evaluation of EC2 machine access events (such as for UEBA) (such as via CloudWatch™) and content scanning for application logs (such as via CloudWatch™). Storage resource (e.g., S3) content scanning may include scanning (e.g, DLP) for designated storage buckets, such as designated S3 buckets. Collecting access logs may include collecting S3 access logs for designated buckets.

Threat protection for users may include UBA for custom application logs (e.g., AWS CloudWatch) and UBA for data access logs (e.g., S3). Logs may include logs for linux hosts. Logs for linux hosts may include /var/log/secure, /var/log/auth and the like.

Data security for users may include collecting information about application data sharing and access, including SE for S3 and DynamoDB. Compliance for users may include scanning S3 buckets and other AWS storage. Visibility for users may include using the AFW 300 for application integrations, such as via a gateway, such as the AWS API gateway. Auditing for users may include auditing with respect to app configuration changes.

Capabilities that may be used to support developers in developing applications 4802 may provide use case mapping on an environment 138, such as AWS, for both developers and users. Users may be customers, internal users and internal workloads. Use cases for developers and users may include account compromise (UBA/threat protection), data breaches (Cloud DLP), compliance, cloud malware (AFW) and SecOps and forensics.

Account compromise features (e.g., UBA/threat protection) for developers may include UBA, configuration monitoring, such as for AWS accounts (e.g., by CloudTrail and/or AWS Config), UBA for machine access and UBA for accesses to a code repository. UBA for machine access may include ssh activity (e.g., by CloudWatch). A code repository to which the services of the CSF 100 may be applied may be a Github code repository and the like. Features related to data breaches (e.g., as determined by Cloud DLP) for developers may include Github configuration monitoring and scanning of Github logs (e.g., S3/CloudWatch logs) such as for secrets or other sensitive data. Compliance features for developers may include scanning of storage, such as S3 buckets, RDS DB tables and DynamoDB objects. Cloud malware features for developers may include the capabilities of the AFW 300, such as for access keys or tokens, such as AWS access keys or tokens, as well as use of the AFW 300 for developer resources like Github, Slack, JIRA and the like, as well as scanning of code for included packages. SecOps and forensics features for developers may include monitoring AWS account configuration changes (e.g., by services like CloudTrail™).

Account compromise features (e.g., UBA/threat protection) for users may include UBA for custom app logs (e.g., AWS CloudWatch) and UBA for data access logs (e.g., S3). Features relating to data breaches (such as Cloud DLP) for users may include managing and reporting on application data sharing and access, as well as SE for S3 and DynamoDB. Compliance features for users may include scanning storage resources like S3 buckets and other AWS storage. Cloud malware features for users may include using the AFW 300, such as for application integrations via gateways, such as an AWS API gateway. SecOps and forensics features for users may include app configuration changes.

Capabilities that may be used to support developers in developing applications 4802 may be enabled by the capabilities of the CSF 100 itself, as well as by the reporting of events occurring on the PaaS or IaaS itself. For example, CSF 100 may make data passing across APIs and in logs that can be accessed by APIs or otherwise, such as logs published to the CSF 100, available to developers developing applications.

In a set of use case examples, capabilities that may be used to support developers in developing applications 4802 in IaaS and PaaS environments may help protect applications at different layers in the development stack. Different layers in the development stack may include Layer 1, Layer 2 and Layer 3.

An example of protecting an application at Layer 1 may be protecting an AWS account. Protecting an AWS account may apply to any company that may depend on AWS and that may want to protect the AWS account of the company. This may be an example of classic SaaS protection and may include UBA on activities, sensitive changes to configurations and "superman" or velocity-based policies. Protecting an AWS account may include console protection and AWS protection and may apply to companies who run most of their IT functions on AWS, or in a further example, a manufacturer who runs a supply chain workload on AWS, even if the manufacturer is not exposing or selling anything on AWS and even if AWS is running internally.

An example of protecting an application at Layer 2 may be protecting actual workloads. Protecting actual workloads may mean protecting the content of S3 storage resources (even if for internal use). Protecting actual workloads may also include checking who is accessing machines, such as checking access to EC2 machines and checking activities on a firewall, such as a web application firewall (WAF). Access to EC2 machines may include access logs, security and ops people of the ISV. Protecting actual workloads may also include storage for end-user generated files.

An example of protecting an application at Layer 3 may be related to a software product that is running on AWS that is used by a user, such as a customer of an enterprise. The user may have data that that owner of the software product is storing for the customer. The customer may want the owner of the software product to protect the data and the access pattern to that data. Ultimately security incidents may be generated in the software product and shown to the customer by the owner of the software product. This may be an example of a multi-tenant approach. For example, the owner of the software product may grant a customer the ability to see who is logging into the instance of an instance of an application used by that customer. In this example, application logs may serve the second and third layers.

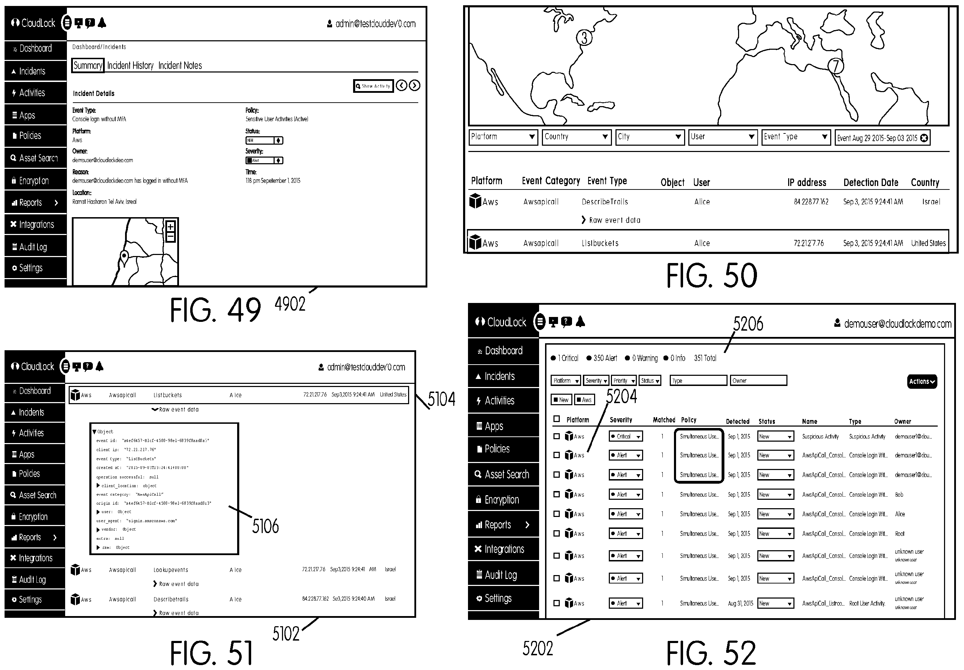

Referring to Fig. 49, CSF 100 may include configuration monitoring and security. Configuration monitoring and security may include monitoring of sensitive configurations and monitoring of privileged access. Sensitive configuration monitoring may detect changes to key configurations, such as security group and password policy settings. Secure privileged access may include monitoring of the creation of access keys, such as AWS access keys, monitoring of logins by the "root" user and monitoring of logins without multi-factor authentication ("MFA"). Fig. 49 illustrates one embodiment of a user interface PAAS 4902 for configuration monitoring and security of CSF 100. Configuration monitoring and security user interface 4902 may include a summary, incident history and incident notes. The summary may include incident details. Incident details may include event type, platform, owner, reason, location, policy, status, severity and time. The location of a user or event may be displayed on a map.

Referring to Fig. 50, CSF 100 may include user behavior analytics. User behavior analytics may include detection of simultaneous activities to indicate possible suspicion of using a compromised account. User behavior analytics may also include alerting of on and off site activities. Fig. 50 illustrates one embodiment of a user behavior analytics user interface 5002. User behavior analytics user interface 5002 may include a map indicating where activities may be taking place. User behavior analytics user interface 5002 may include platform, event category, event type, object, user IP address, detection date and country. User behavior analytics user interface 5002 may allow information to be filtered based on platform, country, city, user, event type, event date and time, behavior profiles, anomaly detection, and the like.

Referring to Fig. 51, CSF 100 may include privileged user monitoring. Privileged user monitoring may monitor and record all actions of an administrator or other privileged user, such as an AWS administrator. Privileged user monitoring may also monitor root access and access to key management capabilities. Fig. 51 illustrates one embodiment of a privileged user monitoring user interface 5102. Privileged user monitoring user interface 5102 may display event data 5104 and raw event data 5106.

Referring to Fig. 52, the CSF 100 may track events as security incidents. Referring to Fig. 1, events may be detected by content analysis 110, content classification 146, an apps firewall 148, such as the AFW 300, security analytics 124, encryption management 122, incident management 120, context analysis 112, central auditing 118, policy automation 116, user behavior monitoring 114, user behavior analytics 150, configuration security 152 and configuration management 134. Events may also be detected by the cyberdev API 140, cyberdev pack 142, connectors 144, application connection APIs 108 and/or enterprise APIs 104. Events can be tracked as security incidents, reported on dashboards and fed to SIEMS.

Fig. 52 illustrates one embodiment of a security tracking user interface 5202. Security tracking interface 5202 may display events 5204. Security tracking interface 5202 may include a summary count of events based on event severity 5206. Event severity may include critical, alert, warning and other. Security tracking interface 5202 may include event data such as the platform on which an event happened, severity levels of events, matches to filters, policy information, the nature of the data detected, status information, event names and event types. Security tracking interface 5202 may allow filtering of events by platform, severity, policy, status, type, owner and the like.

Security tracking user interface 5202 may provide application protection. Application protection may include data/storage protection, privileged access monitoring, application activity logging and forensics, incident and policy management and enterprise application. Application protection may be provided without requiring changes to the application or the code of the application.

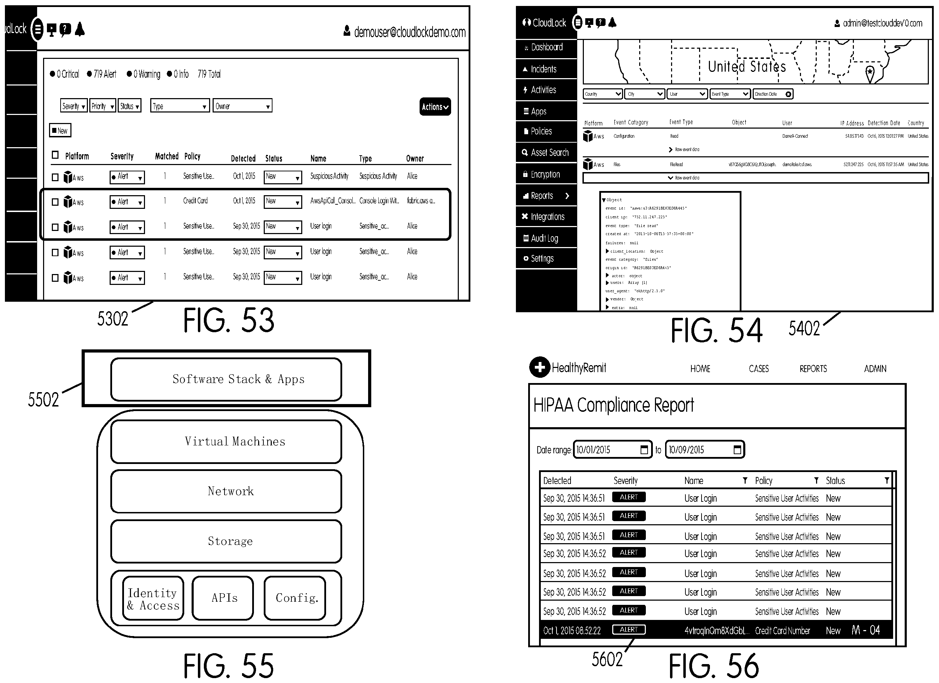

Fig. 53 illustrates an example of using the CSF 100 for reporting on the detection of a violation of a policy. CSF 100 may detect incidents for sensitive activities and provide visibility into activities. Detection and violation of a policy may include coverage of user behavior analysis (UBA). UBA coverage may include whitelist, superman/velocity-based policies and the like. Detection and violation of a policy may also include configuration, third party API access and the like. Fig. 53 illustrates reporting on detection of a violation of a policy user interface 4502.

Fig. 54 illustrates an example of resource access detection, such as S3 direct access detection. The CSF 100 may also detect S3 data direct access. Fig.54 illustrates a user interface 5402 for the detection of S3 data direct access.

Referring to Fig. 55, CSF 100 may enable providers of an application to build security features directly into the software stack and apps PAAS L-02 that the developers will sell to third parties, such as their customers. Security features may be built directly into the software stack and apps 5502 by using content analysis 110, content classification 146, apps firewall 148, security analytics 124, encryption management 122, incident management 120, context analysis 112, central auditing 118, policy automation 116, user behavior monitoring 114, user behavior analytics 150, configuration security 152 and configuration management 134. Security features may also be built directly into the software stack and apps 5502 by using the cyberdev API 140, the cyberdev pack 142, connectors 144, application connection APIs 108 and enterprise APIs 104. Security features may elevate visibility to data protection, enable activity logging and forensics and provide incident and policy management.

Referring to Fig. 56, the CSF 100 may include an embedded security policy enforcement capability. In the example illustrated in Fig.56, an embedded security policy enforcement capability may indicate that an event 5604 may have violated a security policy, such as by highlighting event 5604 (e.g., in red) in an embedded security policy enforcement user interface 5602. Embedded security policy enforcement user interface 5602 may include information related to security events. Information related to security events may include the date and time the event was detected, the severity of the event, the name of the event, the name of the policy, the status and the like. Embedded security policy enforcement user interface 5602 may allow filtering of events by date range, name, policy and status.

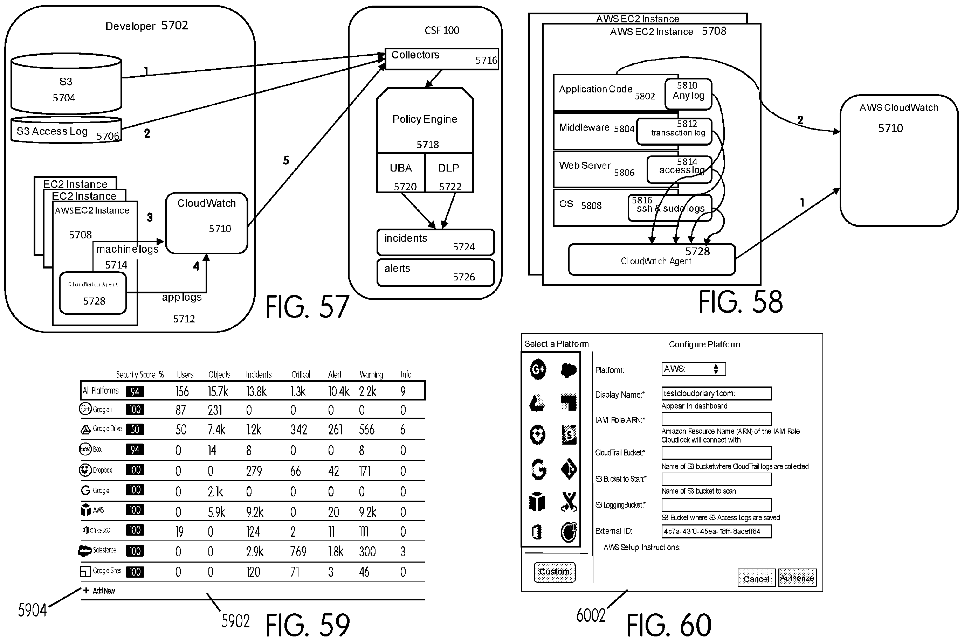

Fig. 57 illustrates an example data flow that the CSF 100 may undertake and to get and inspect the data it needs to apply the services of the CSF 100. In the example data flow of Fig. 57, content scanning 5704 may collect object content, such as S3 object content, for inspection. Inspection may include DLP inspection and compliance inspection. Access logs may also be monitored at a step 5706, where the CSF 100 may collect logs, such as S3 access logs, for inspection, such as for UBA. In embodiments an agent 5728 may collect machine logs 5714, such as Cloudwatch™ logs, such as from instances, such as AWS EC2 Instances 5708 and send machine logs 5714 to cloudwatch 5710. CSF 100 agent 5728 may collect app logs 5712 from AWS EC2 Instances 5708 and send app logs 5712 to a log aggregator 5710, such as a Cloudwatch™ aggregator. The CSF 100 may collect machine logs 5714 and app logs 5712 for inspection from the log integrator 5710, such as using collectors 5716. Collectors 5716 may send machine logs 5714 and app logs 5712 for inspection to policy engine 5718. Inspection may include UBA inspection 5720 and DLP compliance inspection 5722. In embodiments, UBA inspection 5720 and DLP compliance inspection 5722 may detect incidents 5724 and alerts 5726.

Referring to Fig. 58, log aggregator 5710 provides collectors that collect and forward logs from a local file system into an agent 5728, such as a Cloudwatch™ agent. A local file system may be an AWS EC2 instance, as illustrated in Fig. 58. Collectors may be any log collectors 5810, such as transaction log collectors 5812, access log collectors 5814, ssh and sudo log collectors 5816 and the like. Cloudwatch™ agent 5728 may send logs collected from collectors to the log aggregator 5710. Log aggregator 5710 may also receive logs directly from application code 58O-02, middleware 5804, web server 5806, 5808 and the like. In other embodiments, collection may be achieved using other facilities, such as Logstash™ with similar logging and shipping solutions.

Figs. 59 to 63 illustrate embodiments of user interfaces that may be used to add a custom application that may be used with CSF 100. Fig. 59 illustrates the initiation of the process to add a customer application that may be used with CSF 100. Referring to Fig. 60, the process to add a custom application that may be used with CSF 100 may be initiated by selecting the Add New indicator 5904 on a user interface 6002 to add a custom application that may be used with CSF 100.

Fig. 60 illustrates a user interface 6002 which may be used to configure a platform for a custom application, which may be used with CSF 100. Referring to Fig. 60, the user interface 6002 may be used to configure a platform for a custom application, which may be used with CSF 100, such as to include platform selection, display name, identity and access management ("IAM") role, application resource identifier ("ARN"), CloudTrail™ bucket to scan, S3 bucket to scan, S3 logging bucket, external ID, ASW setup instructions, as well as cancel and authorize functions.

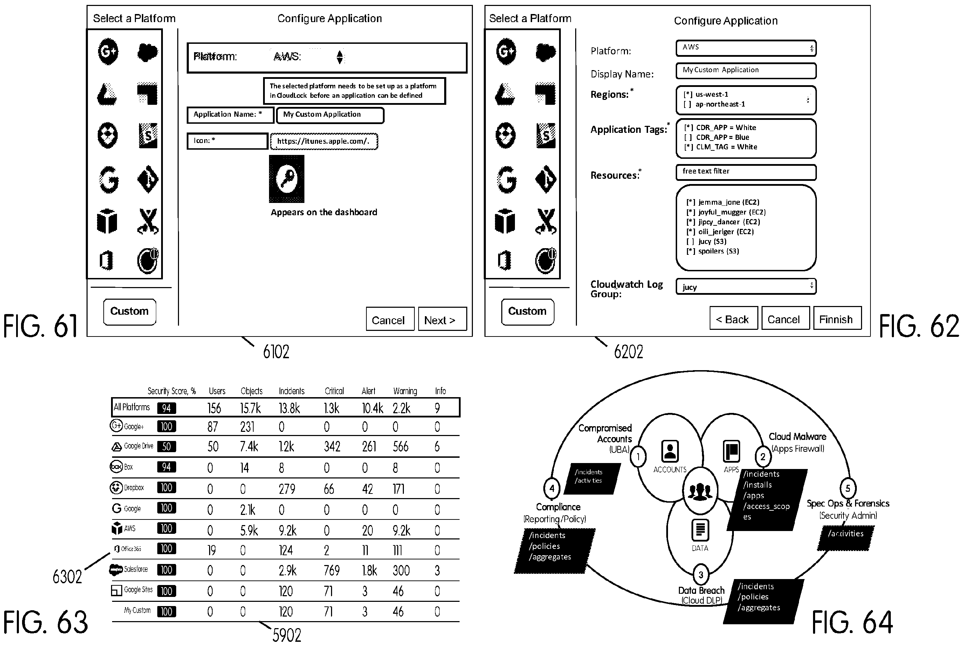

Referring to Fig. 61, the user interface 6102 may be used to configure a platform for a custom application that may be used with CSF 100, which may also include application name and icon.

Referring to Fig. 62, a user interface 6202 may be used to configure a platform for a custom application, which may be used with CSF 100 and may also include platform, display name, regions, application tags, resources, Cloudwatch™ log group and the like. Multiple regions, tags and values in the region and all resources that match the tag/value selection may be supported by the user interface 6002. The user interfaces may also support free text searches that may allow filtering of resources.

Fig. 63 illustrates a custom application 6302 that may be used with CSF 100 and added to user interface 5902.

Referring to Fig. 64, cyber security professionals must increasingly focus on a wide range of threats to an enterprise and satisfy an increasingly demanding set of requirements from the enterprises they serve and outside parties like regulators. The threats include compromised user accounts, malware (such as from the cloud), and data breach, and the demands include compliance requirements and operational and forensic requirements. To address all of these use cases, a need exists for a flexible platform that has a wide variety of services and components. The CSF 100 and certain capabilities of it, as described herein, can support solutions to each of these use cases for a security professional. For example, the unified application firewall solution, or AFW 300, can address malware threats, including cloud-based malware. User behavior analysis, as described elsewhere herein, can address compromised accounts. DLP and similar solutions can address data breach situations. Various reporting and policy capabilities can address compliance requirements. Administrative capabilities can address the need for security operations and forensics.

Security industry analysts, like Gartner, increasingly recommend an adaptive, context-aware security architecture and framework for managing IT security, with continuous monitoring and analytics. This approach is a change in approach, such as from a focus on "incident response" to a focus on "continuous response." Increasingly, there is a need to invest in detection, response and predictive capabilities, which in turn allow creation of a more context-aware protection platform. An architecture that can perform continuous monitoring, and that can address all different layers of an IT stack where threats can occur, is needed. This includes an architecture that can deal with network packets, flows, OS activities, content, user behaviors and application transactions, among other factors.

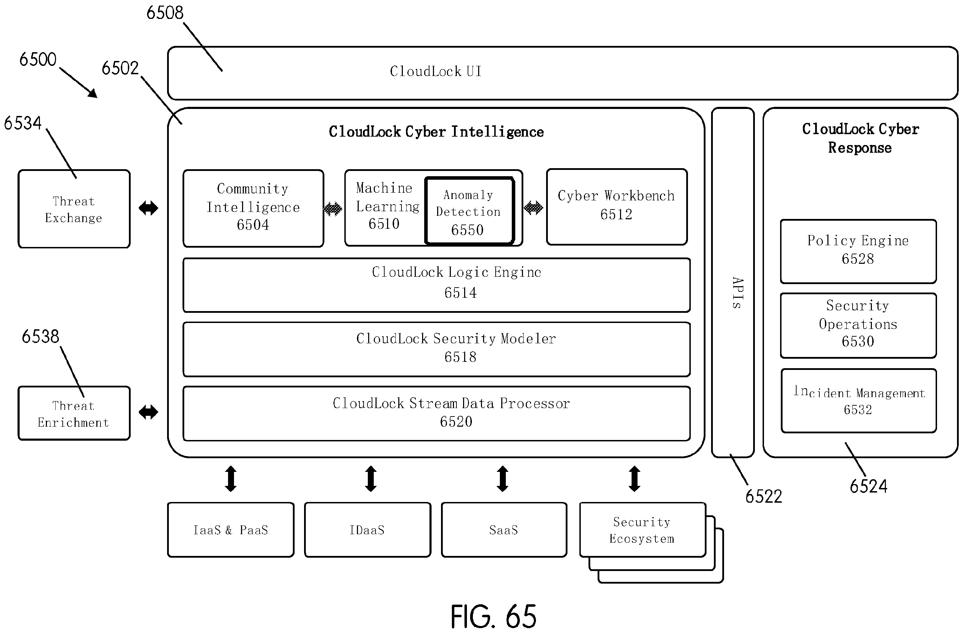

Referring to Fig. 65, a platform 6500 may provide various components, services and capabilities for enabling cyber intelligence. This includes the ability to provide advanced insights and reports for specific enterprises and across a community of enterprises (i.e., community intelligence, such as allowing a group of enterprises to respond to a common threat). The platform 6500 may comprise a crowd-sourced, cloud-based cyber security platform, with machine learning and a cyber analytics workbench to provide advanced analytics around a wide range of data collected by the methods and systems disclosed throughout this disclosure.

The platform 6500 may include a set of cyber intelligence engine services and components 6502, which may include a data stream processor 6520, a security modeler 6518, a logic engine 6514, a machine learning engine 6510, a community intelligence module 6504 and a cyber analytics workbench 6512. The community intelligence module 6504 may provide or use community trust ratings (CTR) with respect to third party applications, as well as provide intelligence based on patterns that are determined across different enterprises, such as ones that use the CSF 100 or its various services.

The cyber analytics workbench 6512 provides cyber laboratory capabilities, such as allowing data scientists and other security analysts to identify patterns and analyze trends across events, across enterprises, and the like, providing insights on the overall security of an enterprise with respect to the use cases noted above.

The logic engine 6514 may include and use a wide range of capabilities, including implementing rule-based policies, such as content detectors, frequency-based rules, threshold-based rules, proximity rules, and sensitivity analyses. The logic engine 6514 may implement RegEx capabilities, and geo-location rules. The logic engine may use bloom filters, key words, and classification systems. The logic engine 6514 may also process information on sharing events and operate on IP information. The logic engine 6514 may include capabilities for behavioral analysis, such as based on user activities, based on activity thresholds, based on user location, based on time of day, and based on packages of user behavior. Anomaly thresholds may be detected, such as based on the user's velocity, as indicated by locations of access over a given time period. The logic engine 6514 may include classification capabilities, such as content classification for files and objects (including using the content classification as a service capabilities of the CSF 100) and entity and application classification, as well as context classification, such as relating to sharing, ownership and directory information. The logic engine 6514 may also perform user classification. The logic engine 6514 may also use a rules engine, such as for policies, such as policies that are based on classification or context, including policies for governance, compliance, sharing, and potential malware. The logic engine 6514 may also classify behaviors, such as based on combined classifications and anomalies that involve more than one dimension. The logic engine 6514 may detect dormant accounts. The logic engine 6514 may also perform advanced risk scoring.

The security modeler 6518 may enable entity correlation and relationship modeling for entities and attributes that relate to applications, users, events, and the like. The security modeler 6518 may provide for correlation or entities and normalization of entities, such as normalizing how a given attribute is represented in a native data model, despite it being represented differently in other applications or platforms. By providing a unified, normalized model of entities, the security modeler 6518 may enable forensics and auditing on entities, as well as unification of policies and reporting across different platforms. This in turn enables establishing a multi-cloud security intelligence platform, with the various capabilities described herein.

The data stream processor 6520 may provide for data collection and processing via various interfaces, including APIs, such as to collect data from external systems, including PaaS/IaaS platforms, IdaaS platforms, SaaS platforms and platforms of providers of various security ecosystem products and services. The data stream processor 6520 may comprise a large-scale, multi-tenant ingestion and processing engine, such as enabling collection of data relating to tens of millions of users, more than one billion files, and more than one hundred million activities on a daily basis. The data stream processor 6520 may include a connector package or similar interface for any application, such as via IaaS/PaaS, without requiring coding. In embodiments the data stream processor can connect to any application or platform and collect data without requiring additional coding. For example, connectors between the platform 6500 and an IaaS/PaaS environment may be made at the infrastructure level or at the level of a particular service to allow various cyber security use cases, such as activity monitoring and the enablement of DLP for applications that are built on the IaaS/PaaS environment. Also, the platform 6500 may include or work with a vendor machine - a technology that allows an operator of the platform 6500 or the CSF 100 to configure connectors or simple scripts to platforms without requiring a developer to build code. The vendor machine may allow various users of the CSF 100 to extend and connect to environments of various SaaS, IaaS and PaaS vendors.

The machine learning engine 6510 may provided advanced analysis that adaptively learns, such as learning patterns in user behavior, entity behavior, and other factors to uncover patterns. As described in more detail below, machine learning engine 6510 may perform user anomaly detection (such as involving multi-dimensional anomalies, where the anomaly involves departures from a pattern in more than one dimension), entity behavior detection (including entity detection and anomaly detection), insider threat modeling (including by supervised machine learning), and tracking access to sensitive data (in some cases aided by natural language processing that surfaces sensitive topics). The machine learning engine 6510 can be used to augment the analytic capabilities of the platform 6500, such as to detect anomalies, such as in user behavior, cloud-to-cloud activity, machine access to systems, and the like. One example is the detection of anomalies in geographical access. Today, some systems allow an enterprise to pre-define the countries from which a user is expected to have access, and they may use a facility like a geo-fence around the locations of the company to trigger alerts or block access. As an alternative, the 6500 may use the data collected from various platforms to profile an organization (and its users) based on behavior over a time period (such as a few months), to define a baseline profile for that organization and its users, using machine learning. From that point on, the machine learning capability of the platform 6500 can observe changes in the pattern of usage from the baseline, such as indicating more frequent access from a different country, or in the same country, but in a different part of the country. The platform 6500 can do the same kind of profiling and comparison based on machine learning in the engine 6510 of the patterns of usage for particular devices, such as based on knowing that a connection is from a particular device, or a kind of device; that is, the platform 6500 can do the same kind of baseline profiling on the devices and can use machine learning to recognize and define what is outside the norm. The output is not necessarily binary, or rule-based. The norm might involve a cluster of events (such as that mobile access is usually from home and laptop access is normally from the office), but a machine learning facility can provide an indicator of departure from a pattern, whatever it is.

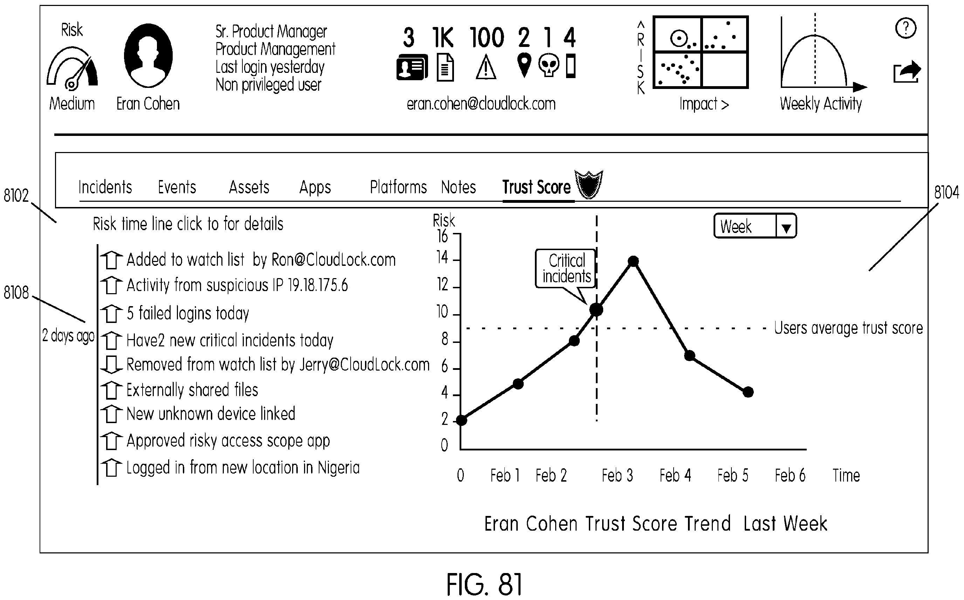

Referring to Fig. 81, a user or group trust score or risk score may be calculated based on the various capabilities described above. The trust or risk score allows for simplified reporting, alerting, poloicy creation and API integrations with various external systems for additional enhanced controls. There is a significant benefit in integrating this adaptive, dynamic and intelligent user or group risk score with systems that do not have ability to analyze and rate user activity, such as IDaaS systems. This allows an IDaaS or other such system to augment access controls based on the risk score, such as to step up authentication when the risk score exceeds a threshold. The trust or risk score can be presented in a dashboard 8102 or other visual element, such as showing trends in the score over a time period 8104 as well as a risk time line 8108 that shows events and activities that impact, or that are derived from, the risk or trust score, such as the user being added to a watch list, activity with respect to suspicious IP addresses, failed login activity, access to risky applications, logins from unusual locations, etc. The dashboard 8102 can provide an effective overview of the riskiness of a user over time, as well as the activities and events that contribute to riskiness. It can be used for supervision of the user, education of the user, and other remediation activities. The trust or risk score is also available as part of the developer API offered by the CSF 100

A set of APIs 6522 may provide interfaces with a cyber response system 6524, which may include an incident management system 6532, a security operations system 6530 and a policy engine 6528. The platform 6500 may have an exchange facility 6534, such as for exchanging threat information with other systems, including services of the CSF 100 and external systems. The platform 6500 may also take and provide information for enriching threat information, such as with various services of the CSF 100 (such as ones used for providing a risk score for an application, or for a community trust rating), as well as with external systems.

In embodiments, the cyber intelligence platform 6500 can collect data, such as event data, across various platforms, such as Google™, SalesForce™, Octa™, and other systems. That data can be filtered, modeled, and used to create a native event format for the platform 6500. There are formats for various events (or categories) and the events can be mapped to the categories. The platform 6500 can look across cloud applications of various types and see all events across the cloud platforms of an enterprise or group of enterprises (such as read requests, suspicious user activity, etc.). This allows creation of a uniform model of usage on all of an enterprise's platforms, or even those of more than one enterprise. The platform 6500 also enables visualization and data on common policies.

In embodiments, the cyber intelligence platform 6500 may use a rule-based mapping of events or activities to categories. This may include behavior, such as user activity (e.g., a behavior might be considered risky if a user is downloading more than N files in the last 24 hours, etc.). These types of rules can provide some basic information, but they tend to create a high ratio of noise, as many of the behaviors they detect are benign.

One example of anomaly detection is referred to herein as velocity detection. For example, if a user connects to a SalesForce™ platform in California and then to a Google™ platform in Boston five minutes later, that is an indication of suspicious activity, because the user would have needed to travel at a velocity in excess of available transportation options. This and many other kinds of analysis can be enabled using the platform 6500.

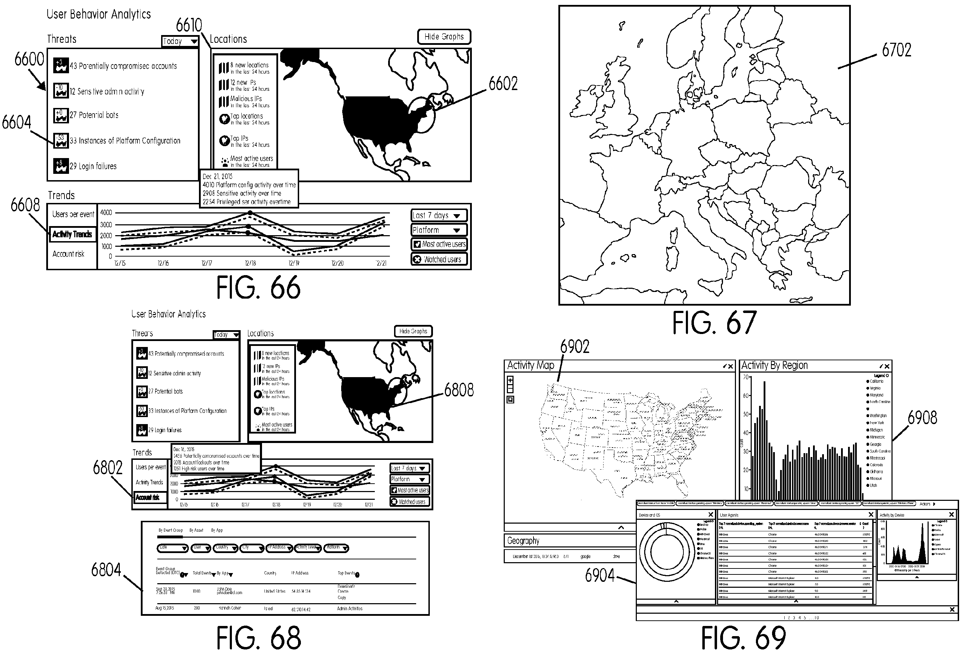

Referring to Figure 66, in embodiments, the platform 6500 can be used to generate an activity map 66300, which can identify that particular applications are accessing enterprise data, and even that some access is by a human using an application, while other access is by a machine-to-machine connection. This can be accomplished by training the machine learning engine 6510 to classify different types of access, such as by feeding it data sets for large numbers of access events across various platforms and feeding it confirmed classifications for events that have known classifications (such as ones that have been done manually, such as classifying one access type as by a human and another as by a machine). To enable machine learning, various attributes may be associated with collected event data for access events, so that the machine learning system can operate on the different attributes to learn what combinations of attributes tend to correspond to a given classification. Events and pre-determined classifications are used to seed the learning model, which iterates on additional data to attempt to classify additional events. These classification events are validate or not, such as by human feedback, and the learning model iterates (such as by adjusting weights given to different attributes), until it becomes sufficiently effective to provide an automated classification of the access type.

In embodiments, machine learning may employ unsupervised learning methods that don't require human feedback, such as clustering algorithms and the like. In embodiments, an anomaly detection engine 6550 of the machine learning engine 6510 may use multiple unsupervised learning clustering algorithms (e.g., mean shift algorithms, k-mean algorithms, and others) to detect data clusters. The anomaly detection engine 6550 may then use a scoring system for outlier ranking based on average distances that are far from the norm. Because of the large number of potential attributes involved and the challenges that are involved in locating anomalies in data having large numbers of dimensions, attributes may be classified to set of features that are mapped to specific cyber security use cases (i.e., the features that are more likely to present anomalies in the data based on the particular use case involved). Each set of features may be computed independently from the others to increase the accuracy of the anomaly detection. The anomaly detection engine 6550 may use a system capable of handling large numbers of events (e.g., 30 million or more events per day), such as Apache Spark™, to digest and analyze large amounts of data in near real time.

Examples of anomaly detection use cases include location-based anomaly detection. Analysis may be performed over the most active users of an enterprise. Activities of the users of the enterprise may be clustered into groups, based on the various attributes associated with those activities (including location). Cluster centers may be calculated, so that inliers (activities closest to cluster centers) and outliers (activities farthest from cluster centers) can be identified. In one experimental case, access for a technology company was discovered in two abnormal locations, with large numbers of events, indicating the presence of a cloud malware attack by a third party application.

Another use case for anomaly detection is device-based anomaly detection. For example, the administrative users of a company may be the subject of the analysis. The activities of the defined set of users may be clustered, with inliers and outliers defined by the distance from cluster centers. Outliers may indicate unusual usage patterns for those users. In a test situation, an administrative user was discovered to be using an unauthorized device. Such a situation can result in remediation, such as by user notification and education, discipline, or the like.

In embodiments, the attributes provided to the machine learning engine 6510 may come from various items collected across the services of the CSF 100, for a single enterprise or a set of enterprises, so that experiences of one enterprise (such as that a particular set of events led to a threat) can aid classification for purposes of the entire community of enterprises. The machine learning system can benefit from data collected from APIs for particular applications, from an enterprise network (such as collected in the AFW 300), from cloud-to-cloud communications, and the like.

To validate models used in the cyber intelligence platform 6500, one may use data about what an application is, such as collected in the application index 312, because the AFW 300 discovers third party applications and has considerable information about their identifiers. The process of validating each of the models used by the cyber intelligence platform 6500 can leverage the CSF 100, including the AFW 300 and all of the other platforms and components that connect to it. Among capabilities, the machine learning engine 6510 of the platform 6500 can learn to classify not only events, but other things, such as types of users, types of organizations and the like, reflecting various attributes that are collected through the CSF 100, including the AFW 300. The machine learning engine will also be able to classify and identify the sensitive data of a user, a group and/or an organization.

The cyber intelligence platform 6500 may also use machine learning to help identify inside threats. The platform 6500 has information around users, such as collected in connection with the UBA platform 500 described elsewhere in this disclosure. This includes information about dormant users, users who may be undertaking activities that suggest an upcoming departure from the organization, negligent behaviors, and the like. Based on behavioral attributes, a machine learning system can figure out whether a key employee is going to leave soon (such as based on feeding attributes into a model that learns from past data with respect to users who have actually departed an enterprise). For example, attributes might indicate that a user is plugging into an HR feed, which can provide triggers or information, such as that an employee was placed on a performance improvement plan, and those attributes might be used by a machine learning model to contribute to a conclusion (which might be based on multiple, even many, attributes) that there is an increased chance the user will leave the organization soon (and in turn an increased risk of data exfiltration).

In some situations anomalies may be detected by looking at the source or the destination of an access event (e.g., in the network), such as looking at the address of a router. In embodiments, the cyber intelligence platform 6500 may use machine learning and natural language processing (NLP) to programmatically learn what topics are sensitive topics for an organization. For example, as its services are used by an enterprise, the CSF 100 may have awareness of various policies of an enterprise, as those policies are being applied in connection with various services of the CSF 100, both on its network and in various cloud platforms, including PaaS/IaaS platforms, and as the policies are applied to various SaaS and on-premises applications in the course of the use of the CSF 100. The policies, and the language contained in them, can be used, including via NLP on the policies, to identify topics that are likely to be sensitive to the organization, and the cyber intelligence platform 6500 can then be configured with listeners that track user and application behavior around any documents, files, objects, or the like that contain information on those topics. As the platform 6500 tracks access to documents by users and applications, such as through the various services of the CSF 100, the platform 6500 can define, such as by the machine learning engine 6510, a baseline level or pattern of access to particular documents. If the platform 6500 sees (such as through machine learning against a baseline of activity) any spiking of behavior around documents (such as around intellectual property, for example), the platform 6500 can trigger an alert or other response action, such as by the cyber response system 6524. Such target-specific focus for behavior analysis can be an effective method of malicious behavior detection that in some cases can be superior to detection of such behavior at the source (i.e., across all use activity, rather than target-specific activity).

In embodiments, the CSF 100 can be used, such as based on analysis by the 6500, to undertake intelligent "honeypotting," such as by creating an environment where a malicious user (such as identified by patterns determined in the platform 6500), can be drawn, and where the user can be induced to undertake activities that, while not threatening the real data or infrastructure of an enterprise, can be used to help identify the malicious user, such as by identifying the applications, infrastructure, devices, or other resources used by the malicious user.

The machine learning system 6510 of the platform 6500 can be used, among other things, to determine behaviors across a set of different enterprises (e.g., similar attacks made on multiple enterprises), such as by using attributes as described above in a model that takes data from past events (e.g., attacks) and learns over time with feedback about whether events that it has characterized as associated with a type of event are in fact confirmed by the various enterprises.

In embodiments, the cyber intelligence platform 6500 may be used to provide a wide range of analytic capabilities, which may be used to analyze data collected by the CSF 100 and its components, such as the AFW 300 and through UBA. In each case, these abilities may be augmented with machine learning.

Analytic capabilities of the platform 6500 may include, among other things, the following: profiling and detection of outliers; detection of frequency anomalies, including by type of usage; geo-location profiling and detection of anomalies related to location; device usage; user behavior analysis, including inside threat and dormant user analysis, as well as excessive usage and data extraction anomalies; entity behavioral use cases (e.g. binary classification of usage as human or machine, correlation of entity behaviors, and excessive usage or data extraction by machines); entity access patterns (such as behavior of particular endpoints), including classifying user and entity access, correlation of specific applications where applicable, and providing alerts on anomalies in entity usage; and classification and protection of sensitive information (such as using NLP to surface sensitive topics, tracking access and actions around sensitive documents, and surfacing "out of normal" access to sensitive content.

In embodiments, the cyber intelligence platform 6500 can be used to aggregate data from multiple enterprises. In turn, this can allow one to quantify risk, and to show what users (often a small percentage of users) are creating most of the risk. For example, in many enterprises one percent of the user base generates most of the risk, has most of the files, does most of the public sharing of files, has unusual numbers of shadow IT apps, and undertakes the most risky behavior. A cyber intelligence analysis can create, and use, a risk score for these users, based on information about applications and about usage patterns.

The cyber intelligence platform 6500 can use data from the CSF 100 and from other sources, so that the data can be presented to an analyst. Various machine learning tools may be provided in the machine learning engine 6510 (which may be accessible by data scientists and other cyber professionals in the workbench 6512) are provided to help an analyst analyze the data. These tools allow analyst interaction with data obtained across enterprises and provide the ability to use that data to support and improve further machine learning, as well as to provide validation, via statistical, data science techniques, of insights derived by the analyst. For example, machine-recognized threats can be confirmed with an enterprise, and upon such confirmation can validate a model used in machine learning.

For example, the platform 6500 can run clustering algorithms and come up with potential threats as outputs (e.g., users accessing from locations in the Middle East; a program running in a privileged admin account; etc.). The cyber intelligence platform 6500 can flag these, and an analyst can interact with the enterprise (and then the analyst can return to the cyber intelligence platform 6500 to validate or refine a model in it).

As with other capabilities of the CSF 100, the cyber intelligence platform 6500 and its components and services can be accessed by APIs, so that it can be integrated with other platforms. As a result, advanced capabilities, such as for behavior detection and the like, can be accessed by the CSF 100 and third party platforms. For example, an enterprise can use a velocity detection API to the velocity detection capability of the logic engine 6514, as described elsewhere herein, to do checking on data that the enterprise is collecting for another purpose, if the enterprise doesn't have velocity checking capability in its own platform. The CSF 100 and cyber intelligence platform 6500 can supply APIs to fill gaps in whatever system an enterprise is using (such as for fraud detection for an on premise application), including the APIs 6522 to one or more response platforms.

Various algorithms can be exposed via APIs as well, to allow data scientists or security operations people to undertake analysis on a wide range of events and patterns that are collected by the CSF 100 and the cyber intelligence platform 6500.

The cyber intelligence platform 6500 can be used for remediation as well as detection, such as through the APIs 6522. It can provide manual and automatic actions, such as suspending accounts, resetting passwords, and integrating and orchestrating response actions across different situations. For example, if an account compromise is detected for a user, the CSF 100, including the 6500, can perform a stepped-up level of authentication, such as requiring dual authentication, in another platform. Thus, dynamic stepped-up authentication may be provided across different platforms or applications, such as based on user behavior analysis or other threat detection.

Figures 66 through 72 provide examples of types of output that can be provided using the cyber intelligence platform 6500.

Fig. 66 shows a dashboard 6600 that may include an interactive map 66302, indicating, such as with graphical elements, like circles, areas in which various threats relevant to cyber security have occurred during a defined time period. A menu element 6610 may indicate types of events, with a corresponding number, for the time period, such as the number of new locations in which activities have taken place, the number of new IP addresses that have been accessed by users of an enterprise, the number of malicious IP addresses that have been accessed, the most active locations, the most active IP addresses, the most active users, and the like. Threats may be classified and information about them may be presented in a threats menu 6604, such as showing the number of potentially uncompromised accounts, the number of sensitive administrative activities that have taken place, the number of potential instances of bot activity that have taken place, the number of instances of platform configuration actions that have taken place, the number of login failures, and the like. A trends menu 6608 may show trends in the various threat activities over a selected time period, such as a week.

Fig. 67 shows an embodiment of a dashboard, in the form of a heat map 6702. The dashboard may show user data over a given time period, with visual elements (such as circles), that by size and color indicate levels of usage from geographic locations. The map may be interactive, such as allowing users to zoom in and out, to see the platform for which data was collected, to hover over elements and see statistical information, to drill down on particular data, and to select options, such as to show activities and/or to filter information, such as based on a selected area.

Fig. 68 shows an embodiment of a user interface showing various user behavior threat analytics. The visualization may be interactive, allowing a user to highlight portions of a map or graph 6808, to select time periods for analysis, to select data for particular platforms, to filter and sort data, to use multiple filters, and the like. The user may save a report, schedule a report, save a view, export data, send a report by mail, and the like. The user may view different kinds of threats, such as by platform, by event category, by event, by user, by location and by date. The user may select multiple events or objects. The user may see data regarding risk associated with particular accounts 6802, such as the number of potentially compromised accounts, the number of accounts locked out, and the number of high risk users of such accounts. Information about high risk users 6804 may be presented on a per-user basis.

Fig. 69 shows an embodiment of a dashboard where a user can see activity by region, such as relating to users, accounts, threats, or the like, in alternative formats, such as in a geographic map format 6902, a histogram format 6908, and a graph format 6904.

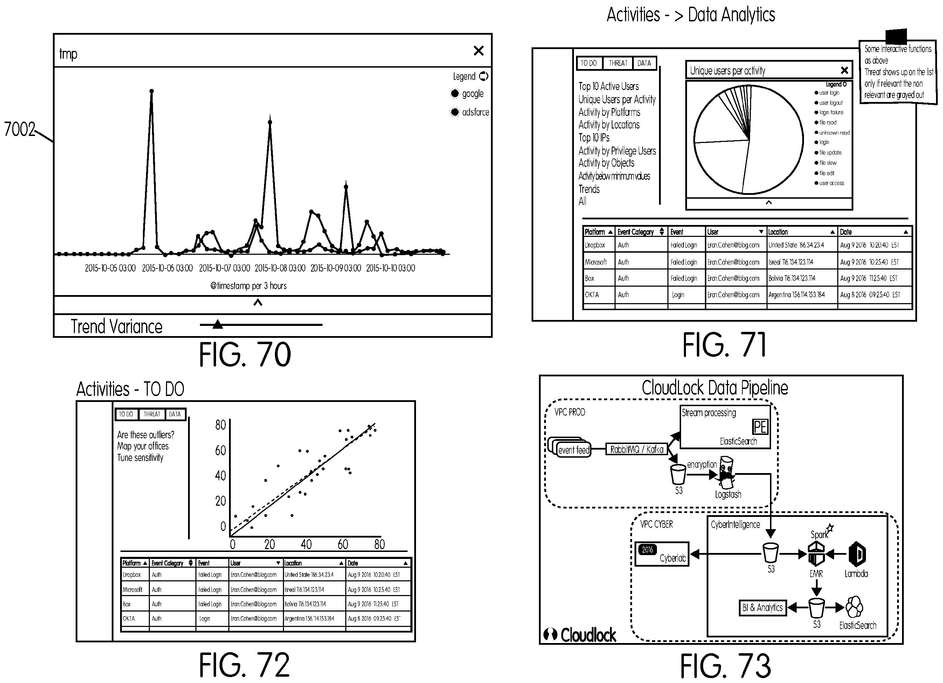

Figure 70 shows an embodiment of a user interface in which a user can interact with a usage histogram 7002 to see what activity is happening in different platforms or applications. The user may choose a time period, a platform/application, or the like. The user may hover to see statistical information and click to see details on usage activities.

Fig. 71 shows an embodiment of a dashboard for data analytics, where a user can see data usage by platform, by event category, by user, by location, and by time period. The dashboard may be interactive, allowing a user to select and filter by any of the above attributes. The same interactive functions as noted above may be provided, such as hovering to see statistical data and drilling down on details.

Fig. 72 shows a dashboard by which a user can identify actions to do with respect to events that have been identified as potential threats, such as confirming whether particular events are anomalous, mapping offices of an enterprise (such as for enabling geo-location-based rules and analyses) and tuning the sensitivity of one or more rules in the platform 6500, to reduce unwanted noise or elevate areas that the user wishes to be considered more important.

Fig. 73 shows a data acquisition pipeline for the cyber intelligence platform 6500. Event feeds from various platforms may be fed into a collection system like Rabbit MQ™ or Kafka™ and fed into a stream processing facility, such as Elasticsearch™, as well as stored in a storage resource, such as S3™ and subsequently encrypted and stored in a facility like Logstash™. The events can be passed to the cyber intelligence system 6500, and stored in another storage resource (e.g., S3™) for access by an EMR system like Spark™, which may allow access by another system like Lambda™ (a platform service in AWS that provides access to information from an EMR system, which would be another similar service in connection with other platforms), which in turn may provide outputs to another repository, which may be accessed by business intelligence and analytics applications and may provide inputs to an Elasticsearch™ facility.

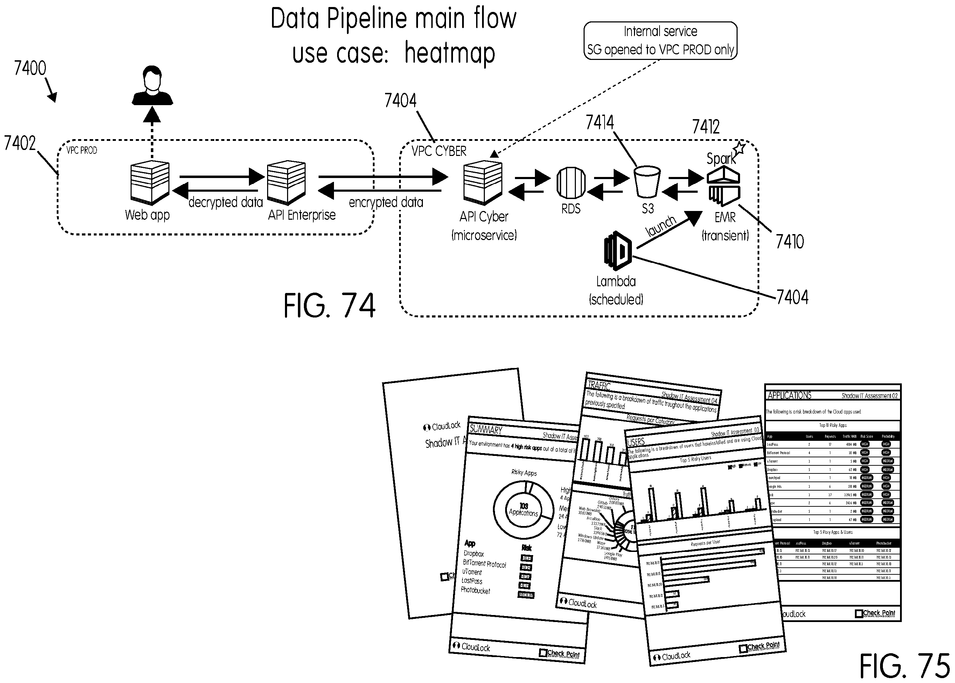

Fig. 74 illustrates an embodiment of a data acquisition pipeline for use in creating a heat map form of visualization. One embodiment of such pipeline 7400 is described as follows. As the VPC production system 7402 processes data and stores it in a storage resource like S3, the VPC production system 7402 also optionally encrypts sensitive data and stores is in one or more other S3 buckets for further processing by the cyber intelligence system VPC cyber 7404. A scheduled chronological Lambda trigger CXI-1108 periodically starts an EMR batch job 7410. The EMR batch job 7410 executes a Spark™ job 7412 that then further filters, normalizes, augments, and/or enriches the data set and partitions it for further use. The data is then stored in S3 buckets 7414 in a form ready to be consumed by various subsystems, such as using a cyber API as described in this disclosure.

Figures 75 through 80 show the integration of information obtained through the platform 6500, and the CSF 100 (including through the AFW platform 300, with various third party security ecosystem platforms.

Fig. 75 shows integration with a third party data security platform, such as the Checkpoint™ platform, where information obtained using the cyber intelligence platform 6500 (including UBA information) and/or the AFW platform AFW-200, such as information about traffic, users, and applications, may be integrated into reports that are generated by the third party data security platform.

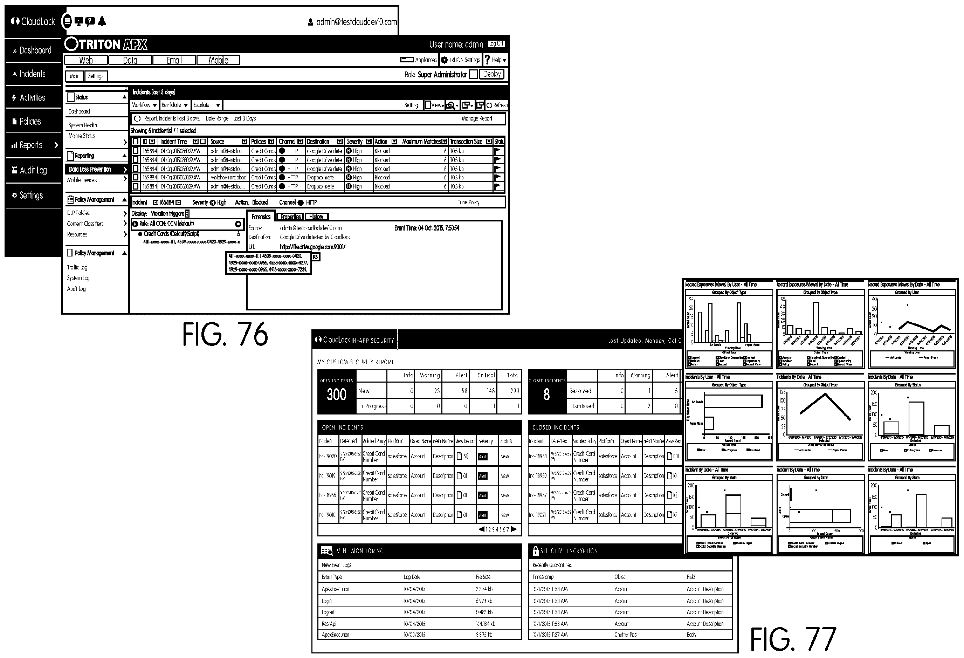

Fig. 76 shows integration with a third party DLP platform, such as the Websense™ platform, where incidents that are relevant to data loss prevention can be provided to the DLP platform, such as via APIs, from the CSF 100, the cyber intelligence platform 6500, the AFW platform AFW-200, or the like. In this case, the platform 6500 enables a response action to send a file, document, object, or the like for advanced inspection by the DLP platform. Based on the result at the DLP platform, the response action flow can continue at the platform 6500.

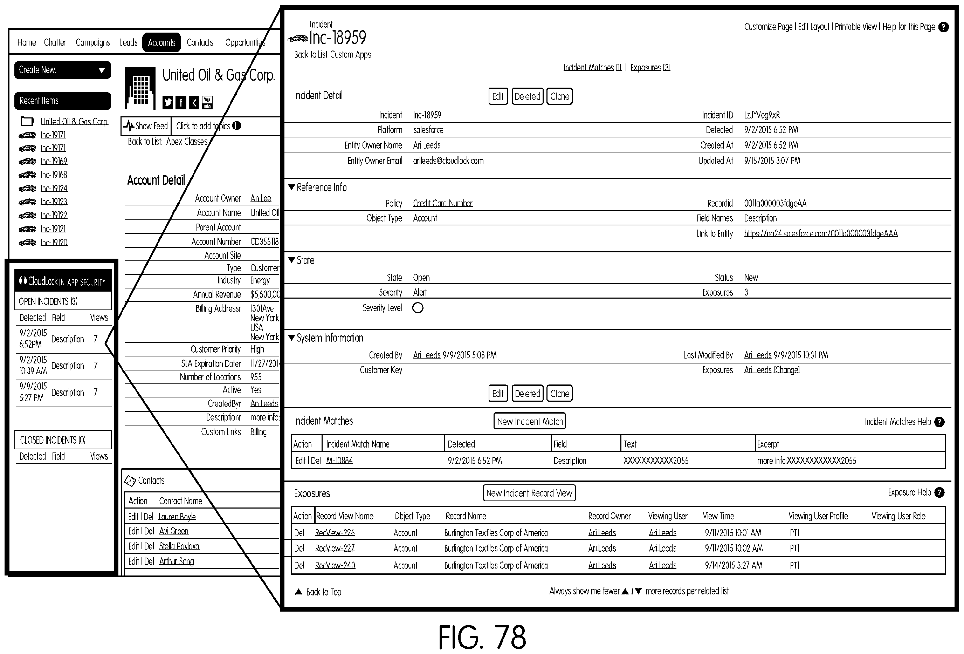

Figures 77 and 78 show integration with a cloud platform, such as the Salesforce™ platform, where information from the CSF 100, the cyber intelligence platform 6500, the AFW platform AFW-200, or the like, can be provided within an application, such as a security application, that is operating on the third party cloud platform. Fig. 87 shows incident detail with respect to a particular security incident, which may include a security risk level, such as informed by the the CSF 100, the cyber intelligence platform 6500, the AFW platform AFW-200, or the like.

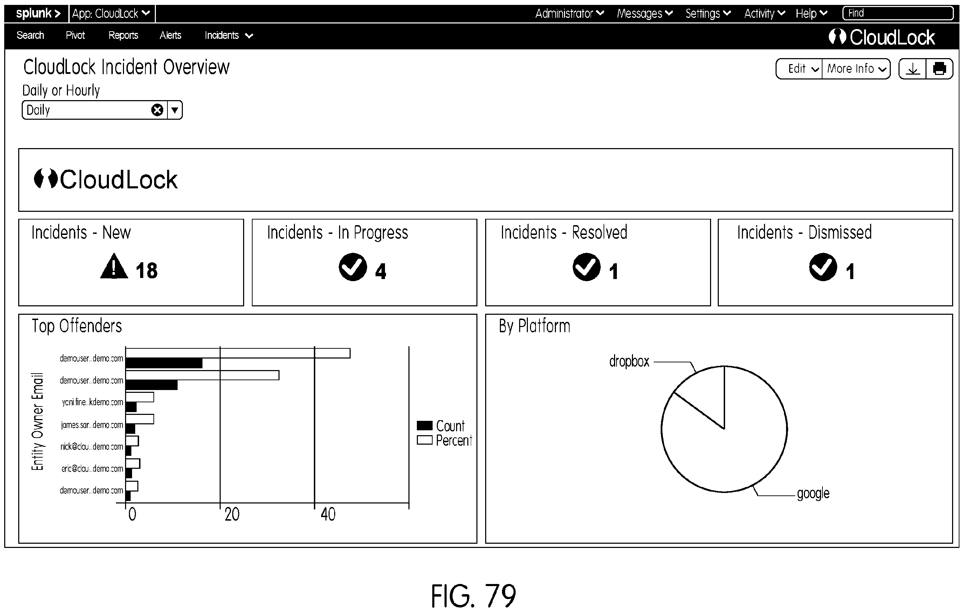

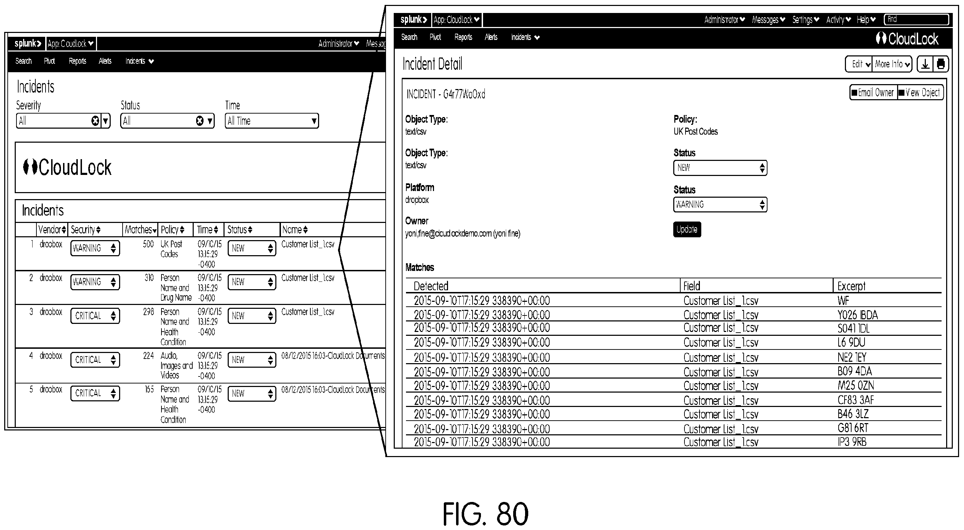

Figures 79 and 80 show integration with a security incident event management (SIEM) system like Splunk™, where information from the CSF 100, the cyber intelligence platform 6500, the AFW platform AFW-200, or the like, can be displayed in an incident reporting dashboard of the SIEM platform. Fig. 80 shows the ability to obtain detailed information about an incident, such as detail from the events collected by any of the above systems.

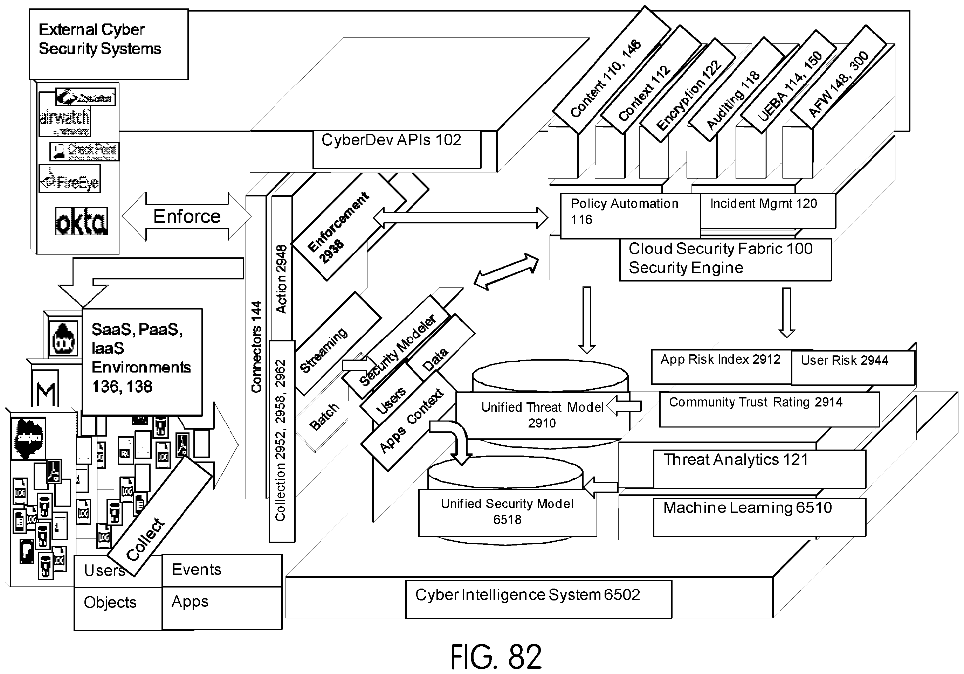

Fig. 82 shows architectural components for the integration of the cloud security fabric 100 with a cyber intelligence system 6502 and other components for addressing various cyber security use cases as described throughout this disclosure. The cloud security fabric 100 or security engine may include various services as described in connection with Fig. 1 and throughout this disclosure, including policy automation 116 and incident management 120 services that can initiate actions 2948, including enforcement 2938, such as through connectors 144 with external cyber security systems that undertake actions in response to events delivered from the CSF 100. The fabric may integrate with and/or interact with the cyber intelligence system 6502, as described in connection with Fig. 65 and throughout this disclosure, such as for populating and managing a unified threat model 2910 and unified security model 6518, in accordance with a unified AFW 300, as described above, where information about users of an enterprise, the objects and applications they use, and the events that involve the users, objects and applications, across various SaaS applications, cloud environments, and PaaS and IaaS environments 136, 138 are collected by various collectors 2952, 2958, 2962 for use in the unified models 2910, 6518. The cyber intelligence platform 6502 may include various capabilities noted above, such as threat analytics 121, machine learning 6510 capabilities, including relating to user and application behavior analysis 114, 150, and it may produce various indicators of risk for use in the platform 6502 and by external systems, such as a community trust rating 2914, an application index 2912 and a user risk rating 2944.

The methods and systems described herein may be deployed on a computing platform which includes, in whole or in part, one or more machines that execute computer software, program codes, and/or instructions on a processor. The processor may be part of a server, client, network infrastructure, mobile computing platform, stationary computing platform, or other computing platform. A processor may be any kind of computational or processing device capable of executing program instructions, codes, binary instructions and the like. The processor may be or include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, Internet server, intranet server and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, Internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements.

The methods, program codes, and instructions described herein and elsewhere may be implemented on a cellular network having multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, EVDO, mesh, or other networks types.

The methods, programs codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g. USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or or intangible items from one state to another. The methods and systems described herein may also transform data representing physical and/or intangible items from one state to another.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it may be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It may further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, each method described above and combinations thereof may be embodied in computer executable code that, when executing on one or more computing devices, performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

The method steps of the implementations described herein are intended to include any suitable method of causing such method steps to be performed, consistent with the patentability of the following claims, unless a different meaning is expressly provided or otherwise clear from the context. So for example performing the step of X includes any suitable method for causing another party such as a remote user, a remote processing resource (e.g., a server or cloud computer) or a machine to perform the step of X. Similarly, performing steps X, Y and Z may include any method of directing or controlling any combination of such other individuals or resources to perform steps X, Y and Z to obtain the benefit of such steps. Thus method steps of the implementations described herein are intended to include any suitable method of causing one or more other parties or entities to perform the steps, consistent with the patentability of the following claims, unless a different meaning is expressly provided or otherwise clear from the context. Such parties or entities need not be under the direction or control of any other party or entity, and need not be located within a particular jurisdiction.

While the methods and systems described herein have been disclosed in connection with certain preferred embodiments shown and described in detail, various modifications and improvements thereon may become readily apparent to those skilled in the art. Accordingly, the spirit and scope of the methods and systems described herein is not to be limited by the foregoing examples, but is to be understood in the broadest sense allowable by law.

## Claims

1. A system for providing enhanced security, for an enterprise computing environment comprising a plurality of entities, the entities comprising users of the enterprise computing environment, applications used by users of the enterprise computing environment, and data objects of the enterprise computing environment and events occurring with respect to the users, the applications and the data objects, the system comprising:
a computing platform comprising a plurality of adapters for interfacing with one or more cloud services to collect data regarding interactions of said entities of said enterprise computing environment with each of said cloud services or interactions involving said entities which occur between cloud services wherein said computing platform performs the functions of identifying cloud services involving interactions of said entities; identifying activities of said entities with said cloud services; and identifying activities involving said entities which occur between said cloud services;
one or more databases in which said collected data is stored;
one or more modules, executing on said computing platform, said modules providing services to said computing environment regarding interactions of said entities with said cloud services or interactions involving said entities which occur between cloud services, wherein the one or more modules include a user and entity behavior analysis module configured for detecting behavioral patterns with respect to said entity interactions including analyzing said activities to determine whether said activities pose a threat to said enterprise computing environment and, in response to determining that the one or more activities pose a threat to the enterprise computing environment, deploying at least one security module to address the threat;
one or more interfaces providing access to said collected data and said services; and
a unified application firewall platform for collecting information about cloud entities, enterprise network entities, and security system entities and storing the information in a unified security model.

2. The system of claim 1 wherein said one or more of said modules further include at least one of:
a selective encryption module configured to encrypt at least a selected portion of data when said data is transferred to at least one of said cloud services;
a policy engine module configured to specify and enforce a policy relating to at least one of said entities with respect to at least one of said cloud services;
an application firewall module configured to collect and unify said collected data from a plurality of cloud services;
and
a content classification as a service module configured to enable automatic classification of content of the enterprise that is involved in said entity interactions.

3. The system of claim 1 wherein said one or more interfaces enable connections between said computing platform and a development environment.

4. The system of claim 1 wherein said one or more interfaces enable an exchange of data between at least one of said modules and an enterprise security system.

5. The system of claim 1 wherein said cloud services include at least one of a Software as a Service, SaaS, application, a cloud platform, an infrastructure as a service environment and a platform as a service environment.

6. The system of claim 4 wherein said one or more interfaces facilitate collection of information about said entities from at least one of said cloud services.

7. The system of claim 1 wherein at least one of said modules is at least one of a content analysis module and a content classification module, or wherein at least one of said modules is an application firewall module, or wherein at least one of said modules is at least one of a security analytics module and a threat intelligence module, or wherein at least one of said modules is an encryption management module, or wherein at least one of said modules is at least one of an incident management module and a policy engine, or wherein at least one of said modules is a context analysis module, or wherein at least one of said modules is an auditing module, or wherein at least one of said modules is at least one of a user behavior monitoring module and a user behavior analytics module, or wherein at least one of said modules is at least one of a configuration security module and a configuration management module.

8. The system of claim 1 wherein said unified security model includes a community trust rating for an application that is derived at least in part from information contributed by users in said computing environment about the application.

9. The system of claim 1 wherein information in said unified security model is used to produce at least one of an application index, an application risk rating, and a user risk rating.

10. The system of claim 1 further comprising a cyber intelligence system for operating on the data in the unified security model, said cyber intelligence system comprising a machine learning system for detecting anomalies in events relating to at least one of a user and an application.

## Patentansprüche

1. System zur Bereitstellung verbesserter Sicherheit für eine Unternehmenscomputerumgebung, die eine Vielzahl von Entitäten umfasst, wobei die Entitäten Folgendes umfassen: Benutzer der Unternehmenscomputerumgebung, Anwendungen, die von Benutzern der Unternehmenscomputerumgebung verwendet werden, und Datenobjekte der Unternehmenscomputerumgebung und Ereignisse, die in Bezug auf die Benutzer, die Anwendungen und die Datenobjekte auftreten, wobei das System Folgendes umfasst:
eine Computerplattform, die eine Vielzahl von Adaptern für die Kommunikation mit einem oder mehreren Cloud-Diensten umfasst, um Daten zu Interaktionen der genannten Entitäten der genannten Unternehmenscomputerumgebung mit jedem der genannten Cloud-Dienste oder zu Interaktionen mit den genannten Entitäten, die zwischen Cloud-Diensten auftreten, zu sammeln, wobei die genannte Computerplattform folgende Funktionen ausführt: Identifizieren von Cloud-Diensten, die Interaktionen der genannten Entitäten beinhalten; Identifizieren der Aktivitäten der genannten Entitäten mit den genannten Cloud-Diensten; und Identifizieren von Aktivitäten, an denen die genannten Entitäten beteiligt sind und die zwischen den genannten Cloud-Diensten auftreten;
eine oder mehrere Datenbanken, in denen die genannten gesammelten Daten gespeichert sind;
ein oder mehrere Module, die auf der genannten Computerplattform ausgeführt werden, wobei die genannten Module der genannten Computerumgebung Dienste in Bezug auf Interaktionen der genannten Entitäten mit den genannten Cloud-Diensten oder Interaktionen mit den genannten Entitäten, die zwischen Cloud-Diensten auftreten, bereitstellen; wobei das eine oder die mehreren Module ein Modul zur Analyse des Benutzer- und Entitätsverhaltens umfassen, das zum Erkennen von Verhaltensmustern in Bezug auf die genannten Entitätsinteraktionen konfiguriert ist, einschließlich der Analyse der genannten Aktivitäten, um festzustellen, ob die genannten Aktivitäten eine Bedrohung für die genannte Unternehmenscomputerumgebung darstellen, und als Reaktion auf die Feststellung, dass eine oder mehrere Aktivitäten eine Bedrohung für die Computerumgebung des Unternehmens darstellen, Bereitstellung mindestens eines Sicherheitsmoduls zur Bekämpfung der Bedrohung;
eine oder mehrere Schnittstellen, die den Zugriff auf die genannten gesammelten Daten und die genannten Dienste ermöglichen; und
eine einheitliche Anwendungsfirewall-Plattform zum Sammeln von Informationen über Cloud-Entitäten, Unternehmensnetzwerkentitäten und Sicherheitssystementitäten sowie zum Speichern der Informationen in einem einheitlichen Sicherheitsmodell.

2. System nach Anspruch 1, wobei das genannte eine oder mehrere der genannten Module ferner mindestens eines der Folgenden umfassen:
ein selektives Verschlüsselungsmodul, das dafür konfiguriert ist, mindestens einen ausgewählten Teil der Daten zu verschlüsseln, wenn die genannten Daten an mindestens einen der genannten Cloud-Dienste übertragen werden;
ein Richtlinienmaschinenmodul, das dafür konfiguriert ist, eine Richtlinie anzugeben und durchzusetzen, die sich auf mindestens eine der genannten Entitäten in Bezug auf mindestens einen der genannten Cloud-Dienste bezieht;
ein Anwendungsfirewall-Modul, das dafür konfiguriert ist, die genannten gesammelten Daten aus einer Vielzahl von Cloud-Diensten zu sammeln und zu vereinheitlichen;
und
eine Inhaltsklassifizierung als Servicemodul, die dafür konfiguriert ist, die automatische Klassifizierung von Inhalten des Unternehmens zu ermöglichen, das an den Interaktionen mit genannten Entitäten beteiligt ist.

3. System nach Anspruch 1, wobei die genannte eine oder mehrere Schnittstellen Verbindungen zwischen der genannten Computerplattform und einer Entwicklungsumgebung ermöglichen.

4. System nach Anspruch 1, wobei die genannte eine oder mehrere Schnittstellen einen Datenaustausch zwischen mindestens einem der genannten Module und einem Unternehmenssicherheitssystem ermöglichen.

5. System nach Anspruch 1, wobei die genannten Cloud-Dienste eine Software-als-Service- (Software as a Service, SaaS) Anwendung, eine Cloud-Plattform, eine Infrastruktur-als-Service-Umgebung und/oder eine Plattformals-Service-Umgebung umfassen.

6. System nach Anspruch 4, wobei die genannte eine oder mehrere Schnittstellen das Sammeln von Informationen über die genannten Entitäten von mindestens einem der genannten Cloud-Dienste ermöglichen.

7. System nach Anspruch 1, wobei mindestens eines der genannten Module ein Inhaltsanalysemodul und/oder ein Inhaltsklassifizierungsmodul ist, oder wobei mindestens eines der genannten Module ein Anwendungsfirewall-Modul ist, oder wobei mindestens eines der genannten Module ein Sicherheitsanalysemodul und/oder ein Bedrohungsinformationsmodul ist, oder wobei mindestens eines der genannten Module ein Verschlüsselungsverwaltungsmodul ist, oder wobei mindestens eines der genannten Module ein Vorfallsmanagementmodul und eine Richtlinienmaschine ist, oder wobei mindestens eines der genannten Module ein Kontextanalysemodul ist, oder wobei mindestens eines der genannten Module ein Überwachungsmodul ist, oder wobei mindestens eines der genannten Module ein Modul zur Überwachung des Benutzerverhaltens und/oder ein Modul zur Analyse des Benutzerverhaltens ist, oder wobei mindestens eines der genannten Module ein Konfigurationssicherheitsmodul und/oder ein Konfigurationsverwaltungsmodul ist.

8. System nach Anspruch 1, wobei das genannte einheitliche Sicherheitsmodell eine Gemeinschaftsvertrauensbewertung für eine Anwendung umfasst, die zumindest teilweise von Informationen abgeleitet ist, die Benutzer in der genannten Computerumgebung über die Anwendung beigesteuert haben.

9. System nach Anspruch 1, wobei Informationen in dem genannten einheitlichen Sicherheitsmodell verwendet werden, um einen Anwendungsindex, eine Anwendungsrisikobewertung und/oder eine Benutzerrisikobewertung zu erzeugen.

10. System nach Anspruch 1, das ferner ein Cyber-Intelligence-System zum Bearbeiten der Daten in dem einheitlichen Sicherheitsmodell umfasst, wobei das genannte Cyber-Intelligence-System ein maschinelles Lernsystem zum Erkennen von Anomalien in Ereignissen umfasst, die sich auf mindestens einen Benutzer und eine Anwendung beziehen.

## Revendications

1. Système de sécurité rehaussée, pour un environnement informatique d'entreprise comprenant une pluralité d'entités, les entités comprenant des utilisateurs de l'environnement informatique d'entreprise, des applications utilisées par des utilisateurs de l'environnement informatique d'entreprise, et des objets de données de l'environnement informatique d'entreprise et des événements concernant les utilisateurs, les applications et les objets de données, le système comprenant :
une plate-forme informatique comprenant une pluralité d'adaptateurs destinée à l'interfaçage avec un ou plusieurs services nuagiques pour collecter des données concernant des interactions desdites entités dudit environnement informatique d'entreprise avec chacun desdits services nuagiques ou des interactions impliquant lesdites entités qui se produisent entre des services nuagiques, ladite plate-forme informatique réalisant les fonctions d'identification de services nuagiques impliquant des interactions desdites entités ; l'identification d'activités desdites entités avec lesdits services nuagiques ; et l'identification d'activités impliquant lesdites entités qui se produisent entre lesdits services nuagiques ;
une ou plusieurs bases de données dans lesquelles sont stockées lesdites données collectées ;
un ou plusieurs modules, exécutés sur ladite plate-forme informatique, lesdits modules fournissant des services audit environnement informatique concernant des interactions desdites entités avec lesdits services nuagiques ou des interactions impliquant lesdites entités qui se produisent entre des services nuagiques, les un ou plusieurs modules comportant un module d'analyse de comportement d'utilisateur et d'entités pour détecter des tendances comportementales relativement auxdites interactions d'entités comportant l'analyse desdites activités pour déterminer que lesdites activités posent ou non une menace pour ledit environnement informatique d'entreprise et, en réponse à la détermination que les une ou plusieurs activités posent une menace pour l'environnement informatique d'entreprise, le déploiement d'au moins un module de sécurité pour traiter la menace ;
une ou plusieurs interfaces fournissant l'accès auxdites données collectées et auxdits services ; et
une plate-forme de pare-feu d'application unifié pour collecter des informations relatives à des entités nuagiques, des entités de réseau d'entreprise, des entités de système de sécurité et stocker les informations dans un modèle de sécurité unifié.

2. Système selon la revendication 1 dans lequel lesdits un ou plusieurs desdits modules comportent en outre au moins un des modules suivants :
un module de cryptage sélectif configuré pour crypter au moins une partie sélectionnée de données quand lesdites données sont transférées vers au moins un desdits services nuagiques ;
un module de moteur de règles configuré pour spécifier et appliquer une règle concernant au moins une desdites entités relativement à au moins un desdits services nuagiques ;
un module de pare-feu d'application configuré pour collecter et unifier lesdites données collectées à partir d'une pluralité de services nuagiques ;
et
un module de classification de contenu comme service pour permettre une classification automatique du contenu de l'entreprise qui est impliquée dans lesdites interactions d'entités.

3. Système selon la revendication 1 dans lequel lesdites une ou plusieurs interfaces permettent des connexions entre ladite plate-forme informatique et un environnement de développement.

4. Système selon la revendication 1 dans lequel lesdites une ou plusieurs interfaces permettent un échange de données entre au moins un desdits modules et un système de sécurité d'entreprise.

5. Système selon la revendication 1 dans lequel lesdits services nuagiques comportent au moins un d'une application de logiciel comme service, SaaS, d'une plate-forme nuagique, d'une infrastructure comme environnement de services et d'une plate-forme comme environnement de services.

6. Système selon la revendication 4 dans lequel lesdites une ou plusieurs interfaces facilitent la collecte d'informations relatives auxdites entités à partir d'au moins un desdits services nuagiques.

7. Système selon la revendication 1 dans lequel au moins un desdits modules est au moins un d'un module d'analyse de contenu et d'un module de classification de contenu, ou dans lequel au moins un desdits modules est un module de pare-feu d'application, ou dans lequel au moins un desdits modules est au moins un d'un module d'analyse de sécurité d'un module de renseignement de menaces, ou dans lequel au moins un desdits modules est un module de gestion de cryptage, ou dans lequel au moins un desdits modules est au moins un d'un module de gestion d'incident et d'un moteur de règles, ou dans lequel au moins un desdits modules est un module d'analyse de contexte, ou dans lequel au moins un desdits modules est un module d'audit, ou dans lequel au moins un desdits modules est au moins un d'un module de surveillance de comportement d'utilisateur et d'un module d'analyse de comportement d'utilisateur, ou dans lequel au moins un desdits modules est au moins un d'un module de sécurité de configuration et d'un module de gestion de configuration.

8. Système selon la revendication 1 dans lequel ledit modèle de sécurité unifié comporte un score de confiance de communauté pour une application qui est dérivée au moins en partie d'informations fournies par des utilisateurs dans ledit environnement informatique concernant l'application.

9. Système selon la revendication 1 dans lequel des informations dans ledit modèle de sécurité unifié sont utilisées pour produire au moins un d'un index d'applications, d'un score de risque d'application, et d'un score de risque d'utilisateur.

10. Système selon la revendication 1 comprenant en outre un système de cyber-renseignement pour traiter les données dans le modèle de sécurité unifié, ledit système de cyber-renseignement comprenant un système d'apprentissage machine pour détecter des anomalies dans des événements concernant au moins un d'un utilisateur et d'une application.
